# EUROPEAN PATENT APPLICATION

(11) **EP 2 698 780 A2**
(43) Date of publication of application: **19.02.2014**
(21) Application number: 13173773.6
(22) Date of filing: 26.06.2013
(51) Int. Cl.: G09C 1/00, H04L 9/00

(54) **Encryption processing device and method**

(30) Priority: 02.08.2012 JP 2012172410
(71) Applicant: FUJITSU LIMITED, Kawasaki-shi, Kanagawa 211-8588 (JP)
(72) Inventor: Itoh, Kouichi, Kanagawa, 211-8588 (JP); Takenaka, Masahiko, Kanagawa, 211-8588 (JP)
(74) Representative: HOFFMANN EITLE

(57) **Abstract**

An encryption processing device includes: a receiving unit configured to receive a first random number; a memory configured to store a first secret key and a first agitation value operated with the first secret key; a key agitation unit configured to generate a second agitation key based on the first secret key and the first agitation value; a generating unit configured to generate a first encryption information based on the second secret key and the first random number; an agitation value updating unit configured to update the first agitation value stored in the memory; and a transmitting unit configured to output the first agitation value and the first encryption information.

## Description

### FIELD

The embodiments discussed herein are related to an encryption processing device and method resistant to probe attacks.

### BACKGROUND

In the field of printer cartridges and medical devices, there are devices with authentication functions for differentiating between genuine products and counterfeit products. A challenge and response method is used as the authentication protocol. Regarding authentication methods using an authentication chip, methods using shared key encryption, which has a benefit of being able to prioritize the small size of the circuit scale, are widely used.

Counterfeit printer cartridges are divided into two series. These series includes copying the circuit design and stealing the key. An attack is not possible if these two series are not combined together.

Methods using a shared key encryption communication protocol as the countermeasures against counterfeiting and key stealing are generally used in devices provisioned with an authentication function (hereafter, authentication device). By using shared key encryption, an encryption method with a small circuit scale may be implemented. Here, the main premise to inhibit counterfeiting is that a secret key is not leaked external to the authentication device such as the authentication chip. In order to satisfy this premise, the general method involves writing the secret key to the device internal memory at the time of manufacture, such that after manufactured, the value of the secret key may not be read externally regardless of the operation used.

However, it is known that these kinds of methods may be defeated by using a method called a probe attack. The probe attack is a method in which the package protecting the circuit internal to the authentication chip storing the encryption key is removed, and a small needle called a microprobe is inserted into the internal circuit. The value of the key may be read directly by the insertion of the microprobe into the internal circuit storing the value of the secret key.

There are methods in which a shield wire or shield circuit is provisioned to the topmost layer of the authentication chip in order to counter the probe attack. According to the method of provisioning the shield wire or shield circuit, the circuit is physically configured with multiple layers, and so a cover is added to the lower layer circuit by setting the shield circuit, which is called a protection circuit, as the topmost layer functioning as the entrance point where the microprobe is inserted. The secret key may be protected from probe attacks as the insertion of the microprobe by the attacker is blocked by this cover. For example, the authentication chip inhibits this stealing by performing processing such as deleting the key when detecting that the shield wire was broken.

### CITATION LIST

### [NON PATENT LITERATURE]

[NPL 1] Mihir Bellare and Phillip Rogaway "Optimal Asymmetric Encryption: How to Encrypt with RSA.", EUROCRYPT '94, LNCS vol. 950, pp. 341-358, Springer, 1995
[NPL 2] PKCS #1: RSA Cryptography Standard [Online], January 5, 2001, Internet (ftp://ftp.rsa.com/pub/pkcs/pkcs-1/pkcs-1v2-1d2.pdf)

### SUMMARY

### TECHNICAL PROBLEM

According to the method provisioning the shield wire or shield circuit, a problem exists when the attacker cuts a portion of the shield wire while applying voltage alternatively to the shield wire targeted to be cut, the authentication chip is unable to detect the cut in the shield wire, and so is unable to inhibit stealing.

Also, there are expectations that even if the attacker is able to open a hole in the cover by physically modifying the shield circuit, this is still safe because the key data is not able to be obtained from one authentication chip as only a portion of the authentication chip may be opened. However, a problem exists if the attacker obtains information from different regions in multiple authentication chips, and reconstructs the key data as a whole by combining this information, making the authentication chip weak against probe attacks.

A safe encryption device and method is desired in which resistance to probe attacks is increased by directly protecting the actual circuit storing the secret key instead of indirectly protection against probe attacks using a shield circuit.

### SOLUTION TO PROBLEM

According to an aspect of the invention, an encryption processing device includes: a receiving unit configured to receive a first random number; a memory configured to store a first secret key and a first agitation value operated with the first secret key; a key agitation unit configured to generate a second agitation key based on the first secret key and the first agitation value; a generating unit configured to generate a first encryption information based on the second secret key and the first random number; an agitation value updating unit configured to update the first agitation value stored in the memory; and a transmitting unit configured to output the first agitation value and the first encryption information.

### ADVANTAGEOUS EFFECTS OF INVENTION

The technology disclosed in the embodiments has a high resistance to probe attacks by adopting a challenge and response authentication protocol that agitates the key using an agitation value different for each authentication chip so that even if each portion of the key data in the authentication chip is obtained by a probe attack, the attacker is unable to restore the key data in its entirety.

### BRIEF DESCRIPTION OF DRAWINGS

FIG. 1 is a diagram illustrating an overview of a challenge and response authentication protocol.

FIG. 2 is a diagram illustrating an example of a general challenge and response authentication protocol using shared key encryption (1-sided authentication, encrypted and decrypted).

FIG. 3 is a diagram illustrating an example of a general challenge and response authentication protocol using shared key encryption (1-sided authentication, encrypted only).

FIG. 4 is a diagram illustrating an example of a general challenge and response authentication protocol using shared key encryption (2-sided authentication, encrypted and decrypted).

FIG. 5 is a diagram illustrating an example of a general challenge and response authentication protocol using shared key encryption (2-sided authentication, encrypted only).

FIG. 6 is a diagram illustrating an overview of a probe attack.

FIG. 7A is a diagram illustrating an overview of a shield circuit as a countermeasure against a probe attack.

FIG. 7B is a diagram illustrating an overview of a shield circuit as a countermeasure against a probe attack.

FIG. 7C is a diagram illustrating an overview of a shield circuit as a countermeasure against a probe attack.

FIG. 7D is a diagram illustrating an overview of a shield circuit as a countermeasure against a probe attack.

FIG. 8 is a diagram illustrating an overview of a shield circuit as a countermeasure against a probe attack.

FIG. 9 is a diagram illustrating an overview of a method using dynamic agitation processing on a key.

FIG. 10 is a diagram illustrating an example of a challenge and response authentication (1-sided authentication, encrypted and decrypted) using shared key encryption that uses the method using the dynamic agitation processing on the key.

FIG. 11 is a diagram illustrating an example of a challenge and response authentication (1-side authentication, encrypted only) using shared key encryption that uses the method using the dynamic agitation method on the key.

FIG. 12 is a diagram illustrating an example of a challenge and response authentication (2-sided authentication, encrypted and decrypted) using shared key encryption that uses the method using the dynamic agitation processing on the key.

FIG. 13 is a diagram illustrating an example of a challenge and response authentication (2-sided authentication, encrypted only) using shared key encryption that uses the method using the dynamic agitation processing on the key.

FIG. 14 is a functional block diagram illustrating a key agitation processing unit for performing dynamic agitation processing on the key using an agitation function F (K, C).

FIG. 15 is a diagram illustrating a first configuration of the agitation function F (K, C) regarding the key agitation processing unit for performing dynamic agitation processing on a key.

FIG. 16 is a diagram illustrating an example of a configuration of an optimal asymmetrical encryption encoding processing unit.

FIG. 17 is a diagram illustrating an example of a key agitation processing unit configured using the optimum asymmetrical encryption encoding processing unit.

FIG. 18 is a diagram illustrating a second configuration of the agitation function F (K, C) regarding the key agitation processing unit for performing dynamic agitation processing on a key.

FIG. 19 is a diagram illustrating a second example of a functional block diagram illustrating a key agitation processing unit for performing dynamic agitation processing on a key.

FIG. 20 is a functional block diagram of a key agitation processing unit for performing dynamic agitation processing on the key including an MGF pre-complication processing unit using a mask generating function MGF.

FIG. 21 is a diagram illustrating a first configuration of the key agitation processing unit for performing dynamic agitation processing on the key including an MGF pre-complication processing unit using a mask generating function MGF.

FIG. 22 is a diagram illustrating a second example of the key agitation processing unit for performing dynamic agitation processing on the key including an MGF pre-complication processing unit using a mask generating function MGF.

FIG. 23 is a first diagram illustrating an overview of a probe attack on the key agitation processing unit for performing dynamic agitation processing on the key including an MGF pre-complication processing using a mask generating function MGF.

FIG. 24 is a second diagram illustrating an overview of a probe attack on the key agitation processing unit for performing dynamic agitation processing on the key including an MGF pre-complication processing using a mask generating function MGF.

FIG. 25A is a first diagram describing an example of dynamic agitation processing on the key including an MGF pre-complication processing using a mask generating function MGF.

FIG. 25B is a second diagram describing an example of dynamic agitation processing on the key including an MGF pre-complication processing using a mask generating function MGF.

FIG. 26 is a diagram illustrating the nature of a swapping box.

FIG. 27 is a diagram illustrating an example configuration of a 1-bit swapping box.

FIG. 28A is a first diagram illustrating an example of an operation of the 1-bit swapping box.

FIG. 28B is a second diagram illustrating an example of an operation of the 1-bit swapping box.

FIG. 28C is a first diagram illustrating an example of an operation of a multi-stage 1-bit swapping box.

FIG. 28D is a second diagram illustrating an example of an operation of the multi-stage 1-bit swapping box.

FIG. 29 is a diagram illustrating an example configuration of a 2-bit swapping box.

FIG. 30 is a diagram illustrating an example configuration of a multi-stage T-bit swapping box.

FIG. 31A is a first diagram illustrating the nature of the multi-stage T-bit swapping box.

FIG. 31B is a second diagram illustrating the nature of the multi-stage T-bit swapping box.

FIG. 32 is a diagram illustrating the nature of an additive swapping box.

FIG. 33 is a diagram illustrating the nature of the T-bit swapping box.

FIG. 34A is a first diagram illustrating an example of the overall configuration of a first and second Embodiment.

FIG. 34B is a second diagram illustrating an example of the overall configuration of a first and second Embodiment.

FIG. 35 is a diagram illustrating a configuration example of the MGF pre-complication processing unit according to the first and a fifth Embodiment.

FIG. 36 is a diagram illustrating an example configuration of a mask processing unit and an unmask processing unit according to the first and the second Embodiment.

FIG. 37 is a diagram illustrating an example configuration of the MGF pre-complication processing unit according to the second Embodiment.

FIG. 38A is a first diagram illustrating an example of the overall configuration of a third Embodiment.

FIG. 38B is a second diagram illustrating an example of the overall configuration of a third Embodiment.

FIG. 39 is a diagram illustrating an example configuration of the MGF pre-complication processing unit according to the third Embodiment.

FIG. 40 is a diagram illustrating an example configuration of the mask processing unit according to the third Embodiment.

FIG. 41 is a diagram illustrating an example configuration of the unmask processing unit according to the third Embodiment.

FIG. 42A is a first diagram illustrating an example of the overall configuration of a fourth Embodiment.

FIG. 42B is a second diagram illustrating an example of the overall configuration of a fourth Embodiment.

FIG. 43 is a diagram illustrating an example configuration of the MGF pre-complication processing unit according to the fourth Embodiment.

FIG. 44 is a diagram illustrating an example configuration of the mask processing unit and the unmask processing unit according to the fourth Embodiment.

FIG. 45A is a first diagram illustrating an example of the overall configuration of the fifth Embodiment.

FIG. 45B is a second diagram illustrating an example of the overall configuration of the fifth Embodiment.

FIG. 46 is an example of a hardware configuration diagram capable of executing the devices of the embodiments.

### DESCRIPTION OF EMBODIMENTS

Hereinafter, the embodiments will be described with reference to the drawings. Also, similar portions and portions serving similar function in the figures are given the same or similar reference numerals, and duplicate descriptions are omitted.

<Overview of Challenge and Response Authentication Protocol>

Encryption methods are mainly divided into public key encryption methods and shared key encryption methods. Public key encryption methods use different keys for encryption and decryption, in which the key for performing encryption (public key) is generally public, and the key for performing decryption of ciphertext (secret key) is designated as private information for only the receiver to preserve safety. In contrast, methods called shared key encryption methods use the same key (secret key) for encryption and decryption, in which the sender and the receiver conceal this secret key from any third party to preserve safety.

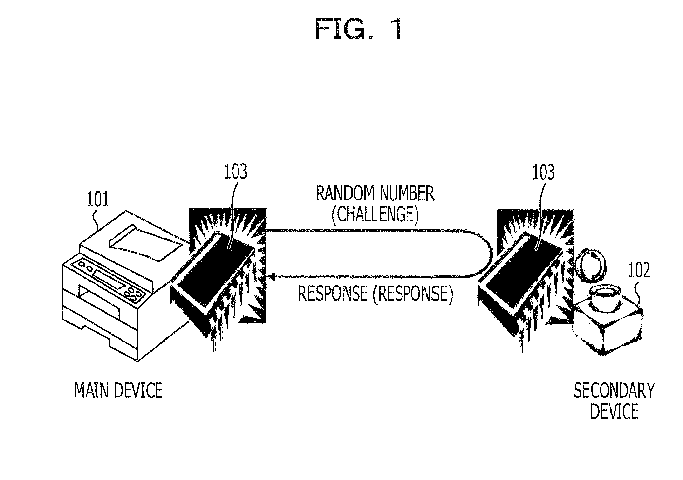

FIG. 1 is a diagram illustrating an overview of a challenge and response authentication protocol.

According to FIG. 1, an authentication chip 103 includes both a side performing authentication (main device) 101 and a side being authenticated (secondary device) 102.

Regarding the authentication chip 103, a communication protocol called a challenge and response authentication protocol is used to confirm the legitimacy of the devices. The challenge and response authentication includes a password using digital information, and the side performing authentication (main device) 101 sends random numbers called the challenge to the side being authenticated (secondary device) 102. In response, the secondary device generates a response to the challenge and sends this to the main device. The main device determines the value of the response to the challenge, and so determines that the secondary device is a legitimate device if correct.

By using random numbers as the challenge, the corresponding response is different every time. As a result, replay attacks are inhibited. Replay attacks imitate a legitimate device by repeating a response observed externally in the past. In other words, when random numbers are not used, the challenge and response pair are completely fixed values, and an attacker may know the correct response corresponding to the challenge by observing this pair. Counterfeit chips are easy to make by the attacker by making a chip that returns this response. For example, once a third party with malicious intent knows that a system only uses a password of "river" in response to a password of "mountain", it is possible to imitate this by using a chip that typically responds with "river."

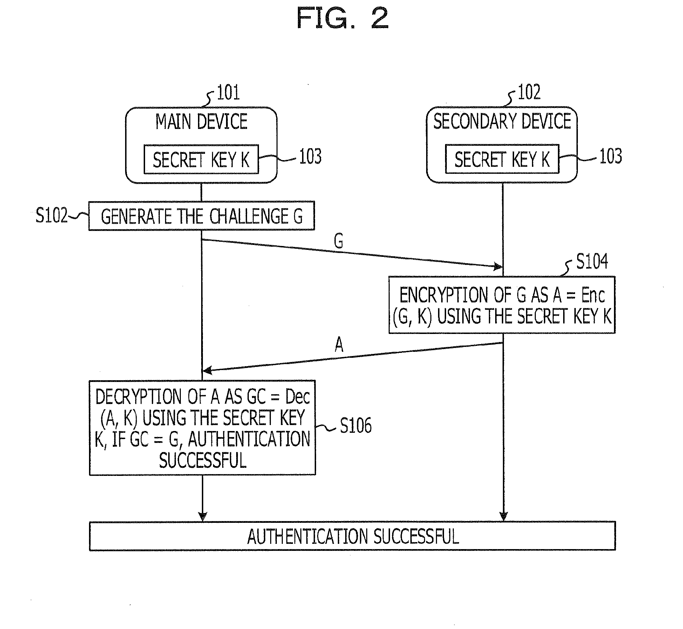

FIG. 2 is a diagram illustrating an example of a general challenge and response authentication protocol using shared key encryption (1-sided authentication, encrypted and decrypted).

The generation of the response corresponding to the challenge is generally a method using encryption functions. There are different advantages and disadvantages depending on which encryption function is used, but in the case of authentication chips, methods widely used are shared key encryptions which have an advantage of giving priority to decreasing the size of the circuit scale.

The protocol illustrated in FIG. 2 is pre-sharing a secret key K between the authentication chip 103 in the main device 101 and the authentication chip 103 in the secondary device 102. This is achieved by writing the value of the secret key K at the time of the chip manufacture. The important premise from a security viewpoint is that the value of this secret key K is not leaked externally.

At a step S102, the main device 101, which is the side performing authentication, first generates a challenge called integer G, and transmits this to the secondary device 102, which is the side being authenticated. The integer G is a random number.

At a step S104, the secondary device 102 executes an encryption processing Enc (G, K) by the secret K stored in the authentication chip 103 on the integer G, and generates a response A = Enc (G, K). Also, the secondary device 102 returns the response A to the main device 101. Here, A = Enc (P, K) represents the ciphertext A as the result of encrypting a plaintext P by the secret key K using the shared key encryption.

At a step S106, the main device 101 receives the response A from the secondary device 102, executes a decryption processing Dec (A, K) by the secret key K, and obtains an decryption result Gc = Dec (A, K). If the decryption result Gc matches the integer G generated at step S102, the main device 101 certifies that the secondary device 102 is a legitimate device.

The correct response A corresponding to the challenge G may only generated when the secret key K exists, and so the main device 101 is able to confirm the legitimacy of the secondary device 102.

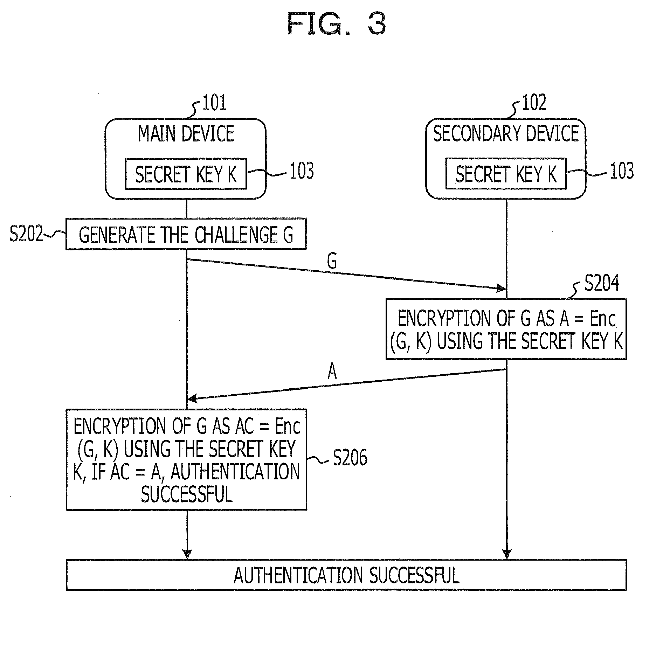

FIG. 3 is a diagram illustrating an example of a general challenge and response authentication protocol using shared key encryption (1-sided authentication, encrypted only).

The point that only encryption is performed with the challenge and response authentication illustrated in FIG. 3 is different with the challenge and response authentication using encryption and decryption illustrated in FIG. 2.

In FIG. 3, the secret key K is pre-shared between the authentication chip 103 in the main device 101 and the authentication chip 103 in the secondary device 102.

At a step S202, the main device 101, which is the side performing authentication, generates the integer G called a challenge, and transmits this to the secondary device 102, which is the side being authenticated.

At a step S204, the secondary device 102 executes an encryption processing Enc (G, K) by the secret K on the integer G, and generates a response A = Enc (G, K). Also, the secondary device 102 returns the response A to the main device 101. The description up to this point is the same as that of FIG. 2.

At a step S206, the main device 101 receives the response A from the secondary device 102, executes the encryption processing Enc (G, K) of the challenge G instead of the decryption of the response A in order to confirm the legitimacy of the secondary device 102. Also, it is determined whether or not the processing result A' = Enc (G, K) matches the response A from the secondary device 102, and if it matches, the secondary device 102 is determined to be a legitimate device.

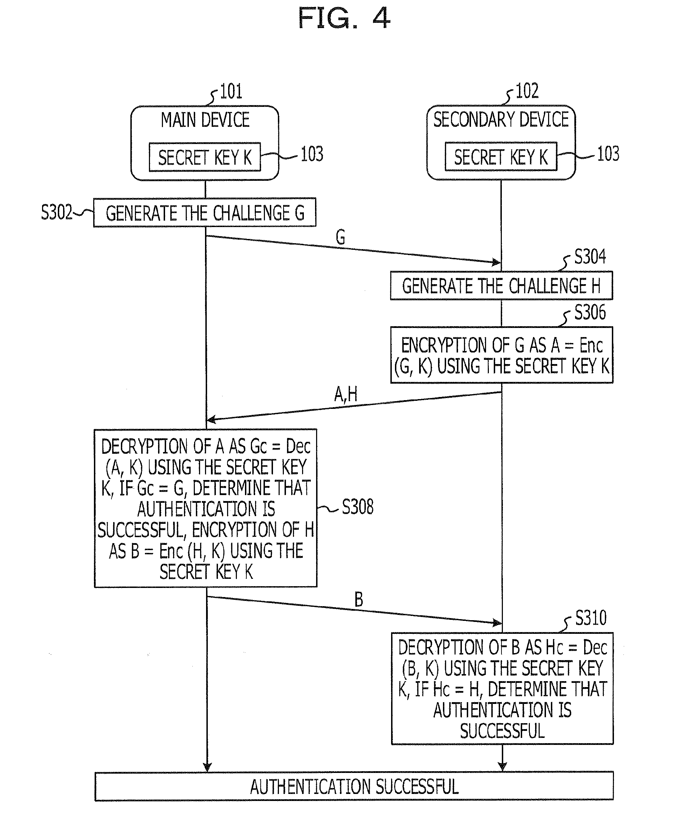

FIG. 4 is a diagram illustrating an example of a general challenge and response authentication protocol using shared key encryption (2-sided authentication, encrypted and decrypted).

The authentication illustrated in FIG. 2 and FIG. 3 is called 1-sided authentication. 1-sided authentication is an authentication protocol for confirming the legitimacy of the secondary device 102 by the main device 101. According to 1-sided authentication, the secondary device 102 is not capable of confirming the legitimacy of the main device 101, and so the secondary device 102 may not defend against an invalid main device 101. To cope with this, a method for the secondary device 102 to confirm the legitimacy of the main device 101 is preferred. An authentication protocol called a 2-sided authentication achieves this. According to the 2-sided authentication, the secondary device 102 transmits a challenge to the main device 101, and a processing is performed to confirm the response from the main device 101.

At a step S302, similar to FIG. 2, the main device 101 transmits the challenge G to the secondary device 102.

At a step S304, the secondary device 102 generates a challenge H. The challenge H may be an integer or a random number. At a step S306, the secondary device 102 transmits the response A and the challenge H to the main device 101.

Also, at this next step S306, the secondary device 102 calculates the response A, which is the result of encrypting the challenge G by the secret key K stored in the authentication chip 103.

At a step S308, the main device 101 decrypts the response A by the secret key K stored in the authentication chip 103, and determines that the secondary device 102 is legitimate if this matches with the challenge G generated at step S302. Further, the main device 101 generates an integer B, which is the encryption of the challenge H using the secret key K, as the response. Then, the main device 101 sends this response B to the secondary device 102.

At the next step S310, the secondary device 102 decrypts the response B from the main device 101 by the secret key K, and determines that the main device 101 is legitimate if this result matches the challenge H generated at step S304.

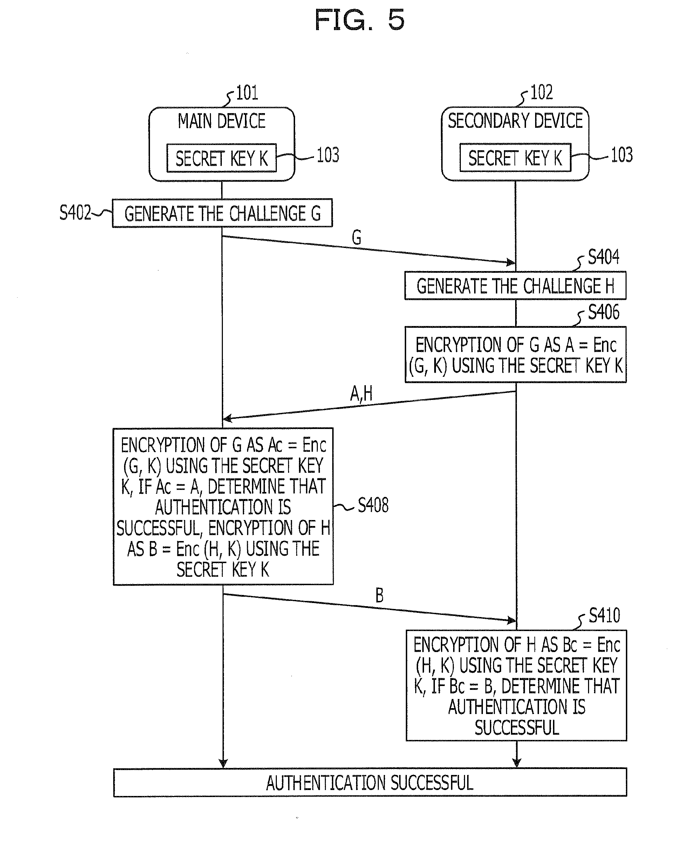

FIG. 5 is a diagram illustrating an example of a general challenge and response authentication protocol using shared key encryption (2-sided authentication, encrypted only).

The authentication illustrated in FIG. 4 is a 2-sided authentication using encryption and decryption, but authentication using only encryption is also possible.

At a step S402, the main device 101 generates an integer G as the challenge, and transmits this to the secondary device 102.

At a step S404, the secondary device 102 generates an integer H as the challenge. At a step S406, the secondary device 102 transmits the response A and the challenge H to the main device 101. The challenge H may be a random number.

Also, at the step S406, the secondary device 102 performs the encryption processing Enc (G, K) by the secret key K on the integer G received from the main device 101, and generates the result A = Enc (G, K).

At a step S408, the main device 101 performs the encryption processing Enc (G, K) by the secret key K, and generates the result Ac. Then, if this result Ac matches the response A from the secondary device 102, the secondary device 102 is determined to be legitimate. Then, the encryption processing Enc (H, K) is performed by the secret key K on the challenge H from the secondary device 102, and the result B = Enc (H, K) is generated. Then, the result B is transmitted to the secondary device 102.

At a step S410, the secondary device 102 performs the encryption processing Enc (H, K) on the random number H using the secret key K, and generates the result Bc = Enc (H, K). If this result Bc matches the result B, which was generated at the step S406 and sent from the main device 101 to the secondary device 102, the main device 101 is determined to be legitimate.

<Probe Attacks>

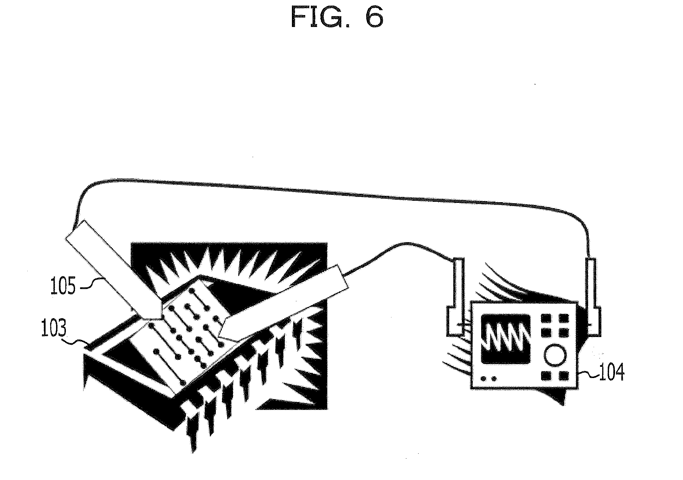

With reference to FIGs. 6 to 8, an overview of probe attacks and an overview of probe attack countermeasures using a shield circuit will be described.

FIG. 6 is a diagram illustrating an overview of a probe attack.

The attacker removes the chip package protecting the circuit in the authentication chip 103, and inserts a small electrode called a microprober 105 into the internal wiring. Then, the attacker directly read the value of the key using a sensor 104. The probe attack is a powerful method, but it is known that the maximum number of probers provisioned with a reading device using a microprober is limited, and even if many probers are so equipped, the number of microprobers that may be used simultaneously due to physical interference between the microprobers is also limited. That is to say, there is a limit to the number of bits that may be stolen simultaneously by probe attacks. Hereafter, probe attacks simultaneously stealing q bits is called a q-bit probe attack.

The number of probers changes according to the environment of the attacker, but it is known that it is easy to simultaneously steal 2 to 4 bits, for example. Also, simultaneously stealing 6 bits or more becomes difficult, and simultaneously stealing 10 bits or more is very difficult. When considering this nature, a first condition for performing countermeasures against probe attacks is as follows.

(Condition 1) It has to be impossible to steal all bits of a secret key with regard to a Q-bit probe attack when the maximum number of bits that may be simultaneously stolen by an attacker is designated as Q.

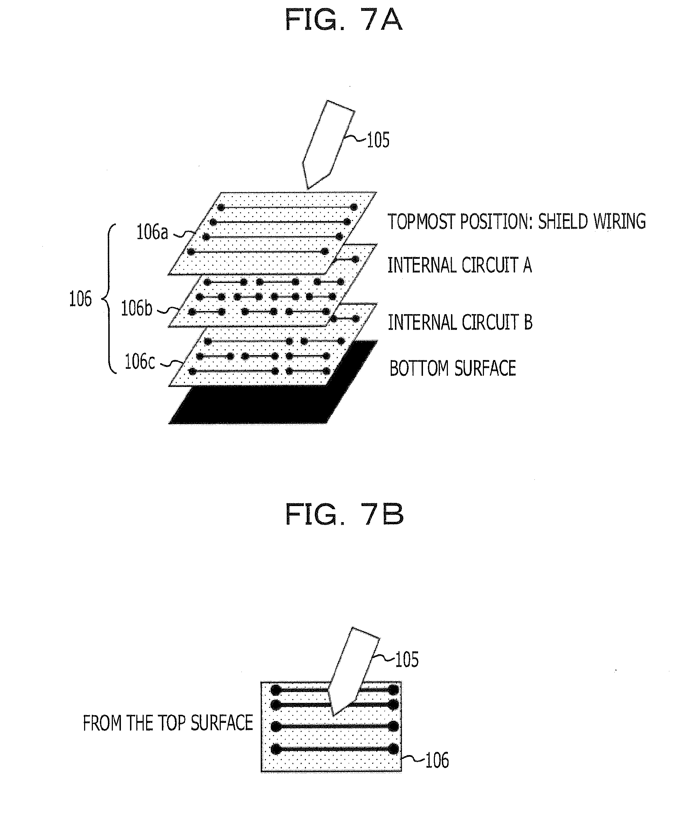

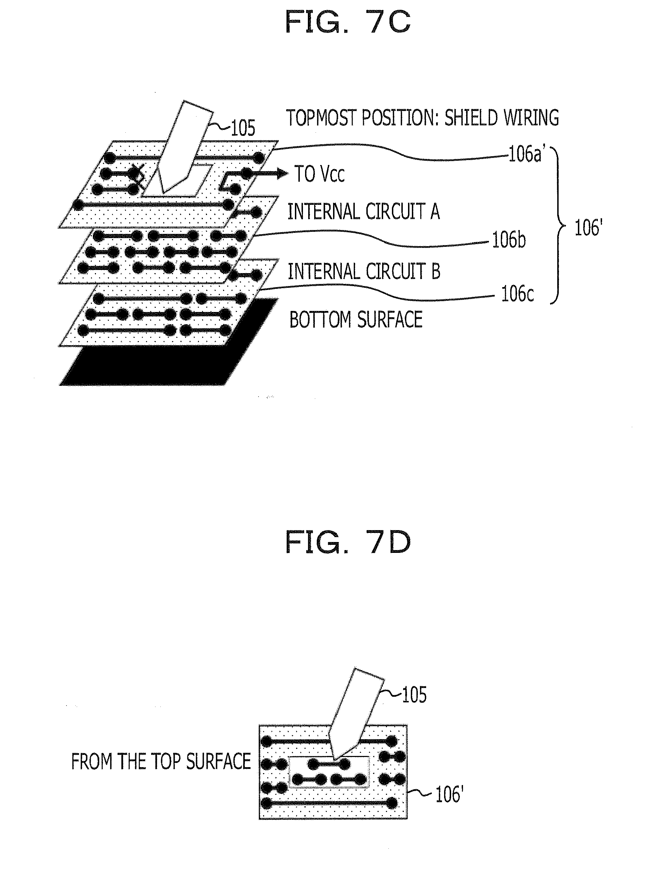

FIGs. 7A, 7B, 7C, and 7D are diagrams illustrating an overview of shield circuits functioning as probe attack countermeasures.

As illustrated in FIGs. 7A and 7C, the authentication chip 103 is divided into layers in order from the bottom of the authentication chip 103 towards the top, the layers including an internal circuit B106c, an internal circuit A106b, and a shield circuit 106a (the combinations of these may be referred to as the internal circuit 106). As illustrated in FIGs. 7B and 7D, when looking as the authentication chip 103 from the top, the shield circuit 106a is arranged to cover the internal circuit B106c and the internal circuit A106b.

Within the internal circuit 106 made from multiple layers, the wiring called the shield wire is arranged in multiples in the uppermost layer. This shield wire functions as a cover against probe intrusions to inhibit intrusions. A certain voltage is applied to each of the shield wires, and when the shield wire is broken, the voltage at the end of the opened shield wire becomes zero. Thus, as the break is detected, the shield circuit 106a may inhibit simple physical modifications.

However, as illustrated in FIG. 7C, if the attacker creates a situation in which the shield wire to be cut is connected to a wire providing a certain voltage Vcc, the break is not detected. That is to say, a hole may be opened in the cover formed by the uppermost layer shield, and so the attacker may perform a probe attack through this hole.

Even when using the shield circuit 106a, the attacker may perform probe attacks in portions by physical modification of the shield wire. In contrast, general shared key encryption uses 128-bit keys. Thus, when the number of bits that may be probed simultaneously is designated as Q, and if the maximum number of Q is around 10, then stealing the entire 128-bit key is very difficult, and so would appear safe. However, even when using a 128-bit key, if a 1-bit probe attack is performed on a group of 128 chips, the entire 128-bit key may be stolen.

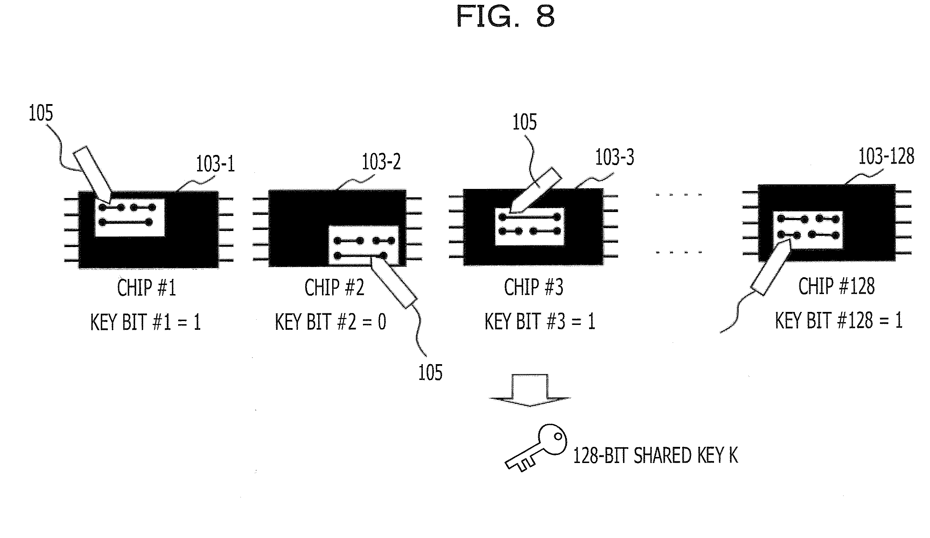

FIG. 8 is a diagram illustrating an overview of the shield circuit functioning as a probe attack countermeasure.

At a state when the secret key is written to non-volatile memory such as flash ROM, all bits are focused in a narrow region. However, when the secret key is read out from the non-volatile memory and transferred to a register in order to operate the encryption function, each bit value of the 128-bit key is scattered in various places in the chip. When 128 chips in this state are collected, the attacker is able to steal the 128-bit key, which is the value shared in all the chips, by performing a probe attack to obtain one bit from each authentication chip, and collecting 128 bits worth of this information.

In FIG. 8, the attacker uses the microprobe 105 to steal one different bit from each of the 128 authentication chips 103_1, 103_2, ..., 103_128 from chip #1 through chip #128. For example, the attacker steals a first key bit value of one (key bit #1) from the first authentication chip 103_1 (authentication chip #1). A second key bit value of zero (key bit #2) is stolen from the second authentication chip 103_2 (authentication chip #2), and a third key bit value of one (key bit #3) is stolen from the third authentication chip 103_3 (authentication chip #3). Hereafter, a 128^{th} key bit value of one (key bit #128) is stolen from the 128^{th} authentication chip 103_128 (authentication chip #128) until 128 key bits are stolen. By combining these together, it is possible to reconstruct the 128-bit shared key. When considering this nature, a second condition for performing countermeasures against probe attacks is as follows.

(Condition 2) It has to be impossible to steal all bits of the secret key from multiple authentication chips even when a probe attack of Q bits or less is performed repeatedly.

<Agitation Processing of Keys>

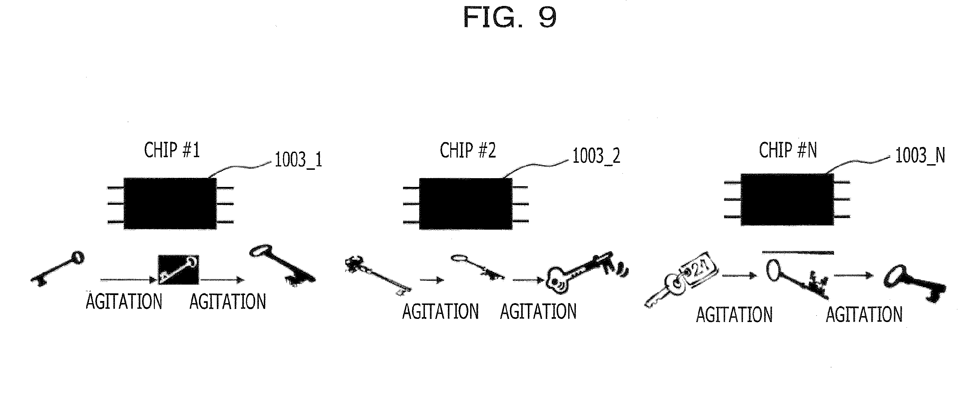

FIG. 9 is a diagram illustrating on overview of a method using dynamic agitation processing of keys.

According to the following method, the secondary device holds the same key as the main device, and at the same time, holds an agitation value (for example, a random number value) that changes while the power is on (the agitation value is a different value for each secondary device). During authentication when a challenge is received from the main device, the secondary device encrypts the challenge by an agitation key generated based on the key and the agitation value. Then, the secondary device sends the encrypted challenge together with the agitation value to the main device. The main device authenticates by decrypting the received, encrypted challenge based on the held key and the received agitation value. Also, the main device authenticates by encrypting the challenge by the agitation key generated based on the agitation value and on the key, and comparing this with the encrypted challenge received from the secondary device.

In FIG. 9, a different agitation processing is executed on the keys stored in each chip for an N number of authentication chips from #1 to #N labeled as authentication chip 1003_1, 1003_2, ..., 1003_N (the combination of this will be called the authentication chip 1003). By the agitation processing, each authentication chip does not hold a fixed secret key, as the value of the key constantly changed while the power is on. The agitation processing is performed on the basis of the value of the secret key stored in the authentication chip 1003 and the agitation value. It is preferable for the agitation value to be different for each authentication chip 1003. That is to say, the agitation value may be a random number that constantly generated while the power is on, or may be a value starting from an initial value different for each authentication chip 1003 to which the authentication chip constantly adds a value of one while the power is on. The value produced by agitation using the agitation value different for each authentication chip 1003 corresponding to the shared secret key among the authentication chip 1003 is held internally in the authentication chip 1003. Therefore, as the value of the key at each authentication chip 1003 is observed as a different value, probe attacks against multiple authentication chips 1003 may be inhibited.

However, as illustrated in FIG. 9, when executing the authentication protocol as it is using the method to agitate the key using an agitation value different for each authentication chip, as the agitation result is different between the main device and the secondary device, there is a chance that the key value does not synchronize, and that authentication fails even when the device is legitimate. Thus, it is desirable to share the agitation value between the main device and the secondary device regarding the authentication protocol using the present embodiment.

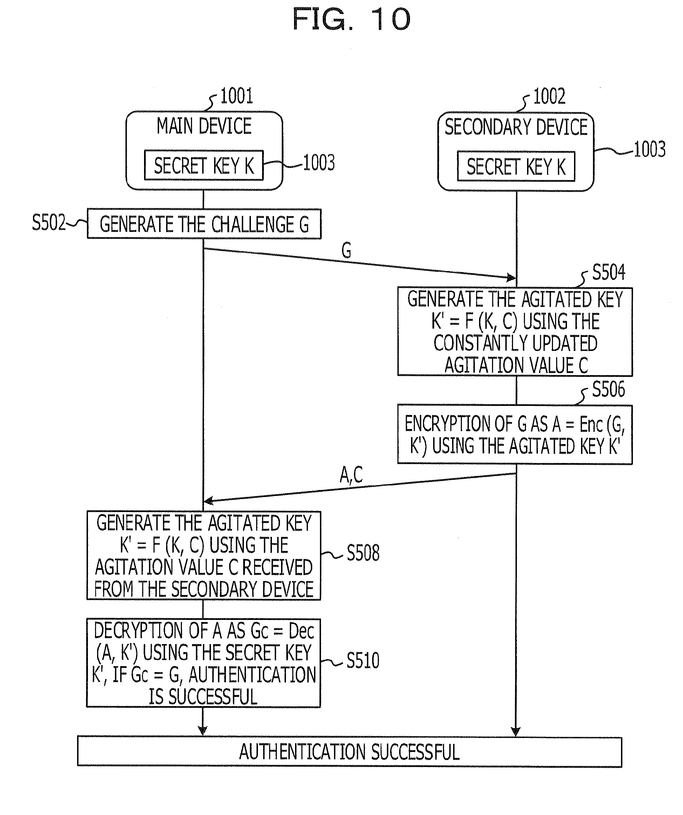

FIG. 10 is a diagram illustrating an example of a challenge and response authentication (1-sided authentication, encrypted and decrypted) using shared key encryption that uses the method using the dynamic agitation method on the key.

As illustrated in FIG. 10, a main device 1001 includes the authentication chip 1003, and a secondary device 1002 includes the authentication chip 1003. The authentication chip 1003 stores the secret key K, and the authentication chip 1003 stores the secret key K and the agitation value C.

At a step S502, the main device 1001, which is the side performing authentication, first generates a challenge called integer G, and transmits this to the secondary device 1002, which is the side being authenticated. The integer G may be a random number.

At a step S504, the secondary device 1002 generates an agitated key K' = F (K, C) using an agitation function F (K, C) where K is the secret key K and C is the agitation value C constantly updated and stored in the authentication chip 1003.

At the next step S506, the secondary device 1002 executes the encryption processing Enc (G, K') on the challenge G received from the main device 1001 using the agitated key K', and generates the response A = Enc (G, K'). Then, the secondary device 1002 sends the response A and the agitation value C to the main device 1001.

At a step S508, the main device 1001 generates an agitated key K' = F (K, C) using the agitation value C received from the secondary device 1002 and the secret key K in the agitation function F (K, C).

At a step S510, the main device 1001 executes a decryption processing Dec (A, K') on the response A received from the secondary device 1002 using the agitated key K' generated at the step S508, and obtains an decryption result Gc = Dec (A, K'). If the decryption result Gc matches the integer G generated at step S502, the main device 1001 certifies that the secondary device 1002 is a legitimate device.

Therefore, the secondary device 1002 processing the method illustrated in FIG. 10 includes a receiving unit for receiving the challenge G, which is a random integer, as an input, a first memory, which is non-volatile memory for storing the secret key K, which is an integer, a second memory for storing the agitation value C, which is an integer, a key agitating unit for generating the agitated secret key K', which is an integer created by an operation of the secret key K and the agitation value C in the agitation function F (K, C), a response generating unit for generating a response A = Enc (G, K') created by an operation of the agitated secret key K' and the challenge G in the encryption function Enc (G, K'), an agitation value updating unit for updating the agitation value C stored in the second memory, and a transmission unit for outputting the agitation value C and the response A.

Also, the main device 1001 processing the method illustrated in FIG. 10 receives the agitation value C and the response A output by the secondary device 1002, performs an operation of the received agitation value C and a second secret key K, which has the same value as the secret key K stored previously in its own non-volatile memory, in the agitation function F (K, C) to generate the secret key comparison value K' = F (K, C), which is an integer, performs an operation of the secret key comparison value K' and the response A in a decryption function Dec (A, K'), which is the reverse function of the encryption function for the response A to generate the challenge comparison value Gc = Dec (A, K'), compares the challenge G with the challenge comparison result Gc = Dec (A, K'), and authenticates the secondary device 1002 based on the results of comparing the challenge G with the challenge comparison value Gc = Dec (A, K').

The functions of the main device 1001 and the secondary device 1002 may be interchangeably switched with a combination of the main device 1001 and the secondary device 1002 having the previously described configurations.

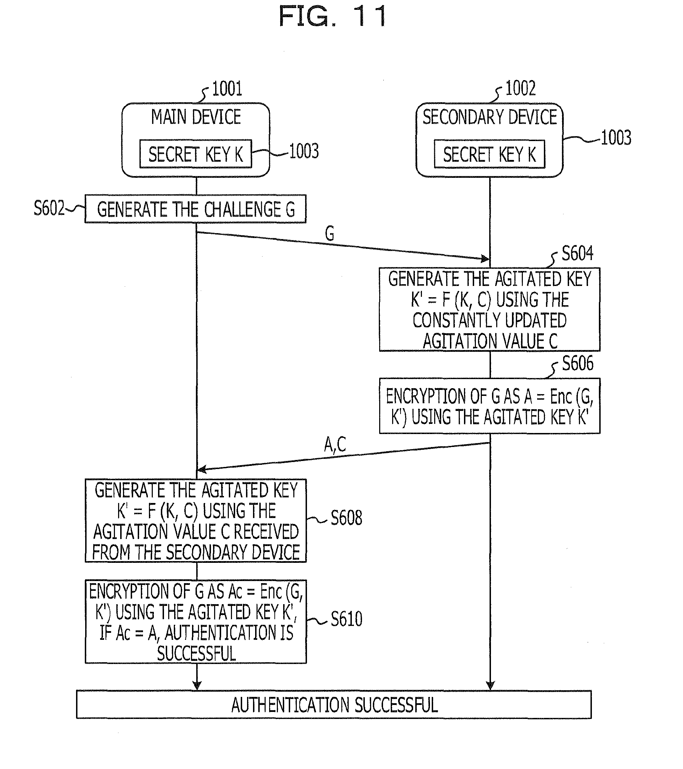

FIG. 11 is a diagram illustrating an example of a challenge and response authentication (1-side authentication, encrypted only) using shared key encryption that uses the method using the dynamic agitation method on the key.

At a step S602, the main device 1001, which is the side performing authentication, first generates a challenge called integer G, and transmits this to the secondary device 1002, which is the side being authenticated. The integer G may be a random number.

At a step S604, the secondary device 1002 generates an agitated key K' = F (K, C) using an agitation function F (K, C) where K is the secret key K and C is the agitation value C constantly updated and stored in the authentication chip 1003.

At the next step 5606, the secondary device 1002 executes the encryption processing Enc (G, K') on the challenge G received from the main device 1001 using the agitated key K', and generates the response A = Enc (G, K'). Then, the secondary device 1002 sends the response A and the agitation value C to the main device 1001.

At a step S608, the main device 1001 generates an agitated key K' = F (K, C) using the agitation value C received from the secondary device 1002 and the secret key K in the agitation function F (K, C).

At a step S610, the main device 1001 executes the encryption processing Enc (G, K') on the challenge G generated at the step S602 using the agitated key K' generated at the step S608, and generates the result Ac = Enc (G, K'). If the encryption result Ac matches the response A received from the secondary device 1002, the main device 1001 certifies that the secondary device 1002 is a legitimate device.

Therefore, the secondary device 1002 processing the method illustrated in FIG. 11 includes a receiving unit for receiving the challenge G, which is a random integer, as an input, a first memory, which is non-volatile memory for storing the secret key K, which is an integer, a second memory for storing the agitation value C, which is an integer, a key agitating unit for generating the agitated secret key K', which is an integer created by an operation of the secret key K and the agitation value C in the agitation function F (K, C), a response generating unit for generating a response A = Enc (G, K') created by an operation of the agitated secret key K' and the challenge G in the encryption function Enc (G, K'), an agitation value updating unit for updating the agitation value C stored in the second memory, and a transmission unit for outputting the agitation value C and the response A.

Also, the main device 1001 processing the method illustrated in FIG. 11 receives the agitation value C and the response A output by the secondary device 1002, performs an operation of the received agitation value C and a second secret key K, which has the same value as the secret key K stored previously in its own non-volatile memory, in the agitation function F (K, C) to generate the secret key comparison value K', which is an integer, performs an operation of the secret key comparison value K' and the response A in the encryption function Enc (A, K') to generate the challenge comparison value Gc = Enc (A, K'), compares the challenge G with the challenge comparison result Gc, and authenticates the secondary device 1002 based on the results of comparing the challenge G with the challenge comparison value Gc.

The functions of the main device 1001 and the secondary device 1002 may be interchangeably switched with a combination of the main device 1001 and the secondary device 1002 having the previously described configurations.

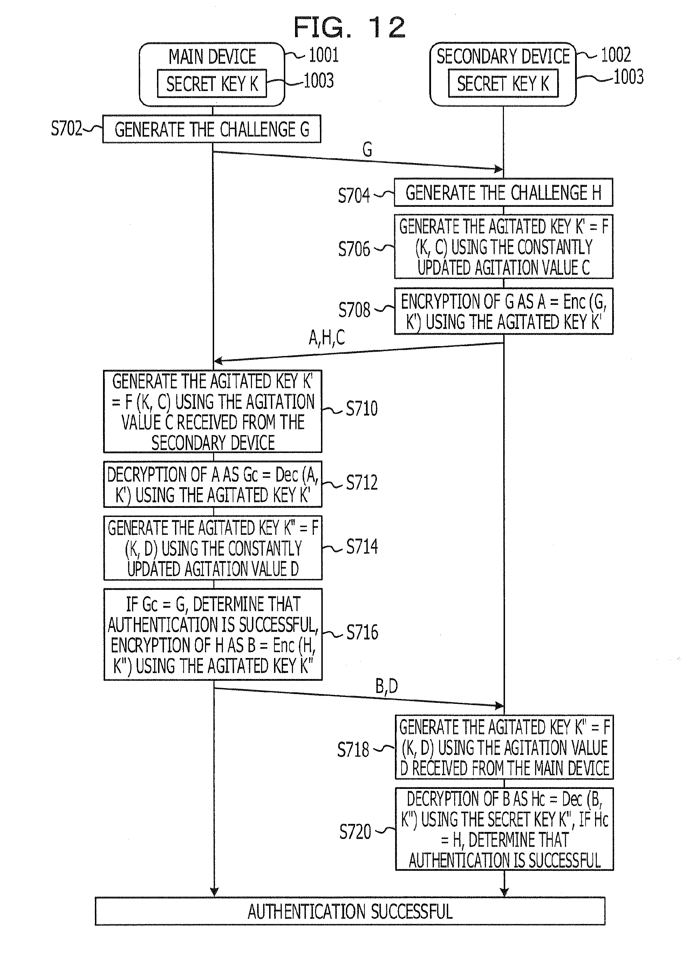

FIG. 12 is a diagram illustrating an example of a challenge and response authentication (2-sided authentication, encrypted and decrypted) using shared key encryption that uses the method using the dynamic agitation method on the key.

At a step S702, the main device 1001, which is the side performing authentication, first generates a challenge called integer G, and transmits this to the secondary device 1002, which is the side being authenticated. The integer G may be a random number.

At a step 5704, the secondary device 1002 generates a challenge H. The challenge H is an integer, and may be a random number.

At a step S706, the secondary device 1002 generates an agitated key K' = F (K, C) using an agitation function F (K, C) where K is the secret key K and C is the agitation value C constantly updated and stored in the authentication chip 1003.

At the next step S708, the secondary device 1002 executes the encryption processing Enc (G, K') on the challenge G received from the main device 1001 using the agitated key K', and generates the response A = Enc (G, K'). Then, the secondary device 1002 sends the response A and the agitation value C and challenge H to the main device 1001.

At a step S710, the main device 1001 generates an agitated key K' = F (K, C) using the agitation value C received from the secondary device 1002 and the secret key K in the agitation function F (K, C).

At a step S712, the main device 1001 executes the decryption processing Dec (A, K') on the response A received from the secondary device 1002 using the agitated key K', and obtains the decryption result Gc = Dec (A, K')

At a step S714, the main device 1001 generates an agitated key K" = F (K, D) using an agitation function F (K, D) where K is the secret key K and D is the constantly updated agitation value stored in the authentication chip 1003.

At a step S716, if the decryption result Gc matches the integer G generated at the step S702, the main device 1001 authenticates that the secondary device 1002 is a legitimate device. Then, an encryption processing Enc (H, K") is executed on the challenge H received from the secondary device 1002 using the agitated key K", and a response B = Enc (H, K") is generated. Then, the main device 1001 transmits the response B and the agitation value D to the secondary device 1002.

At a step S718, the secondary device 1002 generates the agitated key K" = F (K, D) using the agitation value D and the agitation key K received from the main device 1001.

At the next step S720, the secondary device 1002 executes a decryption processing Dec (B, K") on the response B received from the main device 1001 using the agitated key K", and obtains the decryption result Hc = Dec (B, K"). If the decryption result Hc matches the integer H generated at the step S704, the secondary device 1002 authenticates that the main device 1001 is a legitimate device.

Therefore, the secondary device 1002 processing the method illustrated in FIG. 12 includes a receiving unit for receiving the challenge G, which is a random integer, as an input, a challenge generating unit for generating a second challenge H, which is a random integer, a first memory, which is non-volatile memory for storing the secret key K, which is an integer, a second memory for storing the agitation value C, which is an integer, a key agitating unit for generating the agitated secret key K', which is an integer created by an operation of the secret key K and the agitation value C in the agitation function F (K, C), a response generating unit for generating a response A = Enc (G, K') created by an operation of the agitated secret key K' and the challenge G in the encryption function Enc (G, K'), an agitation value updating unit for updating the agitation value C stored in the second memory, and a transmission unit for outputting the agitation value C, the response A, and the second challenge H.

Also, the main device 1001 processing the method illustrated in FIG. 12 receives the agitation value C, the response A, and the second challenge H output by the secondary device 1002, performs an operation of the received agitation value C and a second secret key K, which has the same value as the secret key K stored previously in its own non-volatile memory, in the agitation function F (K, C) to generate the secret key comparison value K', which is an integer, performs an operation of the secret key comparison value K' and the response A in the decryption function Dec (A, K'), which is the reverse function of the encryption function to generate the challenge comparison value Gc, performs an operation of the second agitation value D, which is an integer store in its memory, and the secret key K in the agitation function F (K, D) to generate the second secret comparison value K", which is an integer, compares the challenge G with the challenge comparison result Gc, and when the secondary device 1002 is authenticated based on the results of comparing the challenge G with the challenge comparison value Gc, performs an operation of the second secret key comparison value K" and the second challenge H in the encryption function Enc (H, K") to generate the second response B = Enc (H, K") which is an integer, and outputs the second agitation value D and the second response B.

Also, the key agitation unit in the secondary device 1002 processing the method illustrated in FIG. 12 includes a decryption unit that performs an operation of the secret key K and the second agitation value D in the agitation function F (K, D) to generate the second agitated secret key K", which is an integer, and also performs an operation of the second agitated secret key K" and the second response H in the decryption function Dec (H, K") to generate the second challenge comparison value Hc, and an authenticating unit for authenticating the main device 1001 based on the comparison of the second challenge comparison value Hc and the second challenge H.

The roles of the main device 1001 and the secondary device 1002 may be interchangeably switched regarding the combination of the main device 1001 and the secondary device 1002 having the previously described configurations.

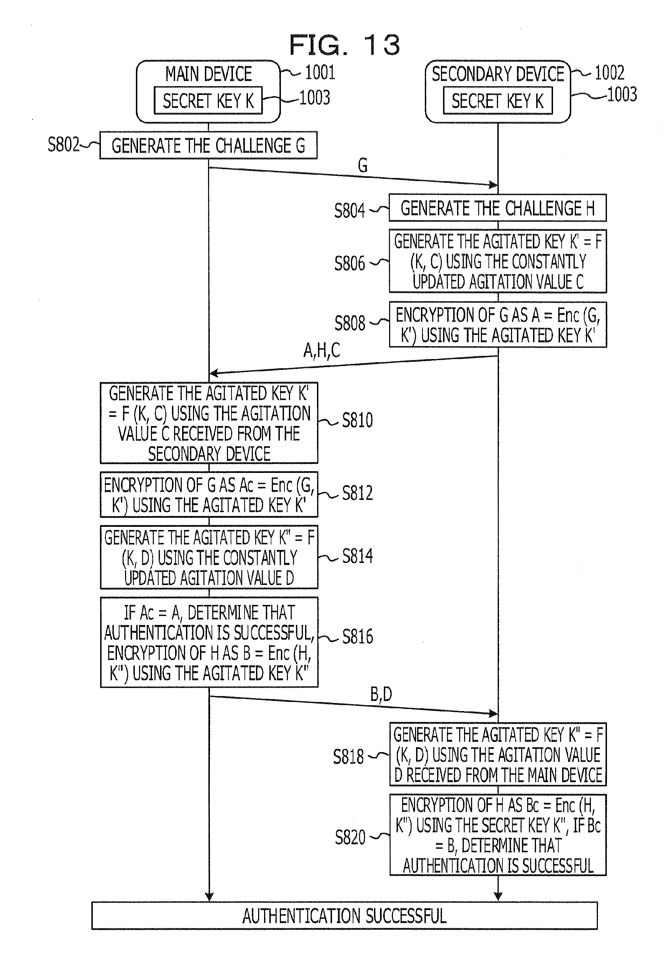

FIG. 13 is a diagram illustrating an example of a challenge and response authentication (2-sided authentication, encrypted only) using shared key encryption that uses the method using the dynamic agitation processing on the key.

At a step S802, the main device 1001, which is the side performing authentication, first generates a challenge called integer G, and transmits this to the secondary device 1002, which is the side being authenticated. The integer G may be a random number.

At a step S804, the secondary device 1002 generates a challenge H. The challenge H is an integer, and may be a random number.

At a step S806, the secondary device 1002 generates an agitated key K' = F (K, C) using an agitation function F (K, C) where K is the secret key K and C is the agitation value C constantly updated and stored in the authentication chip 1003.

At the next step S808, the secondary device 1002 executes the encryption processing Enc (G, K') on the challenge G received from the main device 1001 using the agitated key K', and generates the response A = Enc (G, K'). Then, the secondary device 1002 sends the response A and the agitation value C and challenge H to the main device 1001.

At a step S810, the main device 1001 generates an agitated key K' = F (K, C) using the agitation value C received from the secondary device 1002 and the secret key K in the agitation function F (K, C).

At a step S812, the main device 1001 executes the encryption processing Enc (G, K') on the challenge G generated at the step S802 using the agitated key K', and generates the encryption result Ac = Enc (G, K')

At a step S814, the main device 1001 generates an agitated key K" = F (K, D) using an agitation function F (K, D) where K is the secret key K and D is the constantly updated agitation value stored in the authentication chip 1003.

At a step S816, if the encryption result Ac matches the response A received from the secondary device 1002, the main device 1001 authenticates that the secondary device 1002 is a legitimate device. Then, an encryption processing Enc (H, K") is executed on the challenge H received from the secondary device 1002 using the agitated key K", and a response B = Enc (H, K") is generated. Then, the main device 1001 transmits the response B and the agitation value D to the secondary device 1002.

At a step S818, the secondary device 1002 generates the agitated key K" = F (K, D) using the agitation value D and the agitation key K received from the main device 1001.

At the next step S820, the secondary device 1002 executes an encryption processing Enc (H, K") on the challenge H generated at the step S804 using the agitated key K" to generate the result Bc = Enc (H, K"). If the result Bc matches the response B received from the main device 1001, the secondary device 1002 authenticates that the main device 1001 is a legitimate device.

Therefore, the secondary device 1002 processing the method illustrated in FIG. 13 includes a receiving unit for receiving the challenge G, which is a random integer, as an input, a challenge generating unit for generating a second challenge H, which is a random integer, a first memory, which is non-volatile memory for storing the secret key K, which is an integer, a second memory for storing the agitation value C, which is an integer, a key agitating unit for generating the agitated secret key K', which is an integer created by an operation of the secret key K and the agitation value C in the agitation function F (K, C), a response generating unit for generating a response A = Enc (G, K') created by an operation of the agitated secret key K' and the challenge G in the encryption function Enc (G, K'), an agitation value updating unit for updating the agitation value C stored in the second memory, and a transmission unit for outputting the agitation value C, the response A, and the second challenge H.

Also, the main device 1001 processing the method illustrated in FIG. 13 receives the agitation value C, the response A, and the second challenge H output by the secondary device 1002, performs an operation of the received agitation value C and a second secret key K, which has the same value as the secret key K stored previously in its own non-volatile memory, in the agitation function F (K, D) to generate the secret key comparison value K', which is an integer, performs an operation of the secret key comparison value K' and the challenge G in the encryption function Enc (G, K') to generate the response comparison value Ac, which is an integer, performs an operation of the second agitation value D, which is an integer stored in its memory, and the secret key K in the agitation function F (K, D) to generate the second agitated secret key K", compares the response A with the response comparison value Ac, and when the secondary device (1002) is authenticated based on the results of comparing the response A with the response comparison value Ac, performs an operation of the second secret key comparison value K" and the second challenge H in the encryption function Enc (H, K") to generate the second response B = Enc (H, K"), and outputs the second agitation value D and the second response B.

Also, the key agitation unit in the secondary device 1002 processing the method illustrated in FIG. 13 includes a encryption unit that performs an operation of the secret key K and the second agitation value D in the agitation function F (K, D) to generate the second agitated secret key (K"), which is an integer, and also performs an operation of the second agitation value D and the secret key K in the encryption function Enc (K, D) to generate the second response comparison value Bc, and an authenticating unit for authenticating the main device 1001 based on the comparison of the second response B and the second response comparison value Bc.

The roles of the main device 1001 and the secondary device 1002 may be interchangeably switched regarding the combination of the main device 1001 and the secondary device 1002 having the previously described configurations.

<(i) Countermeasures for Probe Attacks of Non-Volatile Circuits>

The following describes (i) classification of countermeasures for probe attacks of non-volatile circuits, (ii) classification of countermeasures for probe attacks of volatile circuits, and (iii) classification of secret key mask calculations.

Circuits are generally divided into two categories.

(1) Non-volatile circuits: circuits in which reads and writes are both possible, and values are stored at a state when the power is cut or after a reset. Examples include flash ROM, Electrically Erasable Programmable Read-Only Memory (EEPROM), Ferroelectric Random Access Memory (FRAM (registered trademark)), and non-volatile flip flops.

(2) Volatile circuits: Circuits in which values are not stored at a state when the power is cut or after a reset. Examples include registers and logic circuits.

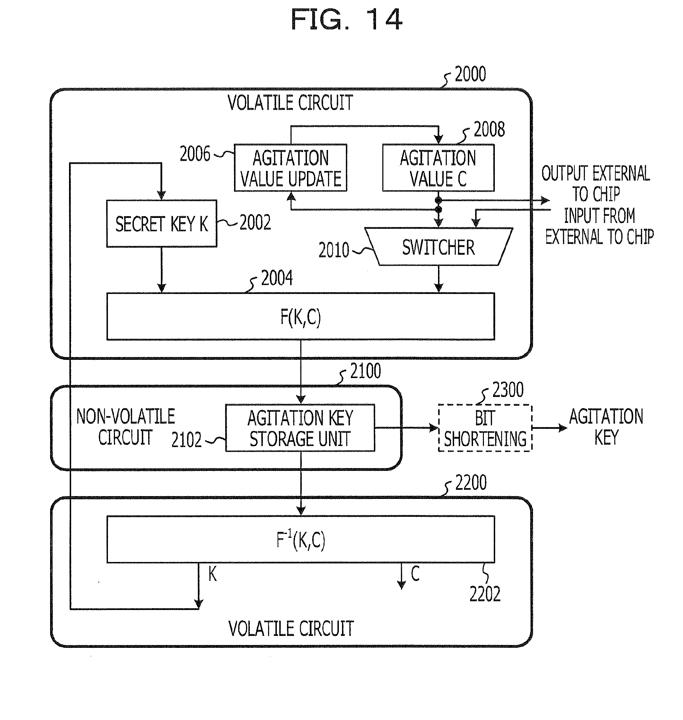

First, the following describes countermeasures for probe attacks on non-volatile circuits with reference FIG. 14 through FIG. 18.

FIG. 14 is a functional block diagram illustrating a key agitation processing unit for performing dynamic agitation processing on the key using an agitation function F (K, C).

The key agitation processing unit includes a wrapping processing unit 2000, a key storage unit 2100, an unwrapping processing unit 2200, and a bit shortening processing unit 2300.

The wrapping processing unit 2000 includes a memory 2002 for storing the secret key K, an agitation function operating unit 2004 for performing agitation processing using an agitation function F, a memory 2008 for storing the agitation value C, an agitation value updating unit 2006 for updating the agitation value C stored in the connected memory 2008, and a switcher 2010 for switching between inputs into the agitation function operating unit 2004, whether the input from a device external to the authentication chip 1003 or the agitation value stored in the memory 2008.

The agitation function operating unit 2004 performs an operation of the secret key K input from the memory 2002 storing the secret key K and the agitation value C input from the switcher 2010 in the agitation function F (K, C). The agitation function operating unit 2004 outputs the processing result value F (K, C) to the key storage unit 2100. In this way, at the wrapping processing unit 2000, by performing an operation of the secret key K and the agitation value C in the agitation function F, the key agitation result represented as F (K, C) is generated.

The key storage unit 2100 is configured by a non-volatile circuit, and includes an agitation key storage unit 2102. Hereafter, the key storage unit 2100 may also be referred to as the non-volatile circuit 2100. The agitation key storage unit 2102 stores the value generated by the agitation function operating unit 2004 in the receiving device wrapping processing unit 2000.

The agitation key storage unit 2102 is connected to the bit shortening processing unit 2300. The bit shortening processing unit 2300 shortens the number of bits of the value stored in the agitation key storage unit 2102 as desirable, and outputs this as the agitation key.

The unwrapping processing unit 2200 includes an inverse function operating unit 2202. The inverse function operating unit 2202 uses an inverse agitation function F⁻¹ (K, C) of the agitation function F (K, C) to obtain the secret key K and the agitation value C from the value stored in the agitation key storage unit 2102. The secret key K, which is the output of the inverse function operating unit 2202, is input and stored into the memory 2002 in the wrapping processing unit 2000.

In this way, according to FIG. 14, the agitated key K' = F (K, C) is generated expressed as F (K, C) from the secret key K and agitation value C. The agitation key K' is stored in the agitation key storage unit 2102 in the key storage unit 2100, which is configured by a non-volatile circuit. The agitation value C is output to a device external to the authentication chip 1003 for synchronizing the main device 1001 and the secondary device 1002 according to an authentication protocols illustrated in FIG. 10 through FIG. 13. Also, according to these authentication protocols, the main device 1001 or the secondary device 1002 may receive the agitation value C from an external device. Whether to use the agitation value C internal to the authentication chip or the agitation value C received from an external device is switched by the switcher 2010. The agitation value C is a value that is constantly changed while power is running to the chip. The content of the processing to update the agitation value is not particularly restricted, and may be an update that is not predictable such as hardware random numbering, or may be an update that is predictable, such as adding a one to the value.

From a security viewpoint, it is desirable for the agitation function F (K, C) to have the following (Nature 1), (Nature 2), and (Nature 3).

(Nature 1) If even only one bit of the agitation value C or the secret key K, which is the input value, is changed, then all bits of the output value K' = F (K, C) are changed.

(Nature 2) An inverse function F⁻¹ (K, C) of F (K, C) exists.

(Nature 3) As long as all bit values of F (K, C) are not known, the group (K, C) for input values K and C from F (K, C) are not obtainable.

However, the previously described (Nature 1) may be replaced with a (Nature 1').

(Nature 1') If even only one bit of the agitation value C or the secret key K, which is the input value, is changed, then multiple bits of the output value K' = F (K, C) are changed.

Also, the previously described (Nature 3) may be replaced with a (Nature 3').

(Nature 3') As long as at least Q + 1 bit of the bit values for F (K, C) are not known, the group (K, C) for input values K and C from F (K, C) are not obtainable.

With the previously described (Nature 1), when even one bit of the agitation value C changes, all bits in the agitation key storage unit 2102, which is configured by a non-volatile circuit, are changed. Even if an attacker uses a probe attack on the agitation key storage unit 2102, the values obtained from each authentication chip will be different, and so the secret key K may not be reconstructed from the results taken from multiple authentication chips. Also, with the previously described (Nature 1'), if the agitation value C changes, multiple bits in the agitation key storage unit 2102, which is configured by a non-volatile circuit, are changed. Thus, when an attacker uses a probe attack on the agitation key storage unit 2102 and attempts to reconstruct the secret key K, this will take much time and effort.

Thus, the non-volatile circuit 2100 may satisfy the previously described (Condition 2) "It has to be impossible to steal all bits of the secret key from multiple authentication chips even when a probe attack of Q bits or less is performed repeatedly."

With the previously described (Nature 2), the group (K, C) of K and C may be obtained from the agitation key K' stored in the agitation key storage unit 2102. At this time, the processing to obtain the group (K, C) of K and C from the agitation key K' is performed by volatile circuits such as logical circuits and registers. That is to say, the volatile circuits have the potential to be vulnerable to 1-bit probe attacks on multiple authentication chips. This problem is resolved by using the method <Countermeasures for Probe Attacks on Volatile Circuits> described later.

(Nature 3) and (Nature 3') are natures for guaranteeing the difficulty for probe attacks on the non-volatile circuit 2100. For example, when F (K, C) is 256 bits, as long as the attacker does not conduct probe attacks simultaneously for the values of the 256 bits which are dynamically updated according to the agitation value C, it is not possible to obtain the group (K, C) of K and C from F (K, C). That is to say, regarding the non-volatile circuit 2100, the previously described (Condition 1) "It has to be impossible to steal all bits of a secret key with regard to a Q-bit probe attack when the maximum number of bits that may be simultaneously stolen by an attacker is designated as Q" may be satisfied.

The previously described (Nature 3) means that there is a high dependence among the bit values of the non-volatile circuit 2100. Thus, it is desirable to entirely complete the 256-bit write processing in one cycle. Also, to completely guarantee (Nature 3), it is desirable to arrange the values of all 256 bits dispersed on top of the authentication chip. For example, when writing the agitated 256-bit key K' = F (K, C) onto an EEPROM which performs reads and writes in 1-byte units, by performing the probing of the wiring for the 8-bit interface (I/F) that performs the reading and writing to memory, the agitated 256-bit key K' = F (K, C) may be read in 8-bit units, and so safety may not be guaranteed. That is to say, in order to guarantee (Nature 3), it is preferable that the non-volatile circuit 2100 be able to read/write the 256 bits in one cycle using a non-volatile flip flop or similar circuit.

In this way, according to the configuration illustrated in FIG. 14, if the function F satisfies (Nature 1), (Nature 2), and (Nature 3), the non-volatile circuit 2100 may satisfy the previously described (Condition 1) and (Condition 2). The value stored in the non-volatile circuit 2100 may be used directly as the agitation key, or may be used as the agitation key after the bit shortening processing is performed at the bit shortening processing unit 2300.

There are multiple configurations of the key agitation processing unit that satisfied (Nature 1), (Nature 2), and (Nature 3).

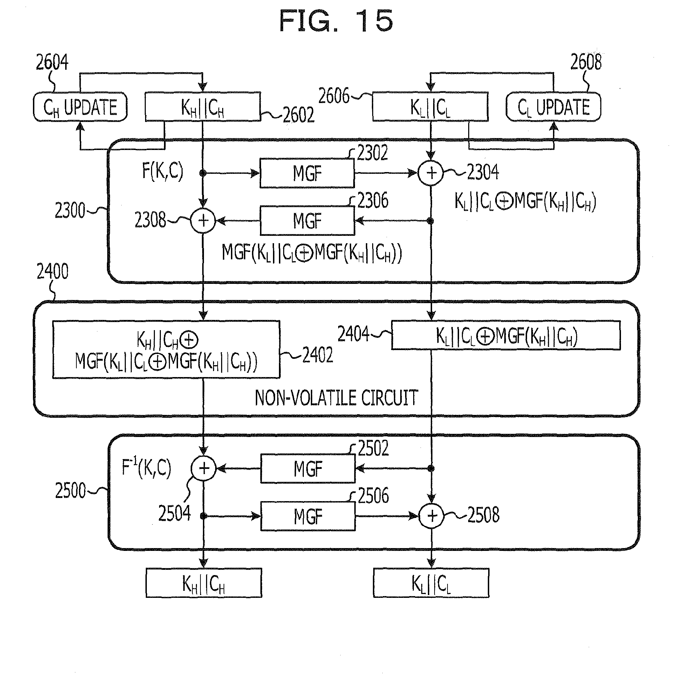

FIG. 15 is a diagram illustrating a first configuration of the agitation function F (K, C) regarding the key agitation processing unit for performing dynamic agitation processing on the key.

The method disclosed in FIG. 15 is based on a public key message padding method called Optimal Asymmetric Encryption Padding (OAEP).

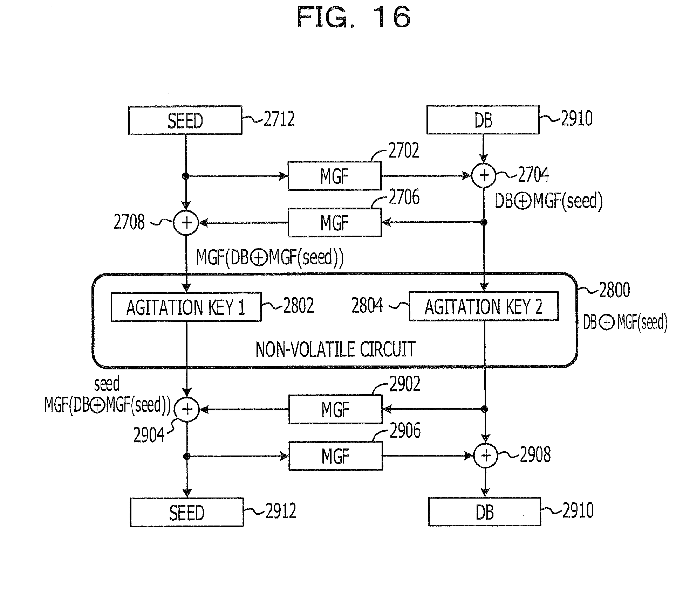

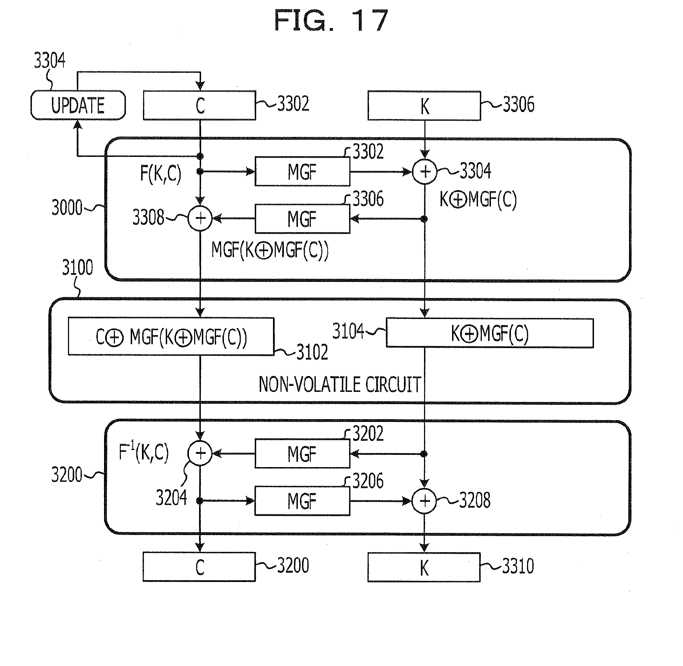

FIG. 16 is a diagram illustrating an example of a configuration of an optimal asymmetrical encryption encoding processing unit. FIG. 17 is a diagram illustrating an example of a key agitation processing unit configured using the optimal asymmetrical encryption encoding processing unit.

First, the optimal asymmetrical encryption encoding unit in FIG. 16 will be described, and afterwards, the example of a key agitation processing unit configured using the optimal asymmetrical encryption encoding processing unit in FIG. 17 will be described. Afterwards, the description will return to the first configuration of the agitation function F (K, C) in FIG. 15.

The optimal asymmetrical encryption encoding unit in FIG. 16 includes a key storage unit 2800, a mask generating function (MGF) operating unit 2702, a mask generating function (MGF) operating unit 2706, a mask generating function (MGF) operating unit 2902, a mask generating function (MGF) operating unit 2906, an XOR gate 2704, an XOR gate 2708, an XOR gate 2904, and an XOR gate 2908. The storage unit 2800 is configured by a non-volatile circuit, and further includes a first memory 2802 for storing an agitation key 1 and a second memory 2804 for storing an agitation key 2.

The mask generating function (MGF) operating unit 2702, the mask generating function (MGF) operating unit 2706, the mask generating function (MGF) operating unit 2902, and the mask generating function (MGF) operating unit 2906 perform an operation of the input in a mask generating function MGF.

The mask generating function MGF is called a message generating function, and has the following natures.

(MGF 1) If even one bit of the input changes, all bits of the output value are changed.

(MGF 2) The input value is not obtainable from the output.

(MGF 3) The bit length of the input and output may be adjusted by a parameter. The mask generating function MGF is basically a hash function that may adjust the bit length of the input and output.

As illustrated in FIG. 16, a seed value seed is input into the mask generating function (MGF) operating unit 2702, and an output MGF (seed) is obtained. The output MGF (seed) is input to the XOR gate 2704, and an XOR is calculated with the data value DB to obtain an output DB*MGF (seed).

The symbol '*' is used throughout the present specification to represent an XOR operation.

At the mask generating function (MGF) operating unit 2702, due to the previously described nature (MGF 1), if even one bit of the seed value seed changes, all bits of the output MGF (seed) are changed.

The output DB*MGF (seed) from the XOR gate 2704 is stored in the second memory 2804 in the storage unit 2800. Further, the output DB*MGF (seed) is input into the mask generating function (MGF) operating unit 2706. The result MGF (DB*MGF (seed)) is input into the XOR gate 2708, an XOR is calculated with the seed value seed to obtain an output seed*MGF (DB*MGF (seed)). The output seed*MGF (DB*MGF (seed)) is stored in the first memory 2802 in the storage unit 2800.

The processing up to this point corresponds to the processing to encrypt the data value DB using the seed value seed.

Next, the decryption processing will be described.

The seed*MGF (DB*MGF (seed)) is stored in the first memory 2802 in the storage unit 2800, and the DB*MGF (seed) is stored in the second memory 2804.

First, pay attention to the following logical expression.

[seed*MGF (DB*MGF (seed))] * [MGF (DB*MGF (seed))] = seed

The first item on the left side of the expression above is the value stored in the first memory 2802. The second item on the left side is the value obtained by performing the operation of the value stored in the second memory 2804 in the mask generating function (MGF).

Thus, the value stored in the second memory 2804 is input into the mask generating function (MGF) operating unit 2902 to obtain the output MGF DB*MGF (seed). Further, the seed value seed is obtained by an XOR calculation of the output MGF (DB*MGF (seed)) and the seed*MGF (DB*MGF (seed)) value stored in the first memory 2802 performed by the XOR gate 2904.

Also, pay attention to the next logical expression.

MGF (seed) * [DB*MGF (seed)] = DB

The first item on the left side of the expression above is the value obtained by performing an operation of the output from the XOR gate 2904 in the mask generating function (MGF). The second item on the left side is the value stored in the second memory 2804. Thus, in order to obtain the data value DB, first the output from the XOR gate 2904 is input into the mask generating function (MGF) operating unit 2906 to obtain the output MGF (seed). Next, an XOR operation is performed by the XOR gate 2908 on the output MGF (seed) from the mask generating function (MGF) operating unit 2906 and the DB*MGF (seed) value stored in the second memory 2804.

FIG. 17 is a diagram illustrating an example of a key agitation processing unit configured using the optimal asymmetrical encryption encoding processing unit. In FIG. 16, the seed corresponds to the agitation value C in FIG. 14, and the DB corresponds to the secret key K.

The key agitation processing unit in FIG. 17 includes a wrapping processing unit 3000, a key storage unit 3100, and an unwrapping processing unit 3200.

The wrapping processing unit 3000 includes a mask generating function (MGF) operating unit 3002, a mask generating function (MGF) operating unit 3006, an XOR gate 3004, and an XOR gate 3008.

The key storage unit 3100 includes a first memory 3102 and a second memory 3104.

The unwrapping processing unit 3200 includes a mask generating function (MGF) operating unit 3202, a mask generating function (MGF) operating unit 3206, a XOR gate 3204, and a XOR gate 3208.

The agitation value C input into the wrapping processing unit 3000 is constantly updated.

The agitation value C is input into the mask generating function (MGF) operating unit 3002 to obtain the output MGF (C). The output MGF (C) is input into the XOR gate 3004, and an XOR with the secret key K is calculated to obtain the output K*MGF (C).

The output K*MGF (C) from the XOR gate 3004 is stored in the second memory 3104 in the key storage unit 3100, and at the same time, is input into the mask generating function (MGF) operating unit 3006. The result MGF (K*MGF (C)) is input into the XOR gate 3008, and an XOR with the agitation value C is calculated to obtain the output C*MGF (K*MGF (C)). The output C*MGF (K*MGF (C)) is stored in the first memory 3102 in the key storage unit 3100.

The key storage unit 3100 is configured by a non-volatile circuit. The value expressed as C*MGF (K* MGF (C)) is stored in the first memory 3102 of the non-volatile circuit, and the value expressed as K*MGF (C) is stored in the second memory 3104.

According to the challenge and response authentication algorithm illustrated in FIG. 14, the value of the agitation value C may be monitored from a device external to the authentication chip. However, even if a probe attack is performed on the value expressed by C*MGF (K*MGF (C)), the secret key K is not obtainable. This is because the value of the MGF (K*MGF (C)) is a value that is not understood by the attacker as long as probe attacks are not performed on all bits of the secret key K. In this way, the safety of the encryption processing device according to the present embodiment is guaranteed. However, the value K*MGF (C)) is vulnerable against probe attacks when stored in a non-volatile circuit. This is because the agitation value C may be monitored from a device external to the authentication chip, and so the attacker is able to calculate the value of MGF (C), probe attacks on the value K*MGF (C) stored in the second memory 3104 are the same as probe attacks on the secret key K which has not been agitated. This means that the Condition 1 and the Condition 2 are not satisfied. That is to say, even if the method illustrated in FIG. 16 is applied as it is to FIG. 14, there is a possibility that enough resistance against probe attacks may not be obtained.

Here, the high half of the bits of the secret key K are designated as K_{H}, the low half of the bits of the secret key K are designated as K_{L}, the high half of the agitation value C are designated as C_{H}, and the low half of the bits of the agitation value C are designated as C_{L}. Also, hereafter, bit combinations are represented by the symbol "|."

Then, by inputting the value of the combination of the high half bits, K_{H}||C_{H} as the seed value seed for the optimal asymmetrical encryption encoding processing unit, and the value of the combination of the low half bits K_{L}||C_{L} as the data value DB for the optimal asymmetrical encryption encoding processing unit, the previously described problem is avoided. By dividing the secret key K and the agitation value C, recombining and inputting this value again, the values stored in the storage unit are K_{H}||C_{H}*MGF (K_{L}||C_{L}) *MGF (K_{H}||C_{H}) and K_{L}||C_{L}*MGF (K_{H}||C_{H}). These values are obtained by the performing an operation of the KH and KL in the master generating function MGF, and the value of the naked secret key K is masked. Thus, as long as all bits of the value of the non-volatile circuit configuring a storage unit are not probed simultaneously, the attacker is not able to obtain the value of the secret key K.

As illustrated in FIG. 15, the key agitation processing unit includes a wrapping processing unit 2300, a key storage unit 2400, and an unwrapping processing unit 2500.

The high half of the bits of the secret key K are designated as K_{H}, the low half of the bits of the secret key K are designated as K_{L}, the high half of the agitation value C are designated as C_{H}, and the low half of the bits of the agitation value C are designated as C_{L}. Also, hereafter, bit combinations are represented by the symbol "||."

A memory 2602 stores the K_{H}||C_{H,} which is the bit combination of K_{H}, which is the high half bits of the secret key K, and the C_{H}, which is the low half bits of the agitation value C. The memory 2602 is connected to an update processing unit 2604. The update processing unit 2604 updates the C_{H}, which is the high half bits of the agitation value C stored in the memory 2602.

Also, a memory 2606 stores the K_{L}||C_{L}, which is the bit combination of K_{L}, which is the low half bits of the secret key K, and the C_{L}, which is the low half bits of the agitation value C. The memory 2606 is connected to an update processing unit 2608. The update processing unit 2608 updates the C_{L}, which is the low half bits of the agitation value C stored in the memory 2606.

The memory 2602 and memory 2606 are connected to the input terminal of the wrapping processing unit 2300.

A mask generating function (MGF) operating unit 2302 takes the value of K_{H}||C_{H} input into the wrapping processing unit 2300 from the memory 2602 and executes the mask processing. Then, an MGF (K_{H}|C_{H}) is generated. The MGF (K_{H}|C_{H}) is input into an XOR gate 2304. Then, an XOR is performed on the MGF (K_{H}|C_{H}) and the value K_{L}||C_{L} input into the wrapping processing unit 2300 from the memory 2606, that is to say, K_{L}||C_{L}*MGF (K_{H}||C_{H}) is calculated. Further, the output of the XOR gate 2304 is input into the key storage unit 2400, and at the same time, the mask processing is conducted by a mask generating function (MGF) operating unit 2306. Then, an MGF (K_{L}||C_{L}*MGF (K_{H}||C_{H}) is generated. An XOR gate 2308 performs an XOR of the MGF (K_{L}||C_{L}*MGF (K_{H}||C_{H}) and the value KH||CH input into the wrapping processing unit 2300 from the memory 2602, and the K_{H}||C_{H}*MGF (K_{L}||C_{L}*MGF (K_{H}||C_{H}) is calculated. The output of the XOR gate 2308 is input into the key storage unit 2400.

The key storage unit 2400 includes a first agitation key storage unit 2402 and a second agitation key storage unit 2404. The first agitation key storage unit 2402 stores the output K_{H}| (C_{H}*MGF (K_{L}| |C_{L}*MGF (K_{H}||C_{H}) from the XOR gate 2308. The second agitation key storage unit 2404 stores the output K_{L}||C_{L}*MGF (K_{H}||C_{H}) from the XOR gate 2304.

At the unwrapping processing unit 2500, a mask generating function (MGF) operating unit 2502 executes the mask processing on the value K_{L}||C_{L}*MGF (K_{H}||C_{H}) stored in the second agitation key storage unit 2404 in the key storage unit 2400. The result MGF (K_{L}||C_{L}*MGF (K_{H}||C_{H})) is generated. At an XOR gate 2504, an XOR is performed on the MGF (K_{L}||C_{L}*MGF (K_{H}||C_{H})) and the value K_{H}||C_{H}*MGF (K_{L}||C_{L}*MGF (K_{H}||C_{H}) stored in the first agitation key storage unit 2402 to obtain the output K_{H}||C_{H}. Further, at a mask generating function (MGF) operating unit 2506, the mask processing is conducted on this output K_{H}||C_{H} from the XOR gate 2504, and the result MGF (K_{H}||C_{H}) is generated. At an XOR gate 2508 an XOR is performed on the output MGF (K_{H}||C_{H}) from the mask generating function (MGF) operating unit 2506 and the value K_{L}||C_{L}*MGF (K_{H}||C_{H}) stored in the second agitation key storage unit 2404 to obtain the output K_{L}||C_{L}.

These outputs K_{H}||C_{H} and K_{L}||C_{L} may be stored again in the memory 2602 and the memory 2606, respectively.

In this way, the wrapping processing unit 2300 and the unwrapping processing unit 2500 each include two stages of mask generating function (MGF) operating units. The first configuration of the agitation function F (K, C) for the key agitation processing unit illustrated in FIG. 15 may satisfy the (Condition 1) and (Condition 2) regarding non-volatile circuits.

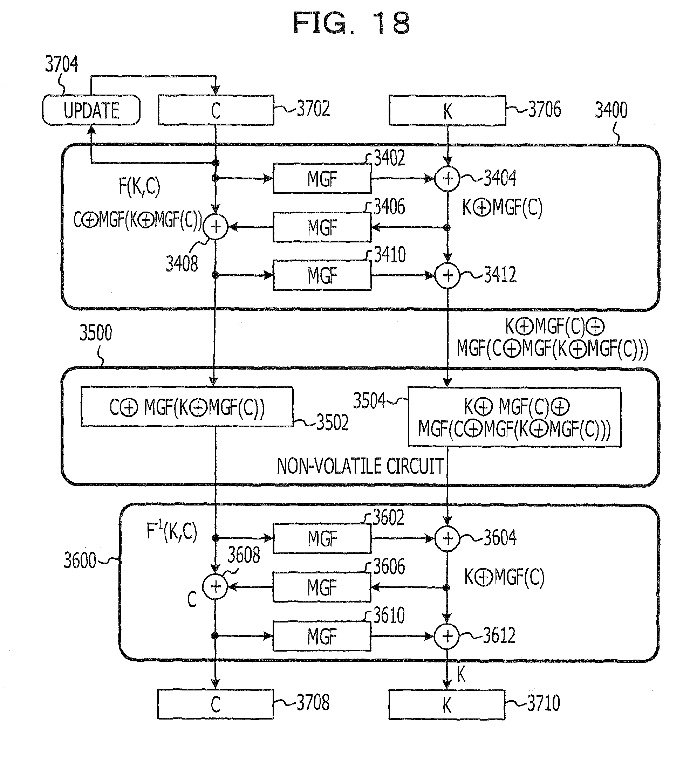

FIG. 18 is a diagram illustrating a second configuration of the agitation function F (K, C) regarding the key agitation processing unit for performing dynamic agitation processing on the key.

Regarding the configuration illustrated in FIG. 18, a wrapping processing unit 3400 and an unwrapping processing unit 3600 both include three stages of mask generating function (MGF) operating units. Also, with the configuration illustrated in FIG. 18, the division and recombination processing of the secret key K and the agitation value C is not performed, which is different from the configuration illustrated in FIG. 15. The reason for not performing the division and recombination processing of the secret key K and the agitation value C is because an attacker is not able to obtain the value of the key K as long as all bits in the non-volatile circuit are not simultaneously probed. That is to say, it is because the two values stored in the non-volatile circuit as the result of applying the mask generating function (MGF) three times are masked by the mask generating function (MGF) value to which the secret key K was input.

As illustrated in FIG. 18, the key agitation processing unit includes the wrapping processing unit 3400, a key storage unit 3500, and the unwrapping processing unit 3600.

The wrapping processing unit 3400 includes a mask generating function (MGF) operating unit 3402, a mask generating function (MGF) operating unit 3406, a mask generating function (MGF) operating unit 3410, an XOR gate 3404, an XOR gate 3408, and an XOR gate 3412.

The key storage unit 3100 includes a first memory 3502 and a second memory 3504.

The unwrapping processing unit 3200 includes a mask generating function (MGF) operating unit 3602, a mask generating function (MGF) operating unit 3606, a mask generating function (MGF) operating unit 3610, the XOR gate 3204, the XOR gate 3208, and an XOR gate 3612.

A memory 3702 stores the agitation value C. The memory 3702 is connected to an update processing unit 3704. The update processing unit 3704 updates the agitation value C stored in the memory 3702.

Also, a memory 3706 stores the secret key K.

The memory 3702 and the memory 3706 are connected to the input terminal of the wrapping processing unit 3400.

The mask processing is conducted by the mask generating function (MGF) operating unit 3402 on the agitation value C input into the wrapping processing unit 3400 from the memory 3702, and the MGF (C) is generated. The MGF (C) is input into the XOR gate 3404. An XOR is performed on the secret key K and the value input into the wrapping processing unit 3400 from the memory 3706, that is to say, K*MGF (C) is calculated. Further, the output of the XOR gate 3404 is input into the XOR gate 3412, and at the same time, the mask processing is conducted by the mask generating function (MGF) operating unit 3406, and an MGF (K*MGF (C)) is generated. The XOR gate 3408 performs an XOR of the MGF (K*MGF (C)) and the agitation value C input into the wrapping processing unit 3400 from the memory 3702, and the C*MGF (K*MGF (C)) is calculated. The output of the XOR gate 3408 is stored in the first memory 3502 of the key storage unit 3100. The mask processing is conducted by the mask generating function (MGF) operating unit 3410 on the C*MGF (K*MGF (C)), and an MGF (C*MGF (K*MGF (C))) is generated. The MGF (C*MGF (K*MGF (C))) is input into the XOR gate 3412. An XOR is performed on the output K*MGF (C) from the XOR gate 3404 and the MGF (C*MGF (K*MGF (C))), that is to say, the K*MGF (C)* MGF (C*MGF (K*MGF (C))) is calculated. The output of the XOR gate 3612 is stored in the second memory 3504 in the key storage unit 3100.

The key storage unit 3100 is configured by non-volatile memory. The first memory 3502 in key storage unit 3100 stores the value C*MGF (K*MGF (C)). The second memory 3504 in the key storage unit 3100 stores the value K*MGF (C)*MGF (C*MGF (K*MGF (C))).

At the unwrapping processing unit 3600, the mask generating function (MGF) operating unit 3602 executes the mask processing on the value C*MGF (K*MGF (C)) stored in the first memory 3502, and MGF (C*MGF (K*MGF (C))) is generated. At the XOR gate 3604, an XOR is performed on the MGF (C*MGF (K*MGF (C))) and the value K*MGF (C)*MGF (C*MGF (K*MGF (C))) stored in the first memory 3502 to obtain the output K*MGF (C). Further, at a mask generating function (MGF) operating unit 3606, the mask processing is conducted on this output K*MGF (C) from the XOR gate 3604, and the result MGF (K*MGF (C)) is generated. At the XOR gate 3608, an XOR is performed on the output K*MGF (C) from the mask generating function (MGF) operating unit 3606 and the value C*MGF (K*MGF (C)) stored in the first memory 3502 to obtain the output C. The mask processing is conducted by the mask generating function (MGF) operating unit 3610 on the output C from the XOR gate 3608 to generate an MGF (C). At the XOR gate 3612, and XOR is calculated on the MGF (C) and the output K*MGF (C) from the XOR gate 3604 to obtain the output K.

In addition to the configurations previously described, by configuring even more stages of the mask generating function (MGF) operating unit and using various configuration of the function F, probe attacks against non-volatile circuits may be inhibited.

<(ii) Countermeasures for Probe Attacks on Volatile Circuits>

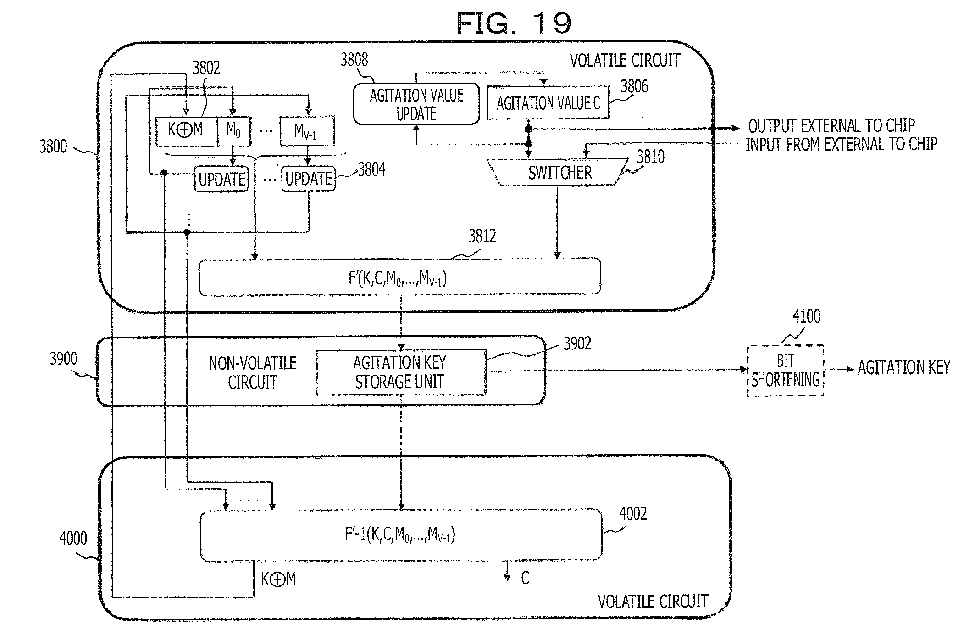

Countermeasures for probe attacks on volatile circuits will be described with reference to FIG. 19 through FIG. 33.

By using the configuration of the present embodiment illustrated in FIG. 15 and FIG. 18, (Condition 1) and (Condition 2) may be satisfied regarding non-volatile circuits. However, regardless of the configuration, volatile circuits hold the value of the secret key K as it is, and so the (Condition 1) and (Condition 2) may not be satisfied.

FIG. 19 is a diagram illustrating a second example of a functional block diagram illustrating a key agitation processing unit for performing dynamic agitation processing on the key.

The secret key K (shared key K) is masked by a value called the mask value. The mask value uses a V number of values M₀, M₁, ..., Mᵥ₋₁. The secret key K is masked using a mask value M that satisfies M = M₀*M₁*... *Mᵥ₋₁. Also, the masked value K*M is stored in a logic circuit. In the same way as the agitation value C, the mask value M is different for each authentication chip, and the value is constantly updated while the power is on. Similar to the agitation value, the mask value M is not a value that may be observed from a device external to the authentication chip, the value may only be used within the authentication chip. Even if an attacker performs a probe attack on a volatile circuit, the secret key K is masked by the mask value M, which is dynamically changing, and so the attacker is unable to know the value of the secret key K. Also, as the value of the mask value M is not directly stored in the circuit, for the attacker to know the mask value M, the V number of mask values M₀, M₁, ..., Mᵥ₋₁ have to be observed at the same timing. If this V value is more than the Q as in (Condition 1) and (Condition 2), the attacker is not able to perform probe attacks, and so the (Condition 1) and (Condition 2) may also be satisfied regarding volatile circuits.

As illustrated in FIG. 19, the key agitation processing unit includes a wrapping processing unit 3800, a key storage unit 3900, and an unwrapping processing unit 4000.

The wrapping processing unit 3800 includes a memory 3802 for storing the value K*M and the V number of mask values M₀, M₁, ..., Mᵥ₋₁, a first update processing unit (mask value update processing unit) 3804 for updating the V number of mask values M₀, M₁, ..., Mᵥ₋₁, a memory 3806 for storing the agitation value C, a second update processing unit (agitation value update processing unit) 3808 for updating the agitation value, a switcher 3810, and an agitation function operating unit F (K, C, M₀, M₁, ..., Mᵥ₋₁) 3812.

Using the value K*M and the V number of mask values M₀, M₁, ..., Mᵥ₋₁ stored in the memory 3802, the agitation value C stored in the memory 3806, and the agitation value C input from a device external to the authentication chip, the agitated secret key F' (K, M₀, M₁, ..., Mᵥ₋₁) are obtained as output of the agitation function operating unit F (K, C, M₀, M₁, ..., Mᵥ₋₁) 3812.

The key storage unit 3900 is configured by a non-volatile circuit, and includes an agitation key storage unit 3902. The agitated secret key F' (K, M₀, M₁, ..., Mᵥ₋₁) is stored in the agitation key storage unit 3902 in the key storage unit 3900.

The unwrapping processing unit 4000 includes an inverse function operating unit 4002. Using an inverse function agitation function F' -1 (K, M₀, M₁, ..., Mᵥ₋₁) of the agitation function F' (K, M₀, M₁, ..., Mᵥ₋₁), the inverse function operating unit 4002 obtains the value K*M and the agitation value C from the value stored in the agitation key storage unit 3902.

The output K*M from the inverse function operating unit 4002 may be stored in the memory 3802.

The mask value is a value that may not be observed externally from the chip. That is to say, according to the protocols illustrated in FIG. 10, FIG. 11, FIG. 12, and FIG. 13, the mask value may not be synchronized between the main device and the secondary device. Authentication based on the mask value, which may not be synchronized, may not be performed. That is to say, regarding the authentication protocols illustrated in FIG. 10 through FIG. 13, the result of the key agitation processing is not affected by the mask value.

Thus, the following condition is requested.

(Condition 3) The result of the key agitation processing is not affected by the mask value.

However, if a key agitation processing is performed including the mask generating function MGF, the operation of the mask generating function (MGF) on the value of the masked key is affected by all bits of the mask value, and the key agitation processing may produce changes that are not predictable at the main device, which is the side performing authentication. When the key agitation function F' (K, M₀, M₁, ..., Mᵥ₋₁) is affected by all bits of the mask value and produces changes which are not predictable, removing the mask value from this calculation result is very difficult. Therefore, it is preferable that the key agitation result expressed by F' (K, M₀, M₁, ..., Mᵥ₋₁) is not affected by the mask value, and changes only affected by the secret key K and agitation value C. The inverse function of the key agitation function F' is expressed as F'⁻¹ (K, M₀, M₁, ..., Mᵥ₋₁), but the masked secret key K*M is output having been affected by the updated mask values M₀, M₁, ..., Mᵥ₋₁.

Thus, a processing called MGF pre-complication is added before the operation of the mask generating function (MGF) used within the key agitation processing unit. The MGF pre-complication processing is a bit transposing processing that determined by the secret key K and the agitation value C.

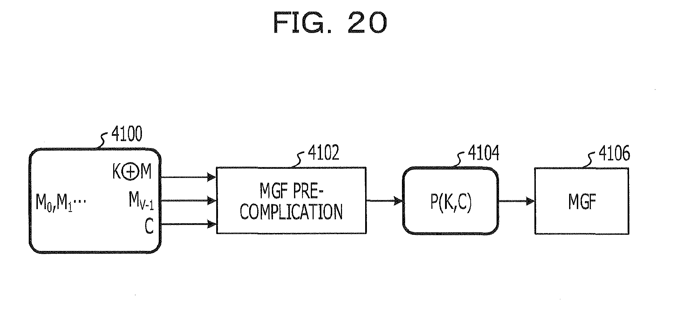

FIG. 20 is a functional block diagram of a key agitation processing unit for performing dynamic agitation processing on the key including an MGF pre-complication processing using a mask generating function MGF.

An input set 4100 in input into an MGF pre-complication processing unit 4102, and an MGF pre-complication processing result P (K, C) 4104 is output. Then, the MGF pre-complication processing result P (K, C) 4104 is input into a mask generating function (MGF) operating unit 4106.

The next information describes the inputs and outputs of the MGF pre-complication processing.

Input: the masked secret key K*M, the V number of mask values M₀, M₁, ..., Mᵥ₋₁, and the agitation value C

Output: the MGF pre-complication processing result P (K, C)

The conditions requested regarding the MGF pre-complication processing is as follows.

(Complication 1) The V number of mask values M₀, M₁, ..., Mᵥ₋₁ is larger than the Q appearing in (Condition 1) and (Condition 2).

(Complication 2) Even if the agitation value C is known from the value of P (K, C), the input value K is not obtainable.

When the above (Complication 1) and (Complication 2) conditions are satisfied, the MGF pre-complication processing result P (K, C) is not affected by the mask value, and even if the agitation value C is known, it is very difficult to obtain the secret key K from the P (K, C).

As a probe attack on volatile circuits, probe attacks on the input side and probe attack on the output side are conceivable. Regarding the input side, the secret key K is masked by the V number of mask values M₀, M₁, ..., Mᵥ₋₁, and so this is made safe by setting the V higher than the Q in (Condition 1) and (Condition 2). Probe attacks on the output side are safe due to the nature in which the input value K may not be obtained from the value of P (K, C) even if the agitation value C is known.

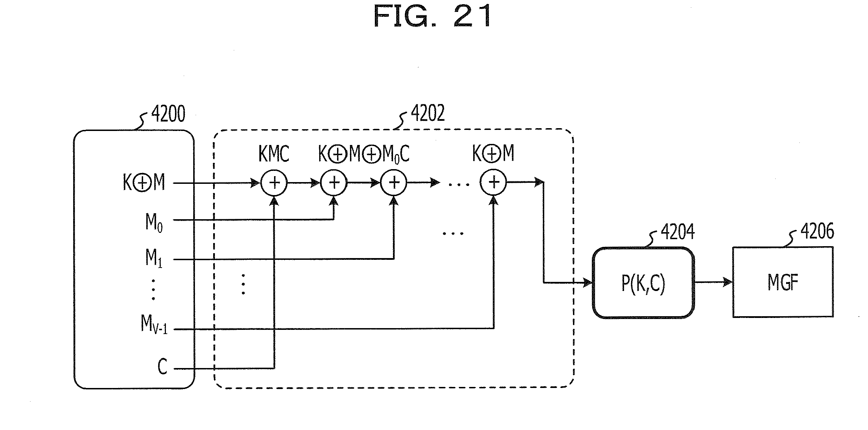

FIG. 21 is a diagram illustrating a first configuration of the key agitation processing unit for performing dynamic agitation processing on the key including an MGF pre-complication processing unit using a mask generating function MGF.

According to the configuration illustrated in FIG. 21, an input set 4200 is input into an MGF pre-complication processing unit 4202, and an MGF pre-complication processing result P (K, C) 4204 is output. Then, the MGF pre-complication processing result P (K, C) 4204 is input into the mask generating function (MGF) operating unit 4206.

First, at the MGF pre-complication processing unit 4202, an XOR is calculated on the masked secret key K*M and the agitation value C. Afterwards, in order to remove the effect of the mask values M₀*M₁ ...*Mᵥ₋₁, the XOR calculation is repeated in the order M₀, M₁, ..., Mᵥ₋₁. Finally, the output K*C is obtained.

However, if the agitation value C is known, it is possible to calculate the secret key K or the value of P (K, C) = K*C. Thus, the configuration illustrated in FIG. 21 does not satisfy the previously described condition (Complication 2).

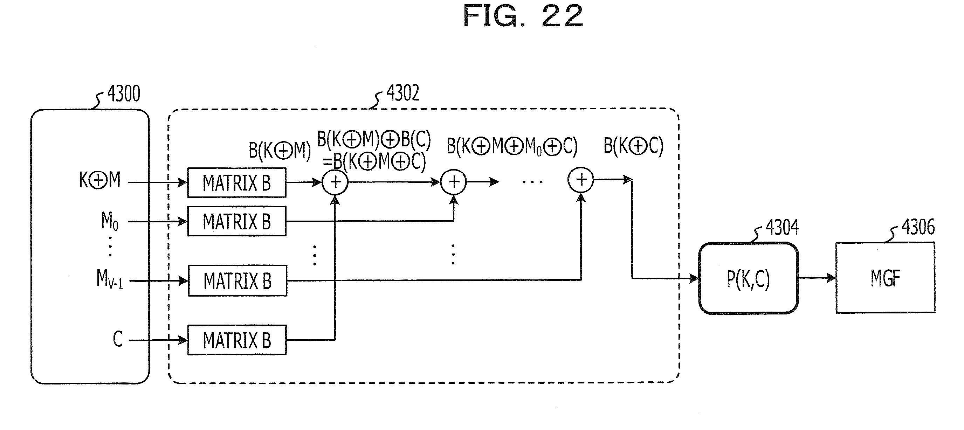

FIG. 22 is a diagram illustrating a second configuration of the key agitation processing unit for performing dynamic agitation processing on the key including an MGF pre-complication processing unit using a mask generating function MGF. According to the key agitation processing unit illustrated in FIG. 22, a further improvement with a matrix operation has been added to the configuration of the key agitation processing unit illustrated in FIG. 21.

According to the configuration illustrated in FIG. 22, an input set 4300 is input into an MGF pre-complication processing unit 4302, and an MGF pre-complication processing result P (K, C) 4304 is output. Then, the MGF pre-complication processing result P (K, C) 4304 is input into the mask generating function (MGF) operating unit 4306.

First, at the MGF pre-complication processing unit 4302, an XOR is calculated on the masked secret key K*M and the agitation value C. Afterwards, in order to remove the effect of the mask values M₀*M₁* ... *Mᵥ₋₁, the XOR calculation is repeated in the order M₀, M₁, ..., Mᵥ₋₁. However, in this example, before all of the XOR calculations, by operating a matrix B and then executing the XOR calculations, the level of complexity is increased. For example, at the stage to calculate the K*M*M₀ at the MGF pre-complication processing unit 4202 in FIG. 21, a B (K*M) *B (M₀) is calculated at the MGF pre-complication processing unit 4302. The final calculation result of the MGF pre-complication processing unit 4302 is P (K, C) = B (K*C).

However, this matrix operation has a linearity related to the XOR calculation. That is to say, P (K, C) = B (K*C) = B (K) *B (C) becomes the result.

As obtaining the value B (C) from the agitation value C is easy, an attacker is able to obtain the value of B (K) by performing a probe attack on P (K, C).

Also, as obtaining the matrix B is not difficult for the attacker, it is possible to calculate the secret key K from the B (K) by using an inverse matrix of the matrix B. Thus, the configuration illustrated in FIG. 22 does not satisfy the previously described condition (Complication 2). Therefore, the configuration illustrated in FIG. 22 does not satisfy the previously described (Condition 1) and (Condition 2).

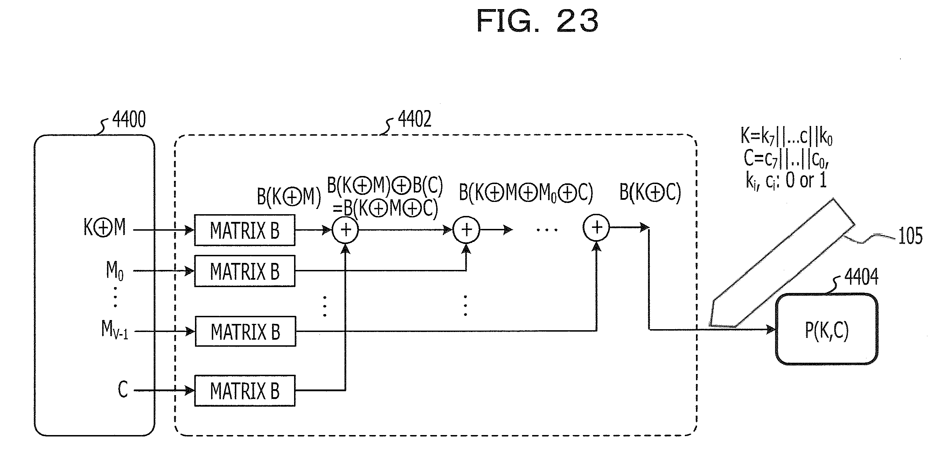

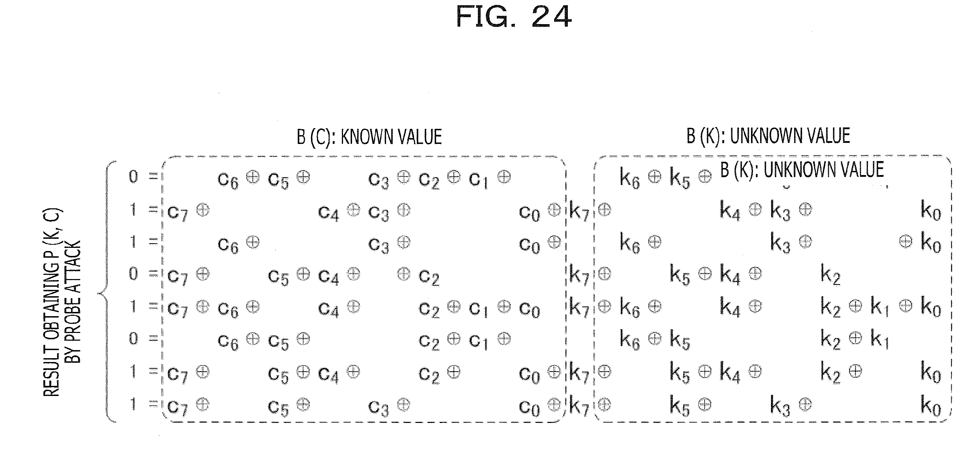

The difficulty in simultaneously satisfying the (Condition 1), (Condition 2), and (Condition 3) will be described with reference to FIG. 23 and FIG. 24.

FIG. 23 is a first diagram illustrating an overview of a probe attack on the key agitation processing unit for performing dynamic agitation processing on the key including an MGF pre-complication processing using a mask generating function MGF. FIG. 24 is a second diagram illustrating an overview of a probe attack on the key agitation processing unit for performing dynamic agitation processing on the key including an MGF pre-complication processing using a mask generating function MGF.

As illustrated in FIG. 23 and FIG. 24, according to a configuration using a calculation of an easy formulation using the XOR calculation or matrix as illustrated in FIG. 21 and FIG. 22, the linearity or other relationship with the calculation result may be used. Thus, these configurations are able to satisfy (Condition 3) as the effect of the mask values may be easily removed. However, the relationship between the input and the output of the MGF pre-complication processing is easy for the attacker to formulate, which makes it easy to obtain the input from the output, and so the (Condition 1) and (Condition 2) may not be satisfied. That is to say, according to the MGF pre-complication processing illustrated in FIG. 23, as illustrated in FIG. 24, the relational expression between the input and output is definitive and easily attacked.

In contrast, when using an MGF pre-complication processing in which a hash function or other is difficult to formulate, obtaining the input from the output is difficult, and so it is possible to satisfy the (Condition 1) and (Condition 2), but removing the effect of the mask values becomes very difficult, and the (Condition 3) may not be satisfied.

Therefore, an MGF pre-complication processing is desired which simultaneously satisfies both the nature of removing the effect of the mask values, and the nature of not being able to obtain the input from the output, which are difficult to establish together.

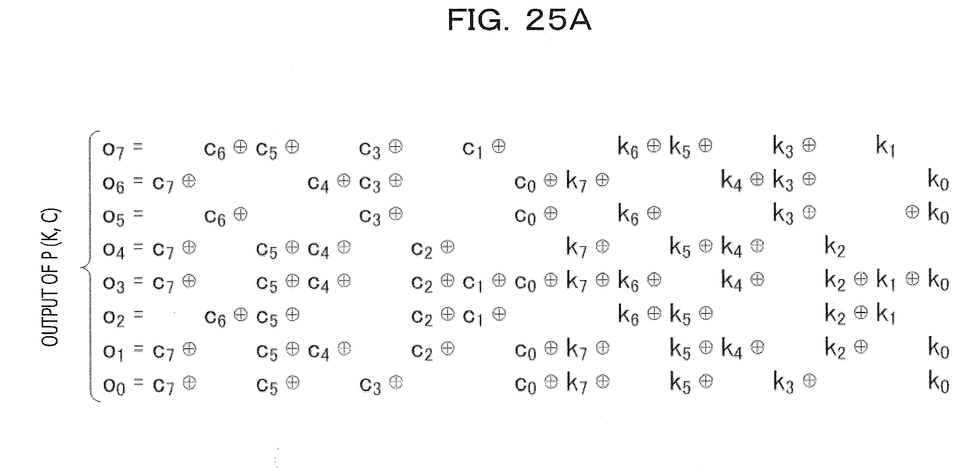

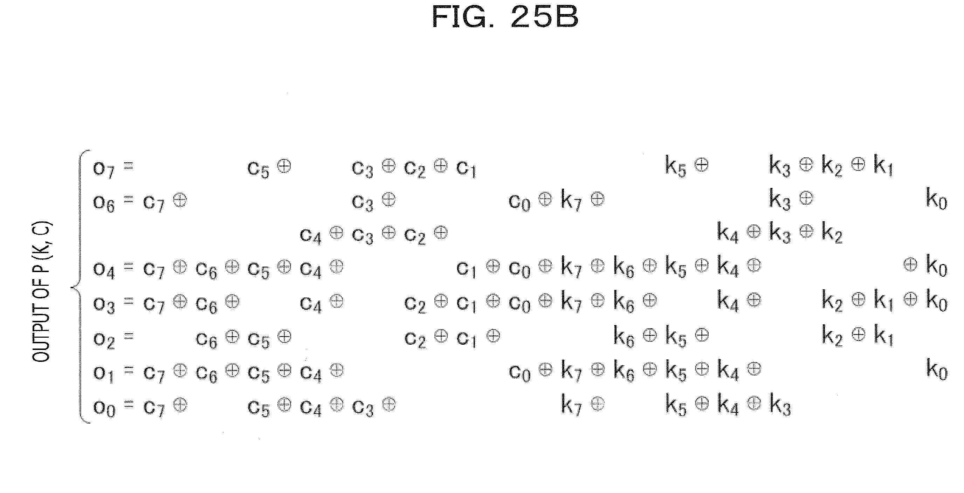

FIG. 25A and FIG. 25B are diagrams describing an example of the key agitation processing unit for performing dynamic agitation processing on the key including an MGF pre-complication processing using a mask generating function MGF.

According to the examples illustrated in FIG. 25A and FIG. 25B, a bit transposing processing is executed depending of the value of the secret key K and the agitation value C. The relationship of the output regarding the input is changed depending on the exponential number of patterns formed from the bit values of the secret key K and the agitation value C, and so as long as all bit values of the secret key K are not known by the attacker, the relationship of the output regarding the input may not be specified, and so is safe. Also, formulating the bit transposing is difficult, and has an advantage of suppressing attacks.

In order to achieve the basic ideas illustrated in FIG. 25A and 25B, the result of the bit transposing processing desirably depends on the values of the secret key K and agitation value C, but there is a restriction in that it may not be dependent on the mask values.

Thus, a circuit described below called a swapping box is used in the MGF pre-complication processing.

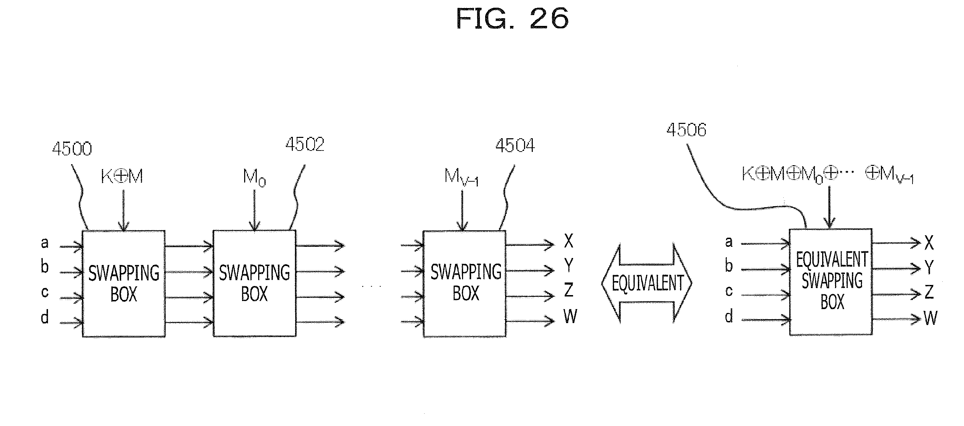

FIG. 26, FIG. 27, FIG. 28, and FIG. 29 are diagrams describing the configuration and nature of the swapping box.

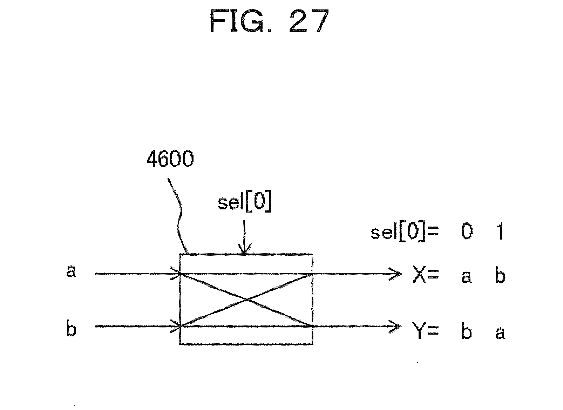

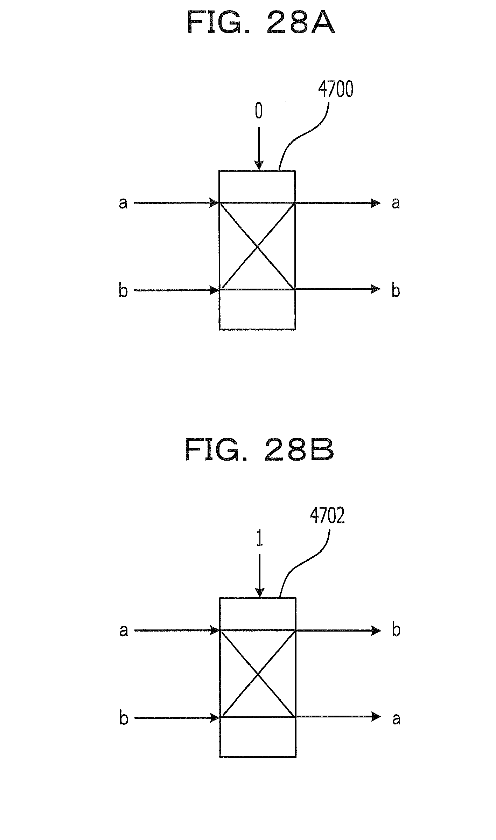

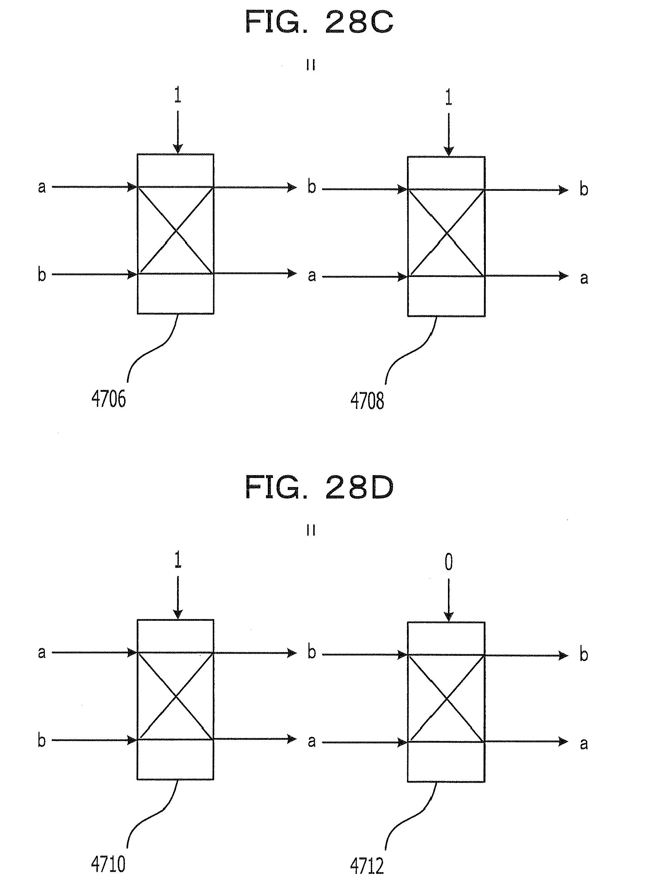

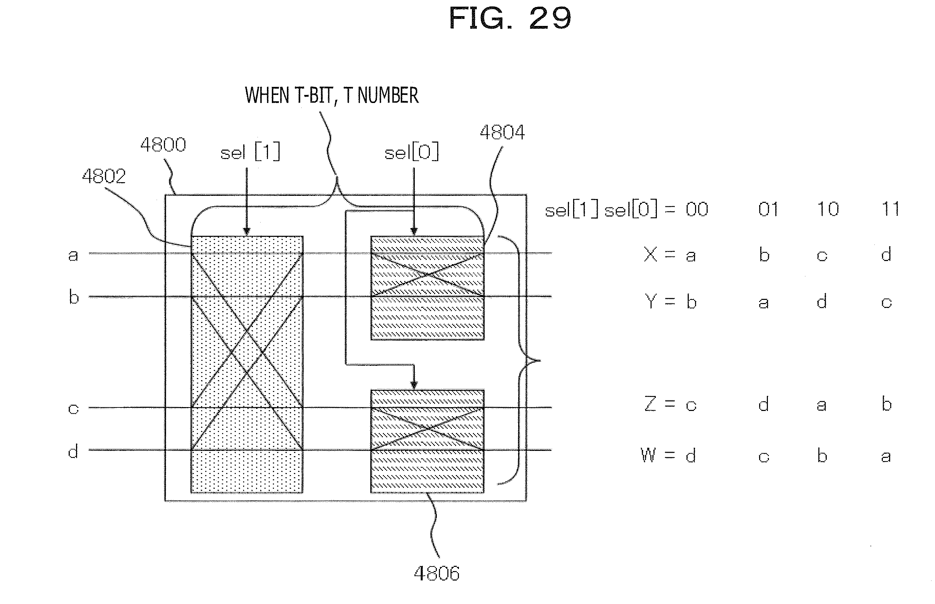

FIG. 26 is a diagram illustrating the nature of the swapping box. FIG. 27 is a diagram illustrating a configuration example of a 1-bit swapping box 4600. FIG. 28A is a first diagram illustrating an operation example of a 1-bit swapping box 4700. FIG. 28B is a second diagram illustrating an operation example of a 1-bit swapping box 4702. FIG. 28C is a first diagram illustrating an operation example of a multi-stage 1-bit swapping box configured from a 1-bit swapping box 4706 and a 1-bit swapping box 4708. FIG. 28D is a second diagram illustrating an operation example of a multi-stage 1-bit swapping box configured from a 1-bit swapping box 4710 and a 1-bit swapping box 4712. FIG. 29 is a diagram illustrating a configuration example of a 2-bit swapping box 4800.

The swapping box is a circuit that performs bit transposing depending on a selector signal. Also, it has the following nature.

(Swapping Box Nature 1) The result of the bit transposing when connecting multiple swapping boxes in series and all values of each selector signal input into the multiple swapping boxes is the same as the result when an XOR calculated value is input as the selector signal for one swapping box.

For example, as illustrated in FIG. 26, the bit transposing result when a (V+1) number of swapping boxes are connected in series, and selector signals K*M, M₀, M₁,..., Mᵥ₋₁ are assigned to each of these is the same as the bit transposing result when the selector signals K*M, M₀, M₁, ..., Mᵥ₋₁ are assigned to one swapping box. Further, when considering that M*M₀*M₁*,...*Mᵥ₋₁, = 0, this is the same as when K is assigned as the selector signal for one swapping box. That is to say, the mask values are removed from the secret key K, and at the same time, the bit transposing dependent on the secret key K may be achieved.

When the bit length of the selector signal input into the swapping box is T bits, the swapping box is called a T-bit swapping box.

FIG. 27A is a diagram illustrating a configuration example of a 1-bit swapping box 4600.

FIG. 28A is a diagram illustrating an operation example of a 1-bit swapping box. FIG. 28B is a diagram illustrating an operation example of a 1-bit swapping box 4702.

As illustrated in FIG. 27, the 1-bit swapping box receives two inputs a and b, and returns outputs X and Y. When the 1-bit selector signal is zero, bit transposing is not performed, and X = a, Y = b is output. When the 1-bit selector signal is one, the 1-bit swapping box outputs the result of the bit transposing, which is X = b, Y = a. That is to say, the 1-bit swapping box performs the following operation. When the selector signal is zero, the bit transposing is not executed. When the selector signal is one, the bit transposing is executed. This is similar to a condition in which regarding the XOR calculation of x*y between x and y, which are 1-bit values, when y = 0, there is no bit transposition of the x value. When y = 1, the value of x is bit transposed.

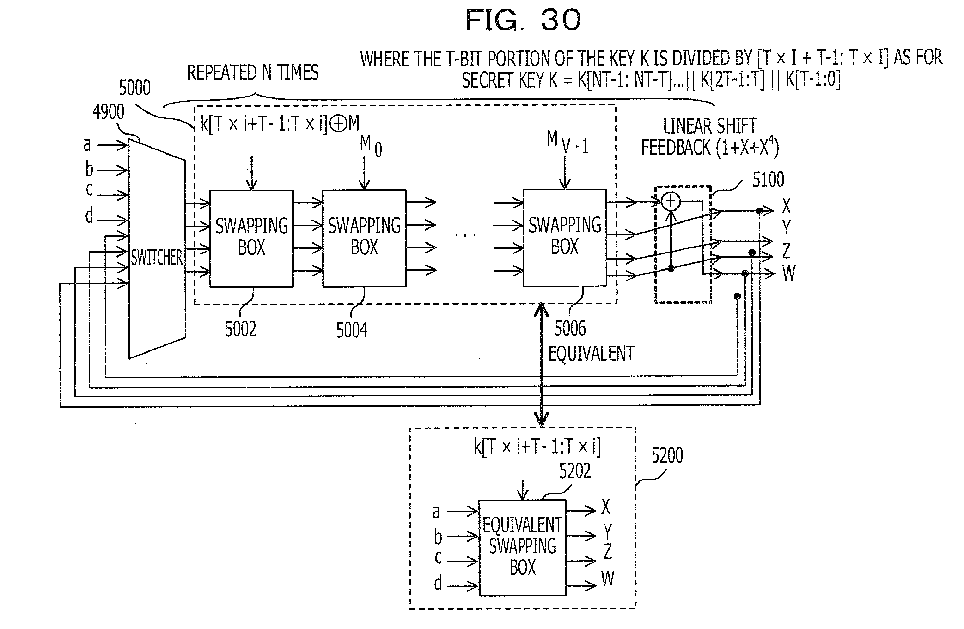

That is to say, the selector signal has the same nature as the XOR calculation, and as illustrated in FIG. 30, the bit transposing result from a multi-stage swapping box is equivalent to the bit transposing result from one swapping box when an XOR was calculated on the selector signal.

FIG. 29 is a diagram illustrating a configuration example of a 2-bit swapping box.

Two inputs of a, b, c, and d are received, and X, Y, Z, and W are returned as the output. Among the 2-bit selector signals sel [1] and sel [0], when the sel [1] is one, bit transposing is performed on a, b and c, d at the first state selector circuit, and when the sel [1] is zero, bit transposing is not performed. That is to say, when the sel [1] is zero, from the processing result of the first stage selector circuit, the a, b pair is input into the high side of the second state selector circuit, and the c, d pair is input into the lower side of the second state selector circuit. When the sel [1] is one, the c, d pair is input into the high side of the second stage selector circuit, and the a, b pair is input into the lower side of the second stage selector circuit.

When the sel [0] is one, bit transposing is performed to switch the bit positions of each pair of a and b, and c and d, and when the sel [0] is zero, bit transposing is not performed. By using this kind of configuration, even when the selector signal is two bits, the bit transposing result of a multi-stage swapping box is equivalent to the bit transposing result from one swapping box when an XOR was calculated on the selector signal.

By performing a similar extension, an arbitrary T-bit swapping box may be easily configured, and the bit transposing result from a multi-stage swapping box is equivalent to the bit transposing result from one swapping box when an XOR was calculated on the selector signal. That is to say, bit transposing dependent on the value of the key is performed, and at the same time, the key mask may be removed, and so the (Condition 1), (Condition 2), and (Condition 3) may be simultaneously satisfied.

However, as illustrated in FIG. 29, as the circuit scale of the T-bit swapping box is proportional to T×2^{(T-1)}, it may not be easy to increase the bit length of the selector signal.

FIG. 30 is a diagram illustrating a configuration example of a multi-stage T-bit swapping box.

Using the configuration illustrated in FIG. 30, by repeating the bit transposing multiple times depending on a T-bit value of a portion of the secret key K, bit transposing dependent on all bit values of the secret key K may be achieved.

That is to say, the secret key K is divided as an n number of T-bit portions key K = k [nT - 1 : nT-T]||...||k[2T-1 : T]||...||[T-1 :0]. By repeating the bit transposing processing of the multi-stage swapping box using the T-bit portion key k [T × i + T - 1 : T × i] for n times, the swapping box processing receiving the effect of all bits of the secret key K is achieved. As illustrated in FIG. 30, a linear feedback processing is performed as the post processing of the multi-stage swapping box processing repeated for n times.

Without this processing, the result of multi-stage swapping box processing repeated for n times is the performance of the bit transposing processing dependent on the T-bit portion key XOR calculation result k [nT - 1 : nT - T]*...*k [2T - 1 : T]*k [T - 1 : 0], and so number of patterns obtainable from the bit transposing result is limited to 2T. For example, when T = 4, at most 24 = 16 patterns, which is easily attacked. Thus, in order to exponentially increase the bit transposing result dependent on the obtainable value of K, the linear feedback processing has to be performed after the multi-stage swapping box processing.

The input into the swapping boxes illustrated in FIG. 26 through FIG. 30 (for example, a, b, c, and d) may be constants, agitation values, or masked secret key K*M values. When it is the masked secret key, the effect of the mask has to be removed, but it is easy to remove this mask.

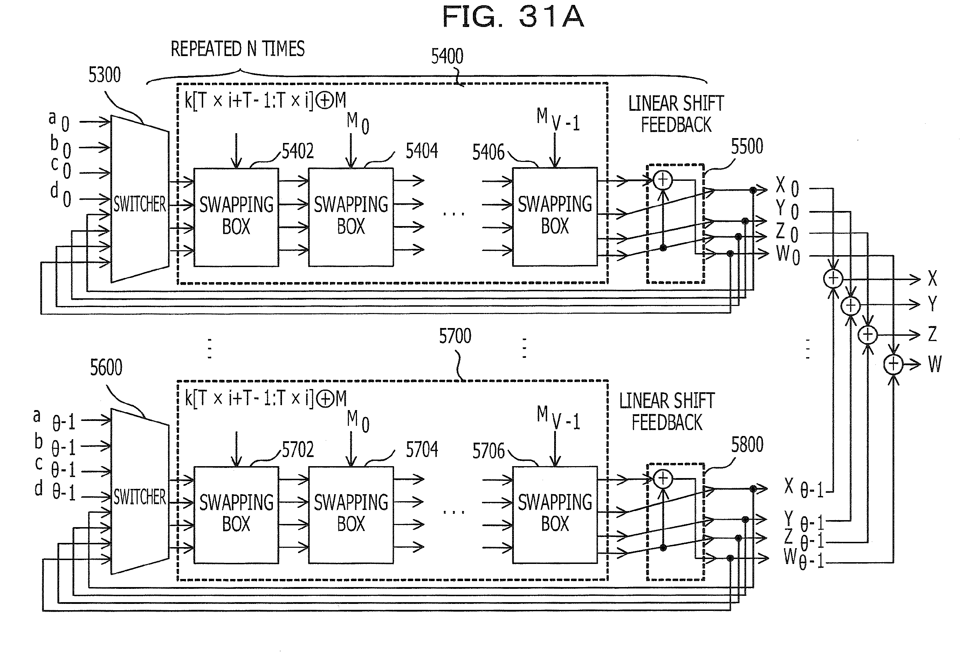

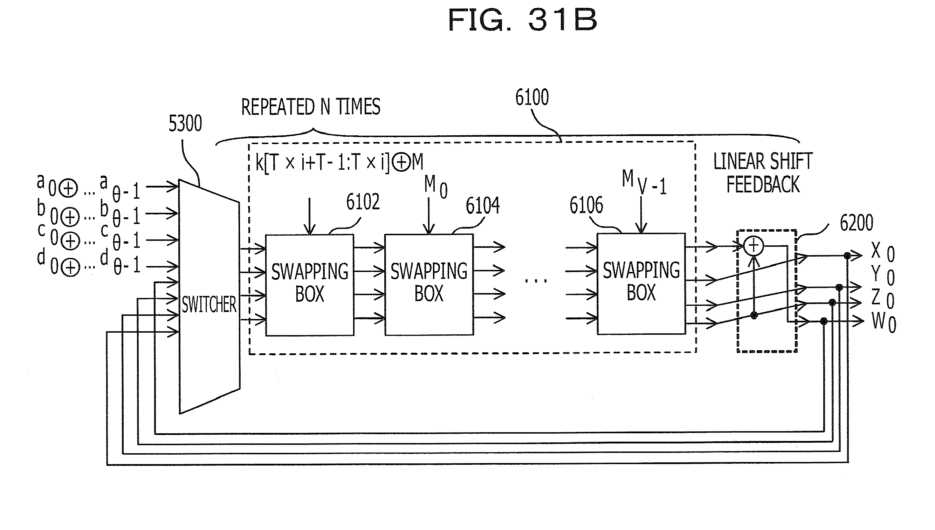

FIG. 31A and FIG. 31B are diagrams illustrating the nature of the multi-stage T-bit swapping boxes.

The result from the XOR calculation of all output from the number of inputs illustrated in FIG. 31A assigned to the swapping box is the same as the output when the XOR calculation values all of these multiple inputs as illustrated in FIG. 31B are assigned to the swapping box. However, the selector signal assigned to the swapping box at this time has to be the same as for the multiple number of inputs.

That is to say, the swapping box processing result when the masked secret key K*M is input into the swapping box and the XOR calculation result of the swapping box processing result when each value M₀, M₁, ..., Mᵥ₋₁ is input, are the same as the output when the secret key K is assigned to the swapping box.

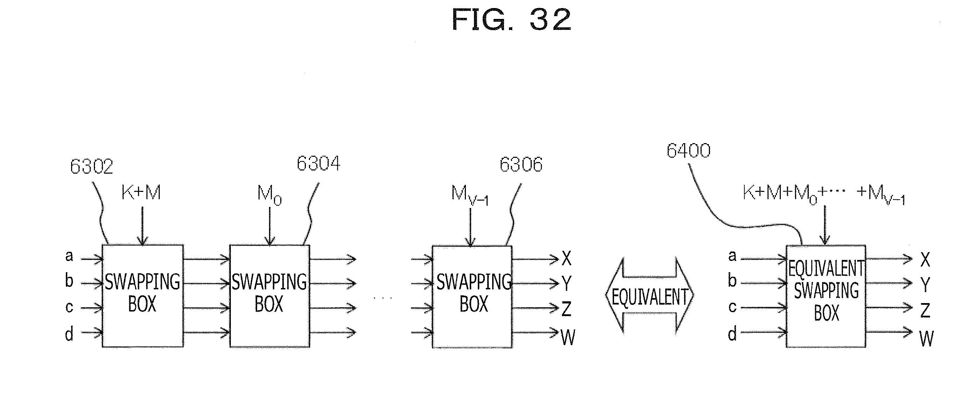

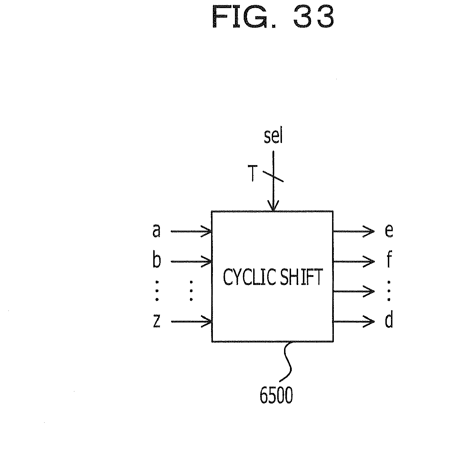

In addition to the swapping boxes illustrated in FIG. 26 through FIG. 29, there are other configuration examples of swapping boxes. Other configuration examples are illustrated in FIG. 32 and FIG. 33.

FIG. 32 is a diagram illustrating the nature of an additive swapping box. FIG. 33 is a diagram illustrating the nature of the T-bit swapping box.

The swapping boxes illustrated in FIG. 32 and FIG. 33 have the following nature.

(Swapping Box Nature 2)

The result of the bit transposing when multiple swapping boxes are connected in series and the value of adding the value of all selector signals for each input into the multiple swapping boxes is the same as the result when the selector signal for one swapping box is input.

For example, as illustrated in FIG. 32, the result of bit transposing when a (V + 1) number of swapping boxes are connected in series, and the K*M*M₀ *M₁, *...*Mᵥ₋₁ for each box is assigned as the selector signal is the same as when K*M, M₀, M₁, ..., Mᵥ₋₁ is assigned as the selector signal for one swapping box. Further, by adjusting the relationship of the mask values to be M = K*M*M₀*M₁*...*Mᵥ₋₁, this is the same as when the K is assigned as the selector signal to one swapping box. That is to say, the mask related to the key K is removed, and at the same time, the bit transposing dependent on the key K may be achieved. As illustrated in FIG. 33, the swapping box having this kind of nature may be achieved by a cyclic shift circuit using the value of the selector signal as a shift bit number. It is obvious that the result of cyclic shifting the data z with the x bit and the result of cyclic shifting with the y bit is the same as the result of cyclic shifting the data z with the x + y bit, and so the bit transposing result of the multi-stage swapping box is the same as the bit transposing result of one swapping box that has added all selector signals for the multi-stage swapping box.

<First Embodiment>

The embodiment is configured from the combination of the three classes, (i) Classes of Countermeasures for Probe Attacks on Non-Volatile Circuits, (ii) Classes of Countermeasures for Probe Attacks on Volatile Circuits, and (iii) Classes of Mask Calculations of Secret Keys. Hereafter, five embodiments will be described according to this combination. However, the combination of (i) Classes of Countermeasures for Probe Attacks on Non-Volatile Circuits, (ii) Classes of Countermeasures for Probe Attacks on Volatile Circuits, and (iii) Classes of Mask Calculations of Secret Keys is not limited to the following embodiments.

The first Embodiment is an embodiment of the following combination.

(i) Countermeasures for Probe Attacks on Non-Volatile Circuits: uses the configuration in FIG. 15

(ii) Countermeasures for Probe Attacks on Volatile Circuits: uses the swapping box in FIG. 30

(iii) Classes of Mask Calculations of Secret Keys: XOR calculation

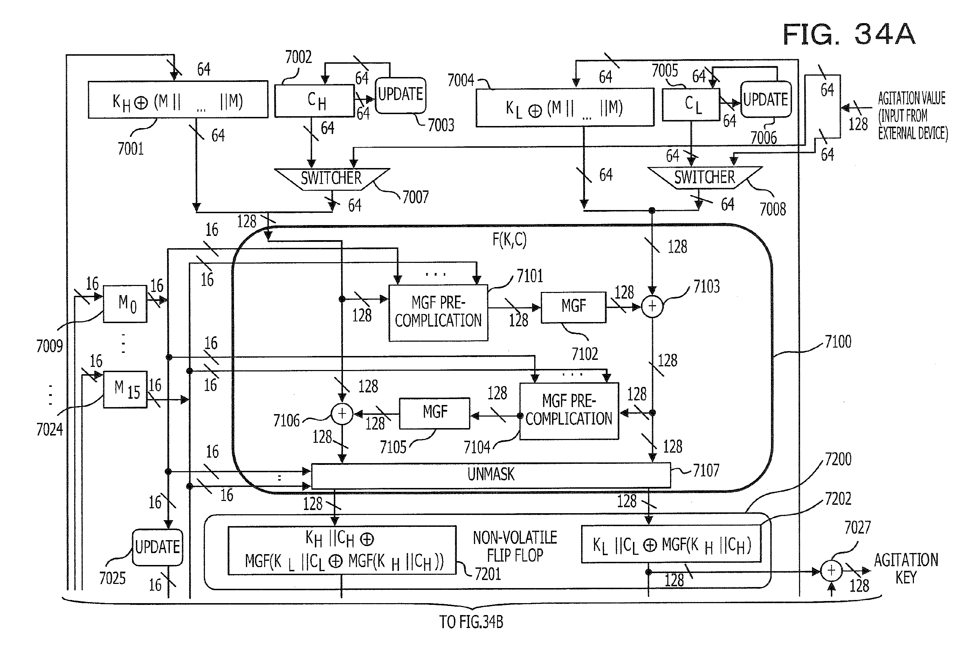

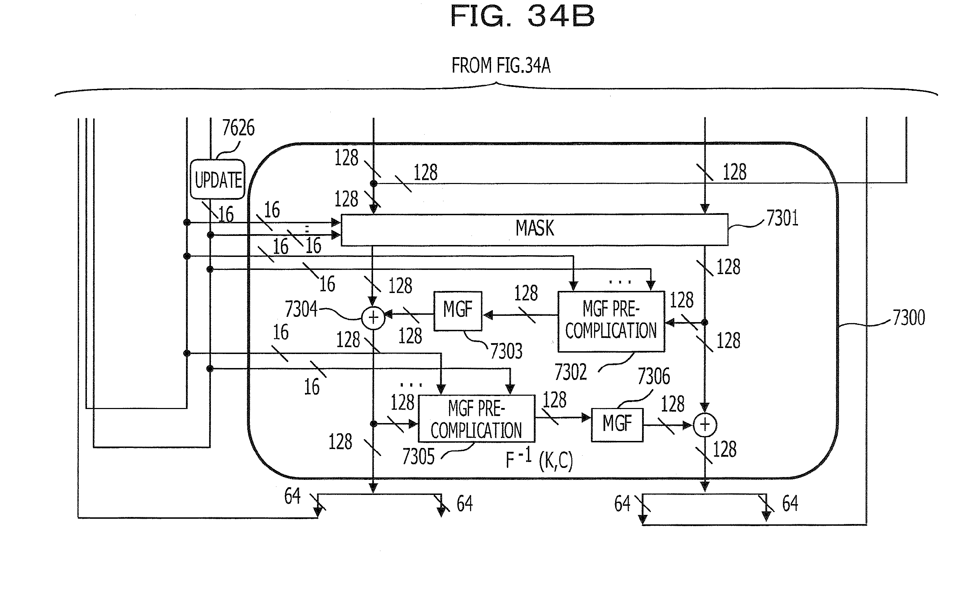

FIG. 34A and FIG. 34B are diagrams illustrating an example of the overall configuration of a first Embodiment.

In FIG. 34, the 128-bit secret key K is divided into a K_{H} of the higher 64 bits and a K_{L} of the lower 64 bits. Masked by a 16-bit mask value M, a data K_{H}* (M||M||M||M) and K_{L}* (M||M||M||M) are stored in a 64-bit register 7001 and a 64-bit register 7004. Also, the 128-bit agitation value C is divided into a C_{H} of the higher 64 bits and a C_{L} of the lower 64 bits. Also, the C_{H} and C_{L} are stored in a 64-bit register 7002 and a 64-bit register 7005.

The mask value M is not directly stored in a register, an Mi satisfying M₀*M₁*...*M₁₅ = M (i is an integer from 0 to 15) are each stored in 16-bit registers 7009 through 7024. The 16-bit registers 7009 through 7024 may also function as updating units 7009 through 7024. The result of performing the processing to operate the key agitation function F (K, C) on these values is stored in two 128-bit registers, a non-volatile register 7201 and a non-volatile register 7202, and these two values are used as the 128-bit agitation key as the result of the XOR calculation with these two values as the input.

To calculate the value of the key agitation function F (K, C), processing is performed at an MGF pre-complication processing unit 7101, an MGF pre-complication processing unit 7104, an MGF operating unit 7102, an MGF operating unit 7105, an XOR gate 7103, and an XOR gate 7106. The K_{H}* (M||M||M||M), the C_{L} bit combination value, which is the lower 64 bits of the 128-bit agitation value C, and the Mi are input into the MGF pre-complication processing unit 7101. Then, the previously described MGF pre-complication processing is performed. The result is input into the MGF operating unit 7102. At the MGF pre-complication processing unit 7101 and the MGF pre-complication processing unit 7104, the processing is performed so that the processing result is not affected by the Mi values.

However, the output of the XOR gate 7103 and the XOR gate 7106 are affected by the 64-bit register 7002 and the 64-bit register 7005, and so are affected by the mask value M. In order to remove this effect, the output of the XOR gate 7103 and the XOR gate 7106 are input into an unmasking processing unit 7107, where the unmasking processing is conducted. The unmasking processing unit 7107 removes the effect of the mask value M by receiving the M₁, ..., M₁₅ and performing a sequential XOR calculation. As a result, this value is stored in the non-volatile flip flop 7201 and 7202, which are not affected by the mask value M.

Once the calculation of the key agitation function F (K, C) is complete, in order to execute the next key agitation processing, the update processing of the agitation value C and the mask value Mi is performed. The higher 64 bits of the agitation value C, or C_{H}, is executed by an updating unit 7003, and the lower 64 bits of the agitation value C, or C_{L}, is executed by an updating unit 7006. Also, the updating of the mask value Mi is executed by updating units 7009 through 7024.

When the agitation value C and the mask value Mi are updated, the masked data K_{H}* (M||M||M||M) and K_{L}* (M||M||M||M) stored in the 64-bit register 7001 and the 64-bit register 7004 are updated, and so the calculation of the inverse agitation function F⁻¹ (K, C), which is the inverse function of the agitation function F (K, C), is performed.

First, at a masking processing unit 7301, masking of the values stored in the non-volatile flip flop 7201 and the non-volatile flip flop 7202 is performed using the updated mask value Mi. This processing is executed by sequentially operating the XOR calculation of the values K_{H}||C_{H}*MGF (K_{L}||C_{L}*MGF (K_{H}||C_{H})) and K_{L}||C_{L}*MGF (K_{H}||C_{H}) stored in the non-volatile flip flop 7201 and non-volatile flip flop 7202 with the updated mask value Mi.

In order to calculate the inverse agitation function F⁻¹ (K, C), processing is performed at an MGF pre-complication processing unit 7303, an MGF pre-complication processing unit 7306, an MGF pre-complication processing unit 7302, an MGF pre-complication processing unit 7305, an XOR gate 7304, and an XOR gate 7307.

The output K_{H}||C_{H}*MGF (K_{L}||C_{L}*MGF (K_{H}||C_{H})) from the non-volatile flip flop 7202 and the updated mask value Mi is input into the MGF pre-complication processing unit 7302. The output from the MGF pre-complication processing unit 7302 is input into the MGF processing unit 7303.

The output K_{H}||C_{H}*MGF (K_{L}||C_{L}*MGF (K_{H}||C_{H})) from the non-volatile flip flop 7201 and the output from the MGF operating unit 7303 is input into the XOR gate 7304, and an XOR calculation is performed. The higher 64 bits of the 128-bit output from the XOR gate 7304 is stored as the new value in the 64-bit register 7001.

The output K_{H}||C_{H}*MGF (K_{L}||C_{L}*MGF (K_{H}||C_{H})) from the non-volatile flip flop 7201 and the updated mask value Mi is input into the MGF pre-complication processing unit 7305. The output from the MGF pre-complication processing unit 7305 is input into the MGF operating unit 7306. The XOR gate 7307 performs an XOR calculation on the 128-bit output value obtained from inputting the K_{L}||C_{L}*MGF (K_{H}||C_{H}) into the mask processing unit 7301 and the 128-bit output value from the MGF operating unit 7306. The higher 64 bits of the 128-bit output from the XOR gate 7307 is stored as the new value in the 64-bit register 7005.

The calculation processing of F⁻¹ (K, C) is completed by the previous processing.

Once the update of the values stored in the 64-bit register 7001 and the 64-bit register 7005 by the calculation processing of the inverse agitation function F⁻¹ (K, C) is over, the key agitation function F (K, C) is calculated again. Also, the values stored in the non-volatile flip flop 7201 and the non-volatile flip flop 7202 are updated. Also, the updating of the values stored in the 64-bit register 7001 and the 64-bit register 7005 by the calculation processing of F⁻¹ (K, C) are repeated while power to the authentication chip is on.

Switchers 7007 and 7008 perform the switch processing of the agitation value from the internal registers and external input.

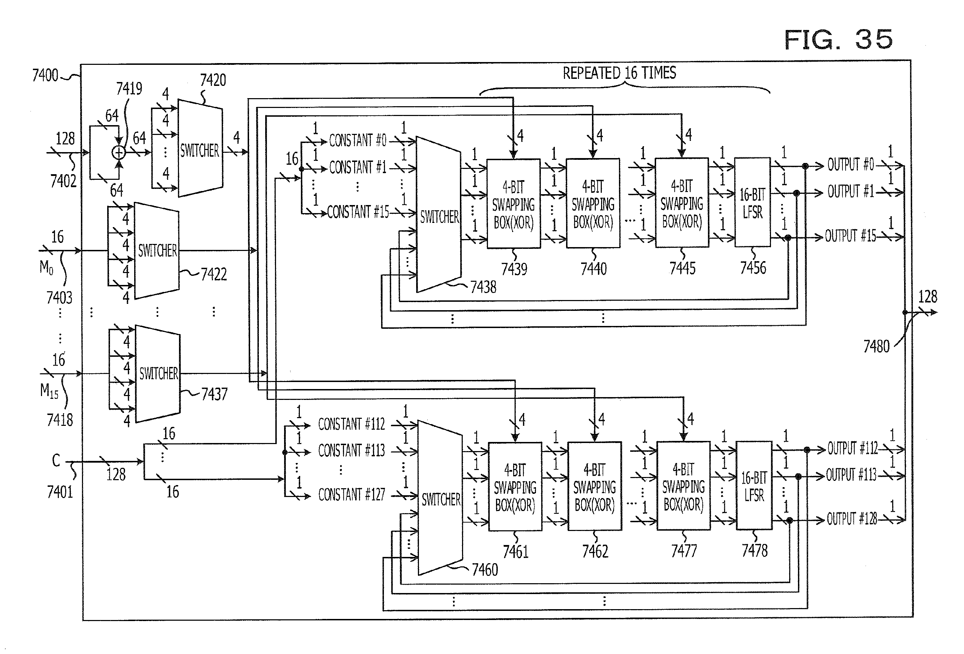

FIG. 35 is a diagram illustrating a configuration example of a MGF pre-complication processing unit 7400 according to the first Embodiment. The configuration illustrated in FIG. 35 applies the MGF pre-complication processing units 7101, 7104, 7302, and 7305 as in FIG. 34.

The masked 128-bit data X*M and the 16 values of the 16-bit mask value Mi are input into a terminal 7402 in the MGF pre-complication processing unit 7400. The 128-bit constant C is input into a terminal 7401, for example. The terminal 7401 is an auxiliary input terminal.

At the MGF pre-complication processing unit 7400, the MGF pre-complication processing is executed from these inputs to generate the 128-bit output. This output is output from an output terminal 7408.

The 128-bit data X input into the input terminal 7402 is divided into an XH of the higher 64 bits and an XL of the lower 64 bits, and an XOR calculation of these values is executed by an XOR gate 7419. The obtained 64-bit value is further divided into 16 4-bit values, and input into a switcher 7420. The output of the switcher 7420 is input into a 4-bit swapping box 7439 and a 4-bit swapping box 7461. The 4-bit swapping box 7439 corresponds to a bit transposing processing unit configured of 16 4-bit swapping boxes 7439 through 4-bit swapping boxes 7455 connected in series and a 16-bit linear feedback shift register (LFSR) 7456. The bit transposing processing is performed at each of the 4-bit swapping boxes 7439 through 4-bit swapping boxes 7455. The switcher 7420 assigns the appropriate selector signal for selecting the swapping box, and enables the bit transposing processing repeated 16 times to be executed successfully.

The 16 16-bit mask values Mi are individually input into terminal 7403 through terminal 7418, divided into 4-bit values, and input into the 16 switcher 7422 through switcher 7437. These switchers output the selector signal for selecting the swapping box so that the bit transposing processing repeated 16 times is executed successfully using the 4-bit swapping box 7439 through the 4-bit swapping box 7455 connected in series and the 16-bit linear feedback shift register (LFSR) 7456.

Processing to repeat the bit transposing processing 16 times is executed at the 4-bit swapping box 7439 through the 4-bit swapping box 7455.

The 128-bit constant C input into the terminal 7401 is divided into 8 16-bit values, and input into eight switchers including a switcher 7438 and switcher 7460. That is to say, the constant C may be written as C = C0||C1||...||C7. These 8 16-bit values C0, C1, ..., C7 are input as 8-serial execution bit transposing processing initial values.

The bit transposing with the output from the switcher 7420 as the selector signal is performed at the 8 4-bit swapping boxes connected to the switcher 7420 (for example, 4-bit swapping boxes 7439, 7461). The selector signal from the switcher 7420 is affected by the mask value, and so the output of the 8 4-bit swapping boxes connected to the switcher 7420 is also affected by the mask value M. The 8-serial 16-stage 4-bit swapping boxes including the 4-bit swapping box 7439 through the 4-bit swapping box 7455 and the 4-bit swapping box 7461 through the swapping box 7476 designate the signal generated from the 16 16-bit mask values Mi to be a selector signal, and so the effect of the mask value M may be removed.

The processing by the bit transposing processing unit including the 8-serial 16-stage 4-bit swapping boxes and the 16-bit linear feedback shift register (LFSR) is repeated 16 times. Also, the output value of the combining each of the 8-serial 16 bits is affected by the 128-bit data X input from the terminal 7403, and the value that is not affected by the mask value M may be obtained.

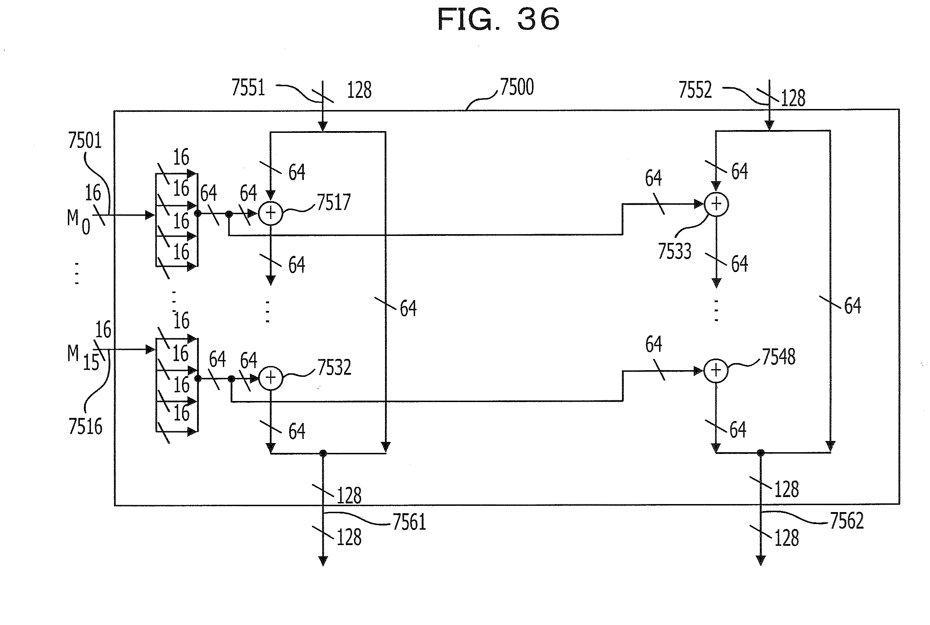

FIG. 36 is a diagram illustrating an example configuration of a mask processing unit and an unmask processing unit according to the first Embodiment.

According to the present example, the mask processing unit and the unmask processing unit share the same configuration.

The mask processing unit and the unmask processing unit use 16 16-bits mask values M₀, M₁, ..., M₁₅ input into an input terminal 7501 through 7516, an input terminal 7551, and an input terminal 7552, and two 128-bit input values x and y to generate two 128-bit output values X and Y output from an output terminal 7561 and an output terminal 7562.

The 64-bit value expressed by Mi||Mi||Mi||Mi is converted by the bit combination of the 16 16-bit mask values M₀, M₁, ..., M₁₅. Also, an XOR calculation is executed in the order of M0, M1..., M15 on the higher 64 bits of the two 128-bit input values x and y. The result of this XOR calculation and the lower 64 bits of the 128-bit input values x and y are combined to obtain the 128-bit output values X and Y.

<Second Embodiment>

The second Embodiment is an embodiment of the following combination.

(i) Classes of Countermeasures for Probe Attacks on Non-Volatile Circuits: uses the configuration in FIG. 15

(ii) Classes of Countermeasures for Probe Attacks on Volatile Circuits: uses the swapping box in FIG. 31

(iii) Classes of Mask Calculations of Secret Keys: XOR calculation

The point that is different between the second Embodiment and the first Embodiment is that the configuration of the swapping boxes is not the configuration in FIG. 30, but the configuration in FIG. 31. As a result, the processing configuration of the MGF pre-complication illustrated in FIG. 35 changes.

Similar to the first Embodiment, the overall configuration of the second Embodiment is illustrated in FIG. 34, and the configuration of the mask processing unit and the unmask processing unit is illustrated in FIG. 36.

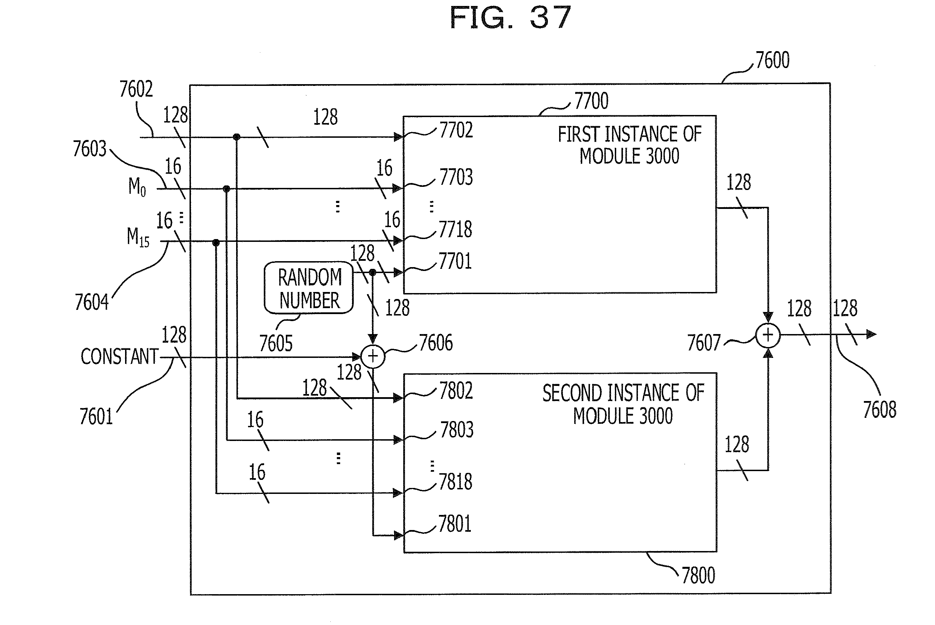

FIG. 37 is a diagram illustrating an example configuration of the MGF pre-complication processing unit according to the second Embodiment.

Regarding an MGF pre-complication processing overview 7600 illustrated in FIG. 37, the masked 128-bit data is input from an input terminal 7602, and the 16 16-bit mask values M0, M1, ..., M15 are input from 16 terminals including an input terminal 7603 and input terminal 7604. An input terminal 7601 is an auxiliary input terminal.

A random number generator 7605 generates 128-bit random numbers.

A 128-bit constant is input into the input terminal 7601. A 128-bit output value is generated from the 16 terminals including the input terminal 7602, the input terminal 7603, and the input terminal 7604, the input to the input terminal 7601, and the random number, and the output value is output from the output terminal 7608.

The MGF pre-complication processing overview 7600 includes two modules, a module 7700 and a module 7800. The module 7700 includes an input terminal 7701 through an input terminal 7718, and the module 7800 includes an input terminal 7801 through an input terminal 7818. The output of the random number generator 7605 is input into the input terminal 7701 in the module 7700 and the input terminal 7801 in the module 7800. The masked 128-bit data input into the input terminal 7602 is input into the input terminal 7702 in the module 7700 and the input terminal 7802 in the module 7800. The 16 16-bit mask values M₀, M₁, ..., M₁₅ are input into the 16 input terminals 7703 through input terminals 7718 in the module 7700 and the 16 input terminals 7803 through input terminals 7818 in the module 7800.

Also, an XOR calculation is performed on the random number generated by the random number generator 7605 and the masked 128-bit data input into the input terminal 7602 by an XOR gate 7606. The 128-bit output value from the XOR gate 7606 is input into the input terminal 7801 in the module 7800.

The output from the module 7700 and the output from the module 7800 are input into an XOR gate 7607. Also, an XOR calculation is performed on the output from the module 7700 and the output from the module 7800 by the XOR gate 7607. The output from the XOR gate 7607 is output from the output terminal 7608.

FIG. 37 is logically equivalent to FIG. 35, but the input values into the swapping boxes internal to the module 7700 and the module 7800 are randomized due to the result of the random number generated by the random number generator 7605, which may increase resistance to probe attacks.

<Third Embodiment>

The third Embodiment is an embodiment of the following combination.

(i) Classes of Countermeasures for Probe Attacks on Non-Volatile Circuits: uses the configuration in FIG. 15

(ii) Classes of Countermeasures for Probe Attacks on Volatile Circuits: uses the swapping box in FIG. 30

(iii) Classes of Mask Calculations of Secret Keys: Addition

The difference with the first Embodiment is the replacement of the XOR calculation of the mask calculation of the secret key to addition. As a result, the overall configuration illustrated in FIG. 34, the MGF pre-complication processing configuration illustrated in FIG. 35, and the configuration of the mask processing unit and unmask processing unit illustrated in FIG. 36 change. The basic structure is the same, but a portion of the calculation replaces the XOR calculation with addition or subtraction.

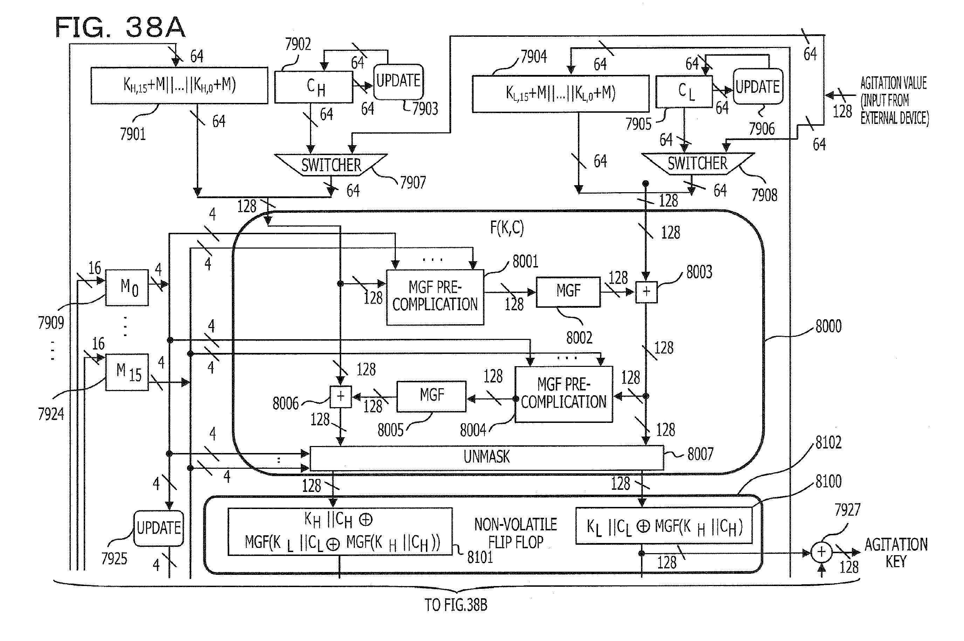

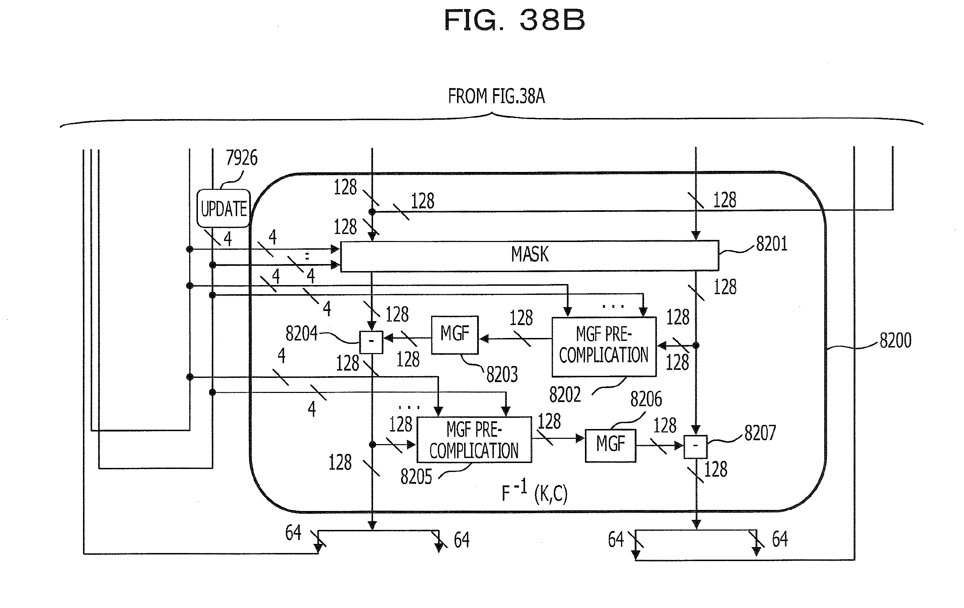

FIG. 38A and FIG. 38B are diagrams illustrating examples of an overall configuration of the third Embodiment.

The embodiment illustrated in FIG. 38A and FIG. 38B are basically the same as the embodiment illustrated in FIG. 34A and FIG. 34B. However, the mask processing of the secret key is changed from a form using an XOR calculation to a form using addition. For this reason, a portion of the XOR calculation is replaced with addition and subtraction. Also, as the mask value M for the secret key are handled in units of 4 bits, the mask values Mi divided 16 times (i is an integer from 0 to 15) are also 4 bits.

Regarding FIG. 38A and FIG. 38B, the 128-bit secret key K is divided into K_{H}, which is the higher 64 bits, and K_{L}, which is the lower 64 bits. The K_{H}, which is the higher 64 bits, and K_{L}, which is the lower 64 bits, are each divided every four bits into 16 values K_{H, 0}, K_{H, 1}, ..., K_{H, 15} and K_{L, 0}, K_{L, 1}, ..., K_{L, 15}.

The 4-bit mask values M are added to produce the masked data (K_{H, 15}*M) || (K_{H, 14}*M) || ... || (K_{H, 0}*M), (K_{L, 15}*M) || (K_{L, 14}*M) || ... || (K_{L, 0}*M) ||, which are stored in 64-bit registers 7901 and 7904, respectively.

The 128-bit agitation value C is divided into the higher 64 bits C_{H} and the lower 64 bits C_{L}, and are stored in a 64-bit register 7902 and a 64-bit register 7905, respectively.

The mask value M is not directly stored in a register, but an Mi satisfying M₀*M₁*...*M₁₅ = M are each stored in 16-bit registers 7909 through 16-bit registers 7924. The 16-bit registers 7909 through 7924 may also function as updating units 7909 through 7924. The result of performing the processing to operate the key agitation function F (K, C) on these values is stored in two 128-bit registers, a non-volatile register 8101 and a non-volatile register 8102, and these two values are used as the 128-bit agitation key as the result of the XOR calculation with these two values as the input.

Before the value of the key agitation function F (K, C) is calculated, processing is performed at an MGF pre-complication processing unit 8001, an MGF pre-complication processing unit 8004, an MGF operating unit 8002, an MGF operating unit 8005, an addition gate 8003, and an addition gate 8006.

The (K_{H, 15}*M) ||...|| (K_{H, 0}*M) stored in the 64-bit register 7901, the bit combination value of C_{H}, which is the higher 64 bits of the 128-bit agitation value C stored in the 64-bit register 7902, and the Mi are input into the MGF pre-complication processing unit 8001, and the previously described MGF pre-complication processing is performed. This result is input into the MGF operating unit 8002.

At the MGF pre-complication processing unit 8001 and 8004, the processing result is processed so that it is not affected by the Mi value. At the addition gate 8003, the addition calculation is performed on the output from the MGF operating unit 8002, the (K_{L, 15}*M) ||...|| (K_{L, 0}*M) stored in the 64-bit register 7904, and the bit combination value of C_{L}, which is the lower 64 bits of the 128-bit agitation value C stored in the 64-bit register 7902. The output of the addition gate 8003 is input into an unmask processing unit 8007.

Also, the MGF pre-complication processing is performed by the MGF pre-complication processing unit 8004 on the output from the addition gate 8003, and the MGF is operated by the MGF operation unit 8005. The output from the MGF operation unit 8005 is added to the (K_{H, 15}*M) ||...|| (K_{H, 0}*M) stored in the 64-bit register 7901, and the bit combination value of C_{H}, which is the higher 64 bits of the 128-bit agitation value C stored in the 64-bit register 7902, by the addition gate 8006.

The output of the addition gate 8003 and the addition gate 8006 become the 128-bit input into the unmask processing unit 8007. The unmask processing is performed by the unmask processing unit 8007 on the input, and the effect on the value of the masked key is removed by performing a subtraction processing. This result, which are the values stored in a non-volatile flip flop 8101 and non-volatile flip flop 8102, are not affected by the mask value M. The calculation of the key agitation function F (K, C) is completed by the above.

After the calculation of the value of the key agitation function F (K, C), in order to execute the next key agitation processing, the update processing is performed on the agitation value C and the mask values K_{H}, ₀, K_{H,1}, ..., K_{H, 15}, K_{L, 0}, K_{L, 1}, ..., K_{L, 15}. The update of the C_{H}, which is the higher 64 bits of the agitation value C, is performed by an updating unit 7903, and the lower 64 bits C_{L} is updated by an updating unit 7906. Also, the updating of the mask values K_{H, 0}, K_{H, 1}, ..., K_{L, 15}, K_{H, 0}, K_{L, 1}, ..., K_{L, 15} is executed by an updating unit 7909 through an updating unit 7924.

After the agitation value C and the mask values K_{H}, ₀, K_{H, 1}, ..., K_{H, 15}, K_{L, 0}, K_{L, 1}, ..., K_{L, 15}, have been changed, (K_{H, 15}*M) ||...|| (K_{H}, ₀*M) and (K_{L, 15}*M) ||...|| (K_{L, 0}*M) are calculated. That is to say, in order to store in the register 7901 and the register 7904, the calculation of the inverse agitation function F⁻¹ (K, C), which is the inverse function of the agitation function F (K, C) is performed.

First, the masking of the values stored in the non-volatile flip flop 8101 and the non-volatile flip flop 8102 is performed by a masking processing unit 8201 using the updated mask value Mi. This processing is executed by operating the addition calculation of the updated mask value Mi sequentially to the value K_{H}||C_{H}*MGF (K_{L}||C_{L}*MGF (K_{H}||C_{H})), K_{L}||C_{L}*MGF (K_{H}||C_{H}) stored in the non-volatile flip 8101 and the non-volatile flip flop 8102.

In order to calculate the inverse agitation function F⁻¹ (K, C), processing is performed at an MGF operating unit 8203, an MGF operating unit 8206, an MGF pre-complication processing unit 8202, an MGF pre-complication processing unit 8205, a subtraction gate 8204, and a subtraction gate 8207.

The output K_{H}||C_{H}*MGF (K_{L}||C_{L}*MGF (K_{H}||C_{H})) from the non-volatile flip flop 8102 and the updated mask value Mi is input into the MGF pre-complication processing unit 8202. The output of the MGF pre-complication processing unit 8202 is input into the MGF operating unit 8203.

The output K_{H}||C_{H}*MGF (K_{L}||C_{L}*MGF (K_{H}||C_{H})) from the non-volatile flip flop 8101 and the output from the MGF operating unit 8203 is input into the subtraction gate 8204, where the subtraction processing is executed. The higher 64 bits of the 128-bit output from the subtraction gate 8204 is stored as the new value in the 64-bit register 7901.

The output K_{H}||C_{H}*MGF (K_{L}||C_{L}*MGF (K_{H}||C_{H})) from the non-volatile flip flop 8101 and the updated mask value Mi is input into the MGF pre-complication processing unit 8205. The output of the MGF pre-complication processing unit 8205 is input into the MGF operating unit 8206. Regarding the output of the MGF operating unit 8206, the subtraction processing is performed by the subtraction gate 8207 on the 128-bit output value obtained by inputting the K_{L}||C_{L}*MGF (K_{H}||C_{H}) into the masking processing unit 8201 and the 128-bit output value from the MGF operating unit 8206. The higher 64 bits of the 128-bit output from the subtraction gate 8207 are stored as the new value into the 64-bit register 7905.

The subtraction processing of the inverse agitation function F⁻¹ (K, C) is complete by the processing above.

After the values stored in the 64-bit register 7901 and the 64-bit register 7905 are updated by the subtraction processing of the inverse agitation function F⁻¹ (K, C), the key agitation function F (K, C) is calculated again. The values stored in the non-volatile flip flop 8101 and the non-volatile flip flop 8102 are updated. Also, the updating of the values stored in the 64-bit register 7901 and the 64-bit register 7904 by the subtraction processing of F⁻¹ (K, C) is repeated while the power to the authentication chip is on.

A switcher 7907 and a switcher 7908 performs processing to switch the agitation value from an internal register to an external input.

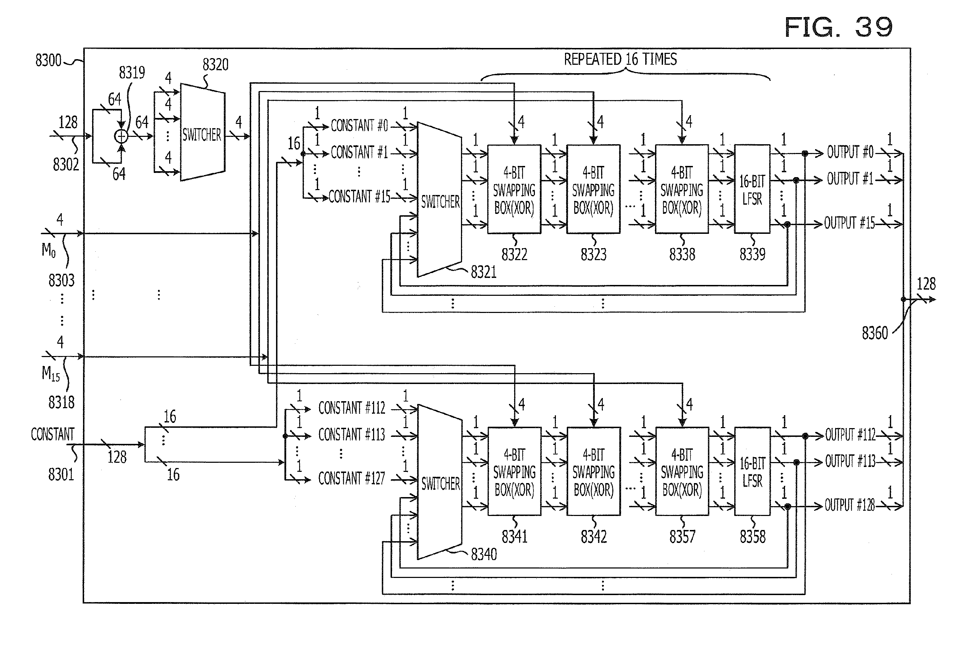

FIG. 39 is a diagram illustrating an example configuration of the MGF pre-complication processing unit according to the third Embodiment.

The masked 128-bit data X*M and the 16 16-bit mask values Mi are input into a terminal 8302 in an MGF pre-complication processing unit 8300. The 128-bit constant C is input into a terminal 8301, for example. The terminal 8301 is an auxiliary input terminal.

The MGF pre-complication processing unit 8300 executes the MGF pre-complication processing from these inputs, and generates the 128-bit output. The output may be output from an output terminal 8360.

The 128-bit data X input into the input terminal 8302 is divided into the higher 64 bits XH and the lower 64 bits XL, and an addition processing is executed on these values by an addition gate 8319. The obtained 64-bit value is further divided into 16 4-bit values and input into a switcher 8320. The output of the switcher 8320 is input into a 4-bit swapping box 8322 and a 4-bit swapping box 8341. The 4-bit swapping box 8322 is the end of a bit transposing processing unit configured from 16 4-bit swapping boxes 8322 through a 4-bit swapping box 8338 connected in series and a 16-bit linear feedback shift register (LFSR) 8339. The bit transposing processing is executed 16 times at the 4-bit swapping box 8322 through the 4-bit swapping box 8338.

The bit transposing processing is performed at each 4-bit swapping box 8322 through the 4-bit swapping box 8338. Each 4-bit swapping box 8322 through the 4-bit swapping box 8338 is a swapping box related to the addition mask of the secret key K. Each 4-bit swapping box 8322 through the 4-bit swapping box 8338 are implemented as 16-bit cyclic shift circuits that perform shifts of only the value of the 4-bit selector signal. The switcher 8320 assigns the appropriate selector signal for selecting the swapping box so that the bit transposing processing repeated 16 times is executed successfully.

Each of the 16 16-bit mask values Mi input into the terminal 8303 through the terminal 8318 are also divided into 4-bit values and input into the 16 4-bit swapping boxes 8322 through the 4-bit swapping box 8338.

A switcher 8321 outputs the selector signal for selecting the swapping box so that the bit transposing processing repeated 16 times using the 4-bit swapping box 8322 through the 4-bit swapping box 8338 connected in series and the 16-bit linear feedback shift register (LFSR) 8339 is executed successfully when the bit transposing processing is repeated 16 times.

The 128-bit constant C input into the terminal 8301 is divided into 8 16-bit portions, and is input into 8 switchers including a switcher 8321 and a switcher 8340. That is to say, the constant C may be written as C = C₀||C₁||...||C₇. The 8 16-bit values C₀, C₁, ..., C₇ are input as 8-serial execution bit transposing processing initial values.

The bit transposing with the output from the switcher 8320 as the selector signal is performed at the 8 4-bit swapping boxes connected to the switcher 8320 (for example, 4-bit swapping boxes 8322, 8341). The selector signal from the switcher 8320 is affected by the mask value, and so the output of the 8 4-bit swapping boxes connected to the switcher 8320 is also affected by the mask value M. The 8-serial 16-stage 4-bit swapping boxes including the 4-bit swapping box 8322 through the 4-bit swapping box 8338 and the 4-bit swapping box 8341 through the swapping box 8357 designate the signal generated from the 16 16-bit mask values Mi to be a selector signal, and so the effect of the mask value M may be removed.

The processing by the bit transposing processing unit including the 8-serial 16-stage 4-bit swapping boxes and the 16-bit linear feedback shift register (LFSR) is repeated 16 times. Also, the output value of the combining each of the 8-serial 16 bits is affected by the 128-bit data X input from the terminal 8302, and the value that is not affected by the mask value M may be obtained.

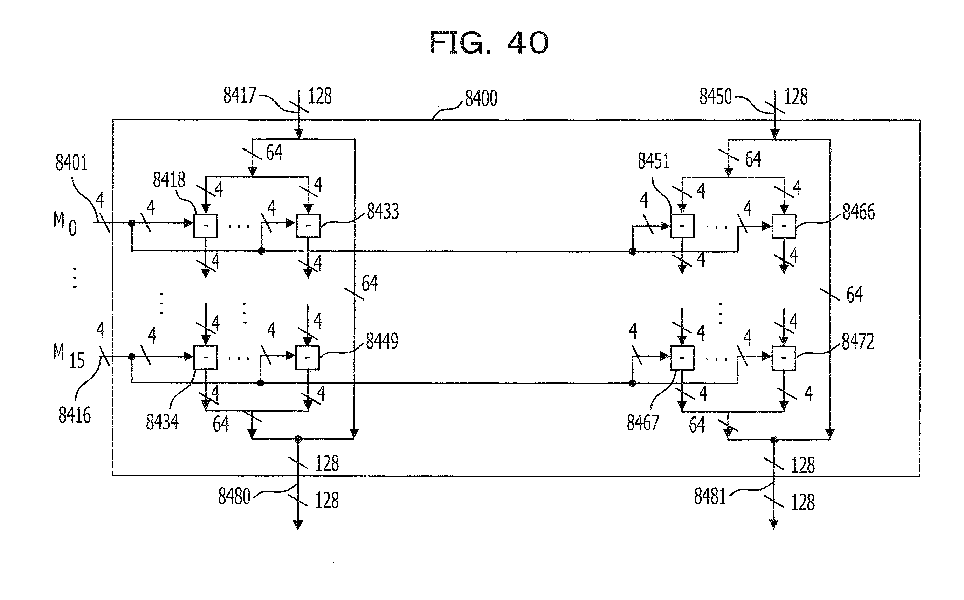

FIG. 40 is a diagram illustrating a configuration example of an unmask processing unit according to the third Embodiment.

An unmask processing unit 8400 receives the 16 4-bit mask values M₀, M₁, ..., M₁₅ input into an input terminal 8401 through an input terminal 8416 and 64-bit input values x and y to be input into an input terminal 8417 through an input terminal 8450. Further, the bit combination value x||y of x and y is also called the 128-bit input value. The unmask processing unit 8400 outputs the 128-bit output value X and the output value Y from an output terminal 8480 and an output terminal 8481.

At a subtractor 8418 through a subtractor 8449, a processing is performed to sequentially subtract the 4-bit mask values M₀, M₁, ..., M₁₅ from the 64-bit input values x and y to be input into the input terminal 8417, which are divided every 4 bits into 16 4-bit values x₀, ..., X₁₅, y₀, ..., y₁₅.

The 64-bit value generated from combining the bits of the result of subtracting the 4-bit mask values M₀, M₁, ..., M₁₅ from the 4-bit values x₀, ..., x₁₅, and the 64-bit input value x input into the input terminal 8417 are combined and output from the output terminal 8480.

The 64-bit value generated from combining the bits of the result of subtracting the 4-bit mask values M₀, M₁, ..., M₁₅ from the 4-bit values y₀, ..., y₁₅, and the 64-bit input value y input into the input terminal 8450 are combined and output from the output terminal 8481.

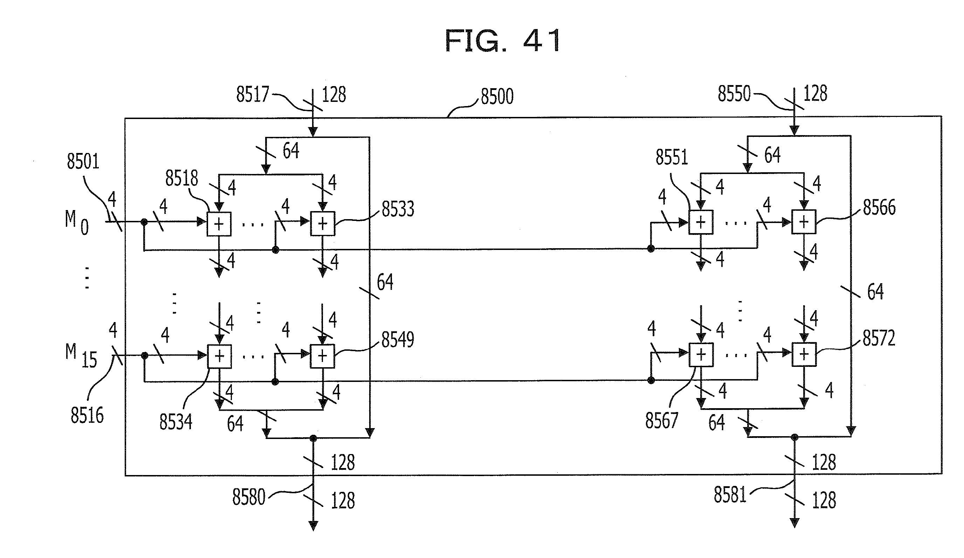

FIG. 41 is a diagram illustrating a configuration example of an unmask processing unit according to the third Embodiment.

An unmask processing unit 8500 receives the 16 4-bit mask values M₀, M₁, ..., M₁₅ input into an input terminal 8501 through an input terminal 8516 and 64-bit input values x and y to be input into an input terminal 8517 through an input terminal 8550. Further, the bit combination value x||y of x and y is also called the 128-bit input value. The unmask processing unit 8500 outputs the 128-bit output value X and the output value Y from an output terminal 8580 and an output terminal 8581.

At a subtractor 8518 through a subtractor 8549, a processing is performed to sequentially subtract the 4-bit mask values M₀, M₁, ..., M₁₅ from the 64-bit input values x and y to be input into the input terminal 8417, which are divided every 4 bits into 16 4-bit values x₀, ..., x₁₅, y₀, ..., y₁₅.

The 64-bit value generated from combining the bits of the result of subtracting the 4-bit mask values M₀, M₁, ..., M₁₅ from the 4-bit values x₀, ..., x₁₅, and the 64-bit input value x input into the input terminal 8517 are combined and output from the output terminal 8580.

The 64-bit value generated from combining the bits of the result of subtracting the 4-bit mask values M₀, M₁, ..., M₁₅ from the 4-bit values y₀, ..., y₁₅, and the 64-bit input value y input into the input terminal 8450 are combined and output from the output terminal 8581.

<Fourth Embodiment>

The fourth Embodiment is an embodiment of the following combination.

(i) Classes of Countermeasures for Probe Attacks on Non-Volatile Circuits: uses the configuration in FIG. 18

(ii) Classes of Countermeasures for Probe Attacks on Volatile Circuits: uses the swapping box in FIG. 30

(iii) Classes of Mask Calculations of Secret Keys: XOR calculation

The difference with the first Embodiment is that the configuration in FIG. 18 is used as the countermeasure for probe attacks on non-volatile circuits.

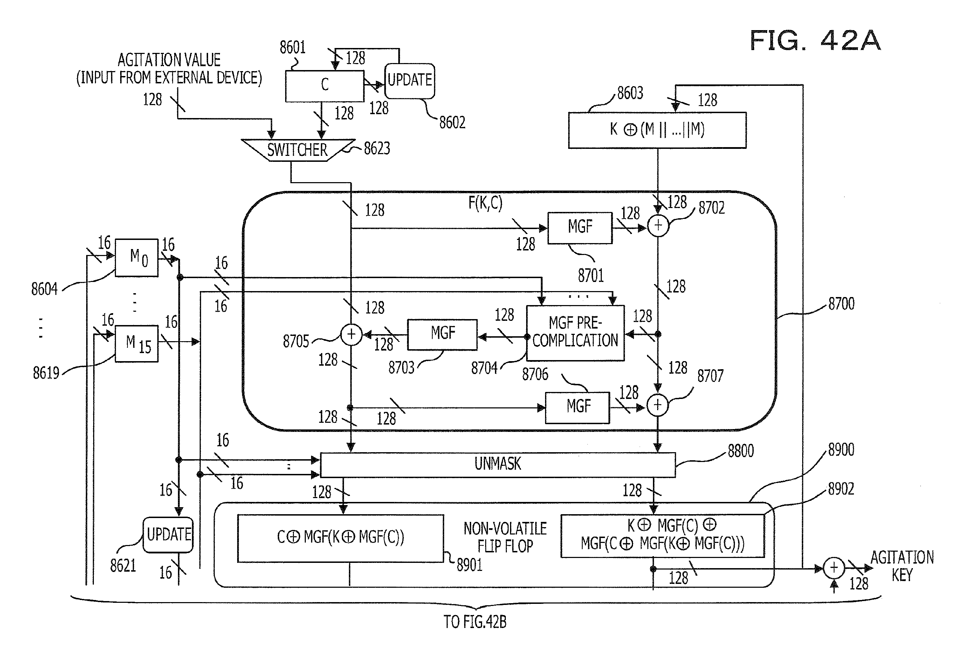

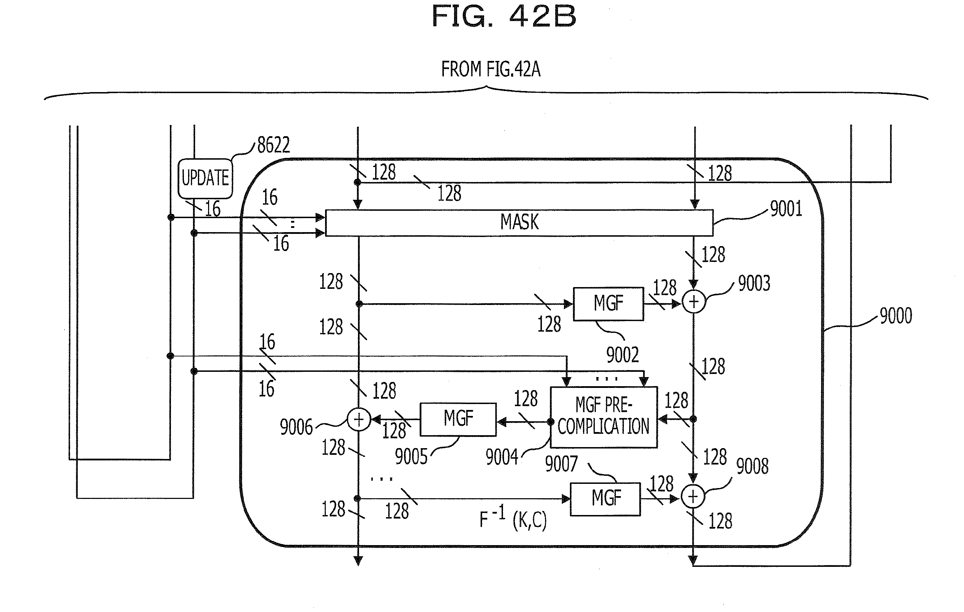

FIG. 42A and 42B are diagrams illustrating an example of the overall configuration of a fourth Embodiment.

In FIG. 42A, the agitation value C is stored in a 128-bit register 8601. The masked secret key is stored in a 128-bit register 8603.

If M is a 16-bit mask value, the masked secret key is expressed as K*(M||...||M), which is the bit combination of 8 16-bit mask values M as to the 128-bit secret key K. The mask value M is not directly stored in a register. However, Mi satisfying M₀*M₁*...*M₁₅ = M (i is an integer from 0 to 15) are each stored in a 16-bit register 8604 through 8619. The 16-bit register 8604 through the 16-bit register 8619 may also function as an updating unit 8604 through an updating unit 8619.

The result of performing the processing to operate the key agitation function F (K, C) on these values is stored in two 128-bit registers, a non-volatile register 8901 and a non-volatile register 8902.

Before the value of the key agitation function F (K, C) is calculated, processing is performed at an MGF pre-complication processing unit 8704, an MGF operating unit 8701, an MGF operating unit 8703, an MGF operating unit 8706, an XOR gate 8702, and XOR gate 8705, and an XOR gate 8707.

The agitation value C stored in the 128-bit register 8601 is input into the MGF operating unit 8701. The agitation value C is not affected by the mask, and so the MGF pre-complication processing is not valid. The addition processing is performed by the XOR gate 8702 on the output of the MGF operating unit 8701 and the output K*(M||...||M) from the 128-bit register 8603.

The output of the XOR gate 8702 is input into the MGF pre-complication processing unit 8704. The MGF pre-complication processing unit 8704 generates the 128-bit value that is not affected by the mask value Mi from the output of the XOR gate 8702.

This value is affected by the secret key K and the agitation value C, but is not affected by the mask value M.

The output of the MGF pre-complication processing unit 8704 is input into the MGF operating unit 8703, and the mask generating function MGF is operated. An XOR calculation is conducted in the XOR gate 8705 with the 128-bit output from the MGF operating unit 8703 and the agitation value C, and then input into an unmask processing unit 8800.

At the same time, the 128-bit output from the XOR gate 8705 is input into the MGF operating unit 8706, and an XOR calculation is performed in the XOR gate 8707 with the result and the output from the XOR gate 8702. The 128-bit output from the XOR gate 8707 is input into the unmask processing unit 8800.

The two 128-bit input values and the mask value Mi divided into 16 values is input into the unmask processing unit 8800, and using an XOR calculation, generates two values in which the effect of the mask values Mi have been removed from the two 128-bit input values.

These two values are stored in the non-volatile register 8901 and the non-volatile register 8902, respectively.

The values C*MGF (K*MGF (C)) and K*MGF (C) *MGF (C*MGF (K*MGF (C))) stored in the non-volatile register 8901 and the non-volatile register 8902 are affected by the secret key K and the agitation value C, but are not affected by the mask value M (or the 16-bit mask values Mi).

After the calculation of F (K, C) is complete by the above, the update processing for the agitation value C and the mask value M is executed. The updating of the agitation value C is performed at an updating unit 8602, and the updating of the mask value is performed at an updating unit 8621 and an updating unit 8622.

The result is an agitation value C stored in the 128-bit register 8601, and updated 16-bit mask values Mi stored in the 16 16-bit registers 8604 through 8619.

After the update processing for the agitation value C and the mask value M is complete, the calculation processing of the inverse agitation function F⁻¹ (K, C) is performed. First, the mask processing is performed at a mask processing unit 9001.

The mask processing unit 9001 performs the mask processing on the values C*MGF (K*MGF (C)) and K*MGF (C) *MGF (C*MGF (K*MGF (C))) stored in the non-volatile register 8901 and the non-volatile register 8902 using the 16 16-bit mask values Mi stored in the 16 16-bit registers 8604 through the 16-bit register 8619.

The value C*MGF (K*MGF (C)) stored in the non-volatile register 8901 is output as it is from the mask processing unit 9001.

Also, at the mask processing unit 9001, an XOR calculation is conducted on to mask the value K*MGF (C) *MGF (C*MGF (K*MGF (C))) stored in the non-volatile register 8902 with the 16 16-bit mask values Mi stored in the 16 16-bit registers 8604 through 8619.

The value C*MGF (K*MGF (C)) stored in the non-volatile register 8901, which is one output from the mask processing unit 9001, is input into an MGF operating unit 9002.

The input into the MGF operating unit 9002 is not affected by the mask value. The output from the MGF operating unit 9002 is input into an XOR gate 9003, where an XOR calculation is performed with the masked value of the K*MGF (C) *MGF (C*MGF (K*MGF (C))) stored in the non-volatile register 8902.

The output from the XOR gate 9003 is input into an MGF pre-complication processing unit 9004. The input into the MGF pre-complication processing unit 9004 is affected by the mask value, but the output is not affected by the mask value.

The output of the MGF pre-complication processing unit 9004 is input into an MGF operating unit 9005, the MGF is operated and output. The output from the MGF operating unit 9005 is not affected by the mask value.

An XOR calculation is performed at an XOR gate 9006 on the output from the MGF operating unit 9005 with the value C*MGF (K*MGF (C)) stored in the non-volatile register 8901, which is one output from the mask processing unit 9001. The XOR calculation result is input into an MGF operating unit 9007, and the MGF is operated. An XOR calculation is executed at an XOR gate 9008 on the output from the MGF operating unit 9007 with the output from the XOR gate 9003, and this result is stored in the 128-bit register 8603.

The calculation processing of the inverse agitation function F⁻¹ (K, C) is complete by the above processing.

After the updating of the values stored in the 128-bit register 8603 vy the calculation processing of the inverse agitation function F⁻¹ (K, C) is over, the key agitation function F (K, C) is calculated again. The values stored in the non-volatile register 8901 and the non-volatile register 8902 are updated. Also, the updating of the value stored in the 128-bit register 8603 by the calculation processing of the inverse agitation function F⁻¹ (K, C) is repeated while power to the authentication chip is on.

A switcher 8623 performs processing to switch the agitation value from the internal register to external input.

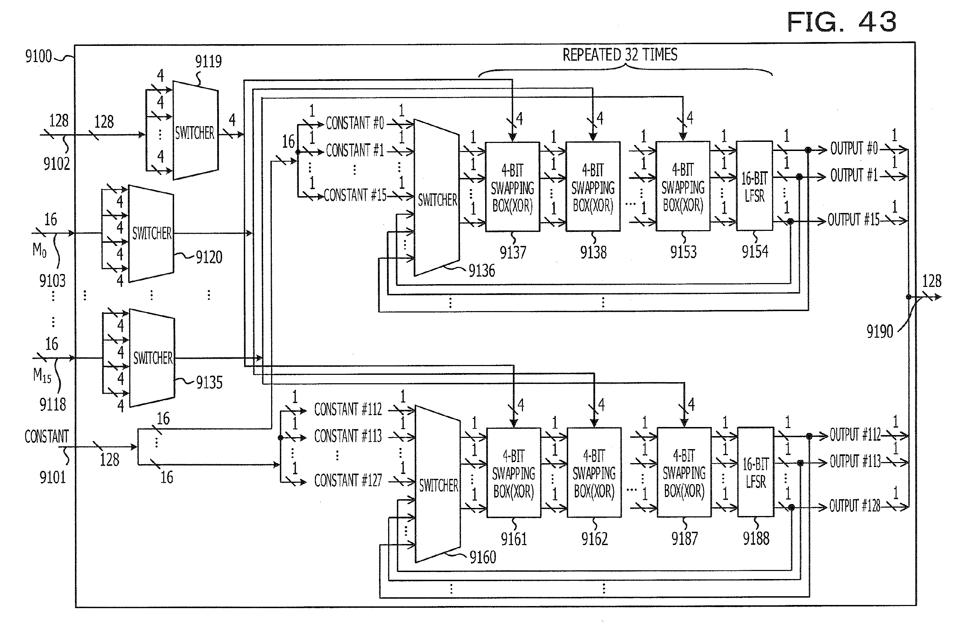

FIG. 43 is a diagram illustrating an example configuration of an MGF pre-complication processing unit according to the fourth Embodiment.

The masked 128-bit data X*M and the 16 16-bit mask values Mi are input into an MGF pre-complication processing unit 9100 and a terminal 9102 through a terminal 9118. The 128-bit constant C is input into a terminal 9101, for example. The terminal 9101 is an auxiliary input terminal.

The MGF pre-complication processing unit 9100 executes the MGF pre-complication processing on these inputs, and generates the 128-bit output. This output is output from an output terminal 9190.

The 128-bit data X input into the input terminal 9102 is divided into 32 4-bit values X0, ..., X31, and input into a switcher 9119. The output from the switcher 9119 is input into 16 4-bit swapping boxes including 4-bit swapping boxes 9137 through 9153.

The 4-bit swapping box 9137 corresponds to the end of a bit transposing processing unit configured from 16 4-bit swapping boxes 9137 through 9153 connected in series and a 16-bit linear feedback shift register (LFSR) 9154. The bit transposing processing is performed at the 16 4-bit swapping boxes 9137 through 9153, repeated for 32 times.

The bit transposing processing is performed at 8 x 16 4-bit swapping boxes including 4-bit swapping boxes 9161 through 9177. Each swapping box is a swapping box related to the mask of the secret key K, and so are implemented as 16-bit cyclic shift circuits that perform shifts of only the value of the 4-bit selector signal. The switcher 9119 assigns the appropriate selector signal for selecting the swapping box so that the bit transposing processing repeated 32 times is executed successfully.

The 16 16-bit mask values Mi input into the terminal 9103 through the terminal 9118 are divided every 4 bits and input into 16 switchers 9120 through a switcher 9135. The switcher 9120 through the switcher 9135 send the selector signal to the 8 x 16 4-bit swapping boxes so that the bit transposing processing that is repeated 32 times is processed successfully using the 8 x 16 4-bit swapping boxes including the 4-bit swapping boxes 9137 through 9153, and 9161 through 9177, and the 8 16-bit linear feedback shift registers (LFSR) including 16-bit linear feedback shift register (LFSR) 9154, and a 16-bit linear feedback shift register (LFSR) 9188.

The bit transposing processing is repeated 32 times using the 8 x 16 4-bit swapping boxes including the 4-bit swapping boxes 9137 through 9153, and 9161 through 9177, and the 8 16-bit linear feedback shift registers (LFSR) including 16-bit linear feedback shift register (LFSR) 9154, and the 16-bit linear feedback shift register (LFSR) 9188.

The 128-bit constant C input into the terminal 9101 is divided into 8 16-bit portions, and input into 8 switchers including a switcher 9136 and 9160. That is to say, the constant C may be written as C = C₀||C₁||...||C₇. These 8 16-bit values C₀, C₁, ..., and C₇ are input into the 8 switchers 9136 through 9160.

The bit transposing is performed at the 8 4-bit swapping boxes connected to each of the 8 switchers to which the 8 16-bit values C₀, C₁, ..., and C₇ are input, using the selector signal output from the switchers. The selector signal from the switcher 9136 is affected by the mask value, and so the output from the 8 4-bit swapping boxes including the 4-bit swapping box 9137 connected to the switcher 9136 is also affected by the mask value M.

The 8-serial 16-stage 4-bit swapping boxes including the 4-bit swapping boxes 9137 through 9153 and the 4-bit swapping boxes 9161 through 9187 use the signals generated from the 16 16-bit mask values Mi as selector signals, and so the effect of the mask value M may be removed.

The processing the by the bit transposing processing unit including these 8-serial 16-stage 4-bit swapping boxes and 16-bit linear feedback shift registers (LFSR) is repeated 32 times. The output values from combining the 8-serial 16 bits may be obtained as a value which is affected by the 128-bit data X input into the terminal 9190, and is not affected by the mask value M.

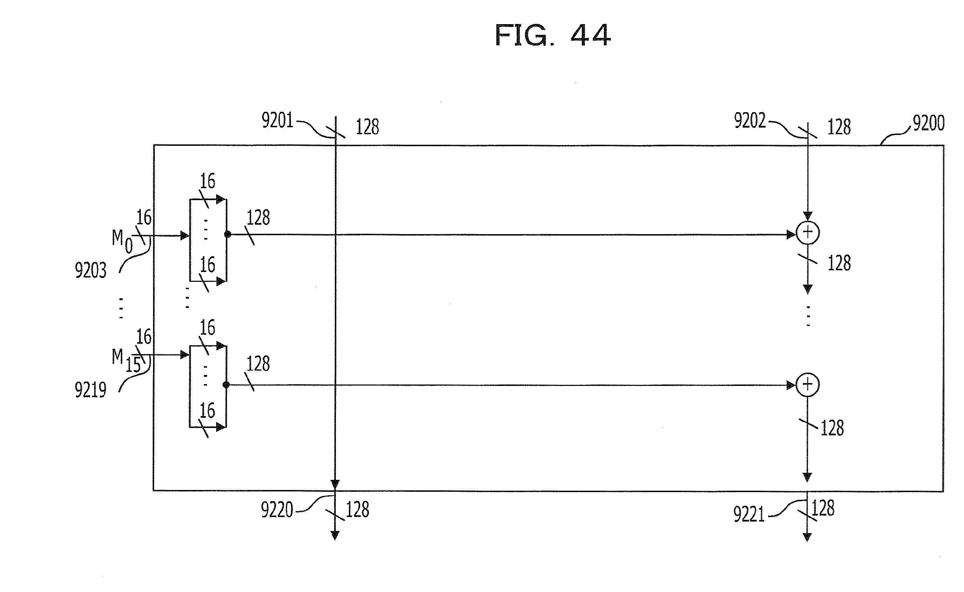

FIG. 44 is a diagram illustrating an example configuration of a mask processing unit and an unmask processing unit according to the fourth Embodiment.

According to the present example, the mask processing unit and the unmask processing unit share the same configuration.

The mask processing unit and unmask processing unit generates two 128-bit output values X and Y to be output from an output terminal 9220 and an output terminal 9221 using the 16 16-bit mask values M₀, M₁, ..., M₁₅ input into input terminals 9203 through 9219, 9201, and 9202, and the two 128-bit input values x and y.

The 16 16-bit mask values M₀, M₁, ..., M₁₅ are converted by bit combination into a 128-bit value expressed as Mi||Mi||Mi||Mi. Also, an XOR calculation is operated on the two 128-bit values x and y sequentially with M₀, M₁, ..., M₁₅.

The result of the XOR calculation with y is output from the output terminal 9221 as the 128-bit output Y. The result of the XOR calculation with the 128-bit value x input into the input terminal 9201 is output from the output terminal 9220 as the output X.

<Fifth Embodiment>

The fifth Embodiment is an embodiment of the following combination.

(i) Classes of Countermeasures for Probe Attacks on Non-Volatile Circuits: uses the configuration in FIG. 15

(ii) Classes of Countermeasures for Probe Attacks on Volatile Circuits: uses the swapping box in FIG. 30

(iii) Classes of Mask Calculations of Secret Keys: XOR calculation

That is to say, the basic combination is the same as that of the first Embodiment. The difference with the first Embodiment is that the values stored in the non-volatile registers are also masked. The values stored in the two non-volatile registers are masked by the same value. The mask value is cancelled by using an authentication protocol in which a value obtained by performing an XOR calculation on these two values is used as the agitation key. The agitation key is not affected by the mask value. As all values are constantly masked, the fifth Embodiment is able to further increase resistance to probe attacks.

However, in order to mask the values in the non-volatile registers, the storage place of the M₀, M₁.,..., M₁₅, which is the mask value M divided into 16 portions, has to be changed from a volatile register to a non-volatile register.

This is because if the power is turned off suddenly, the values in the non-volatile register are stored as they are affected by the mask value. The values in the non-volatile registers are still affected by the mask value after the power is turned off, but if storage place of the mask values M₀, M₁, ..., M₁₅ dispersed at this time is changed to volatile registers, the mask values will be erased after the power is turned off. That is to say, after the power is turned on again, the mask values will be deleted.

According to the present embodiment, when the non-volatile registers are affected by the mask value, if the correct values corresponding mask values are not stored, the correct key value may not be stored. Thus, according to the present embodiment, the dispersed mask values M₀, M₁, ..., M₁₅ are stored in non-volatile registers.

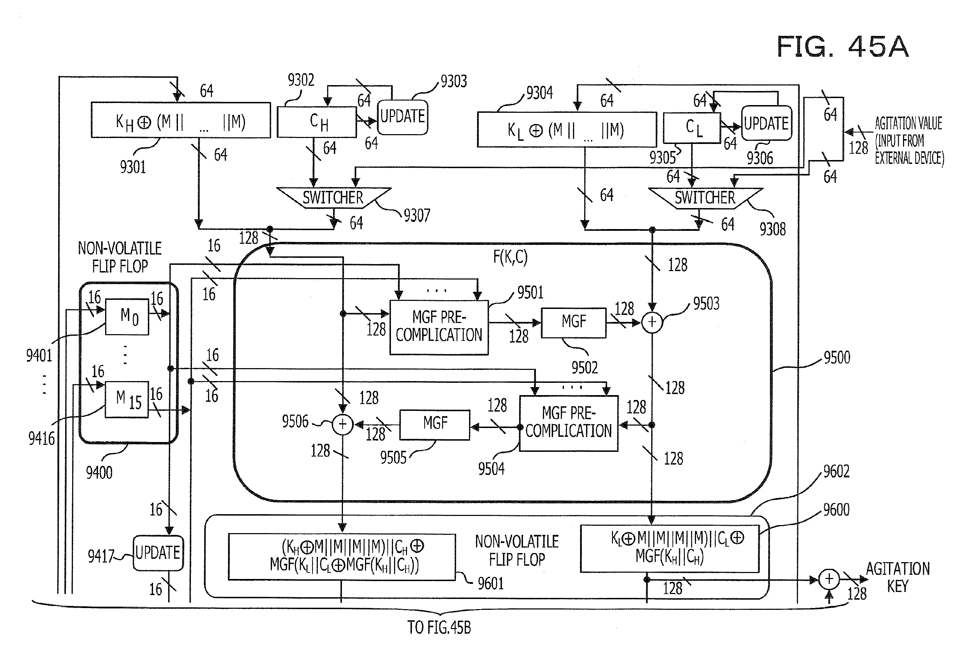

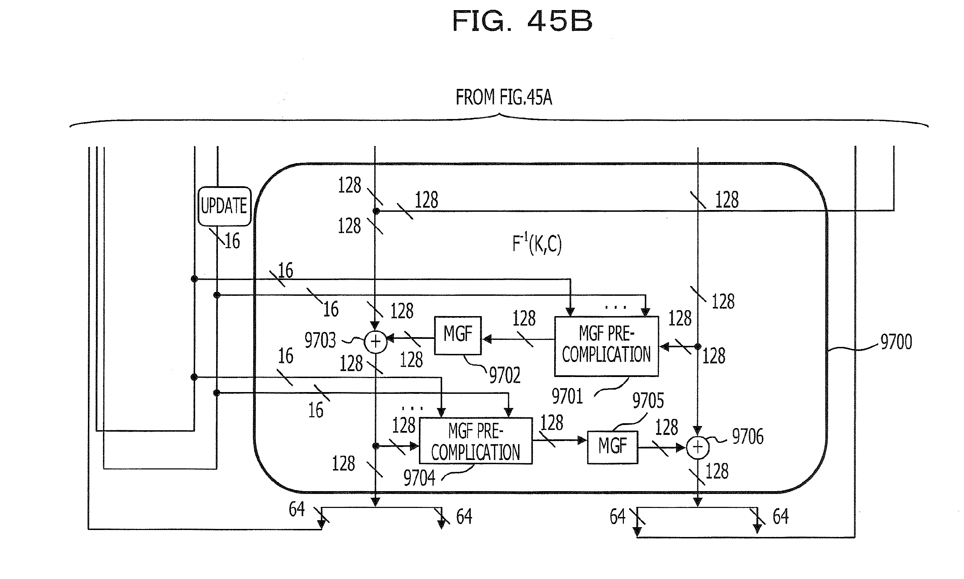

FIG. 45A and 45B are diagrams illustrating overall configuration examples of the fifth Embodiment.

In FIG. 45A, the 128-bit secret key K is divided into a K_{H}, which is the higher 64 bits, and a K_{L}, which is the lower 64 bits. The K_{H} and K_{L} are masked by the 16-bit mask values M to produce the data K_{H}* (M||M||M||M) and K_{L}* (M||M||M||M), which are stored in a 64-bit register 9301 and a 64-bit register 9304, respectively.

Also, the 128-bit agitation value C is divided into a C_{H}, which is the higher 64 bits, and a C_{L}, which is the lower 64 bits. The C_{H} and C_{L} are stored in a 64-bit register 9302 and a 64-bit register 9305, respectively.

The mask value M is not directly stored in a register, but the Mi satisfying M₀*M₁*...*M₁₅ = M (i is an integer from 0 to 15) are each stored in a 16-bit registers 9401 through 9416. According to the present embodiment, the 16-bit register 9401 through the 16-bit register 9416 are configured by non-volatile flip flops. The 16-bit register 9401 through the 16-bit register 9416 may also function as an updating unit 9401 through an updating unit 9416.

The result of performing the processing to operate the key agitation function F (K, C) on these values is stored in two 128-bit registers, a non-volatile register 9601 and a non-volatile register 9602, and these two values are used as the 128-bit agitation key as the result of the XOR calculation with these two values as the input.

In order to calculate the value of the key agitation function F (K, C), processing is performed at an MGF pre-complication processing unit 9501, an MGF pre-complication processing unit 9504, an MGF operating unit 9502, an MGF operating unit 9505, an XOR gate 9503, and an XOR gate 9506.

The K_{H}* (M||M||M||M), the C_{L}, which is the lower 64 bits of the 128-bit agitation value C, and the Mi are input into the MGF pre-complication processing unit 9501, where the previously described MGF pre-complication processing is performed. This result is input into the MGF operating unit 9502.

At the MGF pre-complication processing unit 9501 and the MGF pre-complication processing unit 9504, the processing is performed so that the processing result is not affected by the Mi values. However, the output of the XOR gate 9503 and the XOR gate 9506 are affected by the register 9302 and the register 9305, and so are affected by the mask value M. In order to remove this effect, the output of the XOR gate 9503 and the XOR gate 9506 are stored in the non-volatile flip flop 9601 and the non-volatile flip flop 9602 without the unmask processing performed, which is different from the first Embodiment.

The values stored in the non-volatile flip flop 9601 and the non-volatile flip flop 9602 are both values expressed as M||M||M||M||0 ... 0. That is to say, the key 64-bit value is affected by the XOR mask by the M||M||M||M, and the 64-bit agitation value C is not affected by the XOR mask.

The high 64-bit values of the non-volatile register 9601 and non-volatile register 9602 are both affected by the XOR mask of the same value M||M||M||M. Thus, by performing an XOR calculation on the values stored in the non-volatile flip flop 9601 and the non-volatile flip flop 9602 to generate the agitation key, these mask values balance each other out. The value of the agitation key is not affected by the mask value.

Once the calculation of the key agitation function F (K, C) is complete, in order to execute the next key agitation processing, the update processing of the agitation value C and the mask value Mi is performed. The higher 64 bits of the agitation value C, or C_{H}, is executed by an updating unit 9303, and the lower 64 bits of the agitation value C, or C_{L}, is executed by an updating unit 9306. Also, the updating of the mask value Mi is executed by updating units 9401 through an updating unit 9416.

When the agitation value C and the mask value Mi are updated, the masked data K_{H}* (M||M||M||M) and K_{L}* (M||M||M||M) stored in the register 9301 and the register 9304 are updated, and so the calculation of the inverse agitation function F⁻¹ (K, C), which is the inverse function of the agitation function F (K, C), is performed.

According to the present Embodiment, masking of the values stored in the non-volatile flip flop 9601 and the non-volatile flip flop 9602 is not performed.

In order to calculate the inverse agitation function F⁻¹ (K, C), processing is performed at an MGF pre-complication processing unit 9701, an MGF pre-complication processing unit 9704, an MGF operating unit 9702, an MGF operating unit 9705, an XOR gate 9703, and an XOR gate 9706.

The output K_{H}||C_{H}*MGF (K_{L}||CL*MGF (K_{H}||CH)) from the non-volatile flip flop 9702 and the mask value Mi updated by the 8 updating units including the updating unit 9417 and the updating unit 9418 are input into the MGF pre-complication processing unit 9701. The output from the MGF pre-complication processing unit 9701 is input into the MGF operating unit 9702. The MGF is operated on the input at the MGF operating unit 9702 and output.

The output (K_{H}* (M||M||M||M||)) ||C_{H}*MGF (K_{L}||C_{L}*MGF (K_{H}||C_{H})) from the non-volatile flip flop 9601 and the output from the MGF operating unit 9702 is input into the XOR gate 9703, and an XOR calculation is performed. The higher 64 bits of the 128-bit output from the XOR gate 9703 is stored as the new value in the 64-bit register 9301.

The output from the XOR gate 9703 and the mask value Mi updated by the 8 updating units including the updating unit 9417 and the updating unit 9418 are input into the MGF pre-complication processing unit 9704. The output from the MGF pre-complication processing unit 9704 is input into the MGF operating unit 9705. With regard to the output from the MGF operating unit 9705, at the XOR gate 9706, an XOR calculation is performed on (K_{L}* (M||M||M||M)) ||C_{L}*MGF (K_{H}||CH) and the 128-bit value from the MGF operating unit 9705. The higher 64 bits of the 128-bit output from the XOR gate 9706 is stored as the new value in the 64-bit register 9304.

The calculation processing of F⁻¹ (K, C) is completed by the previous processing.

Once the update of the values stored in the 64-bit register 9301 and the 64-bit register 9305 by the calculation processing of the inverse agitation function F⁻¹ (K, C) is over, the key agitation function F (K, C) is calculated again, and the values stored in the non-volatile flip flop 9601 and the non-volatile flip flop 9602 are updated. Also, the updating of the values stored in the 64-bit register 9301 and the 64-bit register 9304 by the calculation processing of F⁻¹ (K, C) are repeated while power to the authentication chip is on.

A switcher 9307 and a switcher 9308 perform the switch processing of the agitation value from the internal registers and external input.

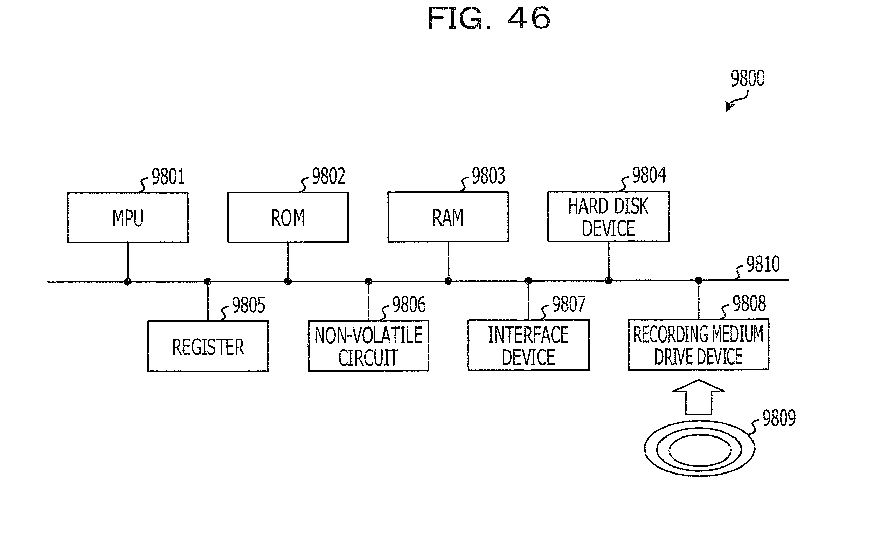

FIG. 46 is an example of a hardware configuration diagram capable of executing the devices of the embodiments.

Further, each functional block may be configured using a computer configured with standard hardware.

FIG. 46 will be described here. FIG. 46 is a configuration diagram of an example of computer usable as the encryption processing devices according to the previously described embodiment.

This computer 9800 is provisioned with an MPU 9801, a ROM 9802, a RAM 9803, a hard disk device 9804, a register 9805, a non-volatile circuit 9806, and an interface device 9807. Further, these configuration components are connected by a bus line 9810, and various data may be sent and received under the management of the MPU 9801.

The MPU (Micro Processing Unit) 9801 is a calculation processing device for controlling the overall operation of this computer 9800, and functions as the control processing unit of the computer 9800.

The ROM (Read Only Memory) 9802 is read only semiconductor memory to which a predetermined basic control program has been previously recorded. The MPU 9810 is able to control the operation of each configuration element in this computer 9800 by reading out and executing this basic program when the computer 9800 starts up.

The RAM (Random Access Memory) 9803 is semiconductor memory that may be written to and read from at any time, which is used as a work storage region as desirable by the MPU 9801 when executing various control programs.

The hard disk device 9804 is a recording device for recording various control programs and various data executed by the MPU 9801. The MPU 9801, the ROM 9802, the RAM 9803, the hard disk device 9804, the register 9805, and the non-volatile circuit 9806 configure the control unit.

The secret key K, the agitation value C, the mask value M, and so on are stored in the register 9805 and the non-volatile 9806. For example, the non-volatile circuit 9806 may store the secret key, and the register 9805 may store the agitation value.

By reading out the predetermined control programs stored in the hard disk device 9804 and executing these by the MPU 9801, the control unit may perform the various processing at the previously described processing units described with reference to FIGs. 10 through 45.

The interface device 9807 performs management of the sending and receiving of various information between the various devices connected to this computer 9800. For example, when the present computer 9800 is the main device, this performs management of communication with the secondary device. Also, when the present computer 9800 is the secondary device, this performs management of communication with the main device.

The interface device 9807 functions as the receiving unit for receiving the random number input as the challenge, and as the transmitting unit for transmitting the agitation value and the response.

A recording medium drive device 9808 performs readouts of various control programs and data stored in a portable recording medium 9809. The MPU 9801 may perform various control processing described later by reading out and executing the predetermined control programs stored in the portable recording medium 9809 via the recording medium drive device 9808. Further, examples of the portable recording medium 9809 include flash memory provisioned with connectors of the USB (Universal Serial Bus) specification, CD-ROM (Compact Disc Read Only Memory), DVD-ROM (Digital Versatile Disc Read Only Memory), and others.

The combination of the MPU 9801, the ROM 9802, the RAM 9803, the register 9805, and the non-volatile circuit 9806 function as the key agitation unit for generating the agitated secret key by operating the agitation function on the secret key and the agitation value, the response generating unit for generating a response by operating an encryption function on a random number using the agitated secret key, and the agitation value updating unit for updating the agitation value.

To configure the encryption processing device using this kind of computer 9800, a control program is created in which processes are written that enable the MPU 9801 to perform each function block of processing configuring the encryption processing device, for example. The created control program is previously stored in the hard disk device 9804 or the portable recording medium 9809. Also, predetermined instructions are assigned to the MPU 9801 to read out and execute this control program. By this designation, the functions provisioned with the encryption processing device are provided by the MPU 9801. Therefore, this computer 9800 may function as the encryption processing device.

### REFERENCE SIGNS LIST

- 101, 1001: Main device
- 102, 1002: Secondary device
- 103: Non-volatile memory
- 104: Sensor
- 105: Microprober
- 106 (106a, 106b, 106c), 106' (106a', 106b, 106c): Internal circuit
- 2000, 2300, 3400, 3800, 7100, 8000, 8700, 9500: Wrapping unit
- 2002: Memory
- 2004: Agitation function operation unit
- 2100, 2400, 3500, 3900, 7200, 8100, 8900, 9600: Key storage unit (non-volatile circuit)
- 2200, 2500, 3600, 4000, 7300, 8200, 9000, 9700: Unwrapping unit
- 4100, 4200, 4300, 4400: Input set
- 4102, 4202, 4302, 4402, 7400, 7600, 8300, 9100: MGF pre-complication processing unit
- 4104, 4204, 4304, 4404: MGF pre-complication processing result
- 4106, 4206, 4306: Mask generating function (MGF) operating unit
- 4500, 4502, 4504: Swapping box
- 4600, 4700, 4702, 4704, 4706, 4708,:
- 4710, 4712, 4802, 4804, 4806: 1-bit swapping box
- 4800: 2-bit swapping box
- 4900: Switcher
- 5002, 5004, 5006, 5200, 5402,:
- 5404, 5406, 5702, 5704, 5706,:
- 6102, 6104,6106, 6500: T-bit swapping box
- 5500, 5800, 6200: Linear shift feedback
- 6302, 6304, 6306, 6400: Addition swapping box
- 7500, 8400, 9200: Mask processing unit
- 7500, 8500, 9200: Unmask processing unit

## Claims

1. An encryption processing device comprising:
a receiving unit configured to receive a first random number;
a memory configured to store a first secret key and a first agitation value operated with the first secret key;
a key agitation unit configured to generate a second agitation key based on the first secret key and the first agitation value;
a generating unit configured to generate a first encryption information based on the second secret key and the first random number;
an agitation value updating unit configured to update the first agitation value stored in the memory; and
a transmitting unit configured to output the first agitation value and the first encryption information.

2. The encryption processing device according to claim 1, wherein the transmitting unit outputs the first agitation value and the first encryption information to a device authenticating the encryption processing device, the device transmits the first random number to the encryption processing device, receives the first agitation value and the first encryption information, generates a fourth secret key based on the first agitation value and a third secret key read out from the device memory, and executes authentication of the encryption processing device based on the fourth secret key, the first encryption information, and the first random number.

3. The encryption processing device according to claim 2, wherein the generating unit generates the first encryption information by operating an encryption function on the second secret key and the first random number, and
wherein the device generates a second random number by operating a decryption function, which is the inverse function of the encryption function, on the fourth secret key and the first encryption information, and authenticates the encryption processing device based on the comparison result of comparing the first random number and the second random number.

4. The encryption processing device according to claim 2, wherein the generating unit generates the first encryption information by operating an encryption function on the second secret key and the first random number, and
wherein the device generates a second random number by operating the encryption function on the fourth secret key and the first random number, and authenticates the encryption processing device based on the comparison result of comparing the second random number and the first encryption information.

5. The encryption processing device according to claim 2, further comprising:
a challenge generating unit configured to generate a third random number; and
an authenticating unit configured to authenticate devices based on a response from the device corresponding to the third random number,
wherein the transmitting unit transmits the third random number to the device, and
wherein the receiving unit receives the response from the device.

6. The encryption processing device according to claim 5, wherein the response includes a second encryption information related to the third random number, and a second agitation value used to generate the second encryption information,
wherein the key agitation unit generates a fifth secret key based on the first secret key and the second agitation value, and
wherein the authentication unit authenticates the device based on the fifth secret key, the second encryption information, and the third random number.

7. The encryption processing device according to claim 6, wherein the device generates the second encryption information by operating an encryption function on the second agitation value, a sixth secret key generated from the third secret key, and the third random number, and
wherein the authentication unit authenticates the device based on the comparison result of the third random number and a fourth random number generated by operating a decryption function, which is the inverse function of the encryption function, on the fifth secret key and the second encryption information.

8. The encryption processing device according to claim 6, wherein the device generates the second encryption information by operating an encryption function on the third random number and a sixth secret key from the second agitation value and the third secret key, and
wherein the authentication unit authenticates the device based on the comparison result of the second encryption information and a fourth random number generated by operating an encryption function on the fifth secret key and the third random number.

9. The encryption processing device according to claim 1, wherein the key agitation unit includes an agitation key storage unit configured from a non-volatile storage circuit, generates the second encryption information by operating an agitation function on the first secret key and the first agitation value, stores the second secret key into the agitation key storage unit, and updates the second secret key by operating an inverse agitation function, which is the inverse of the agitation function, on the second secret key.

10. The encryption processing device according to claim 1, wherein the key agitation unit includes an agitation key storage unit configured from a non-volatile storage circuit, stores the second secret key into the agitation key storage unit, and reads out all bits of the second secret key within one cycle.

11. The encryption processing device according to claim 1, wherein the key agitation unit includes an agitation key storage unit configured from a non-volatile storage circuit, and writes all bits of the second secret key to the agitation key storage unit within one cycle.

12. The encryption processing device according to claim 1, wherein the key agitation unit includes an agitation key storage unit configured from a non-volatile storage circuit, and performs at least one of writing processing to the non-volatile storage circuit and reading processing from the non-volatile storage circuit using a non-volatile flip-flop.

13. The encryption processing device according to claim 9, wherein the key agitation unit designates the first secret key and the first agitation value as input values, designates the second secret key as an output value, and also operates a mask generating function as the agitation function, and
wherein the mask generating function includes a nature in which when even one bit of the input values change, at least a plurality of bits of the output value also changes, a nature in which the input value is not obtainable from the output value, and a nature in which the bit length of the input value and the output value are adjustable as desired.

14. An encryption processing method executed by an encryption processing device, the encryption processing method comprising:
receiving a first random number;
storing a first secret key and a first agitation value operated with the first secret key in a memory;
generating a second secret key based on the first secret key and the first agitation value;
generating a first encryption information based on the second secret key and the first random number;
updating the first agitation value stored in the memory; and
outputting the first encryption information and the first agitation value.

15. A readable recording medium storing an encryption processing program including a process and for causing an encryption processing device execute the program, the process comprising:
receiving a first random number;
storing a first secret key and a first agitation value operated with the first secret key in a memory;
generating a second secret key based on the first secret key and the first agitation value;
generating a first encryption information based on the second secret key and the first random number;
updating the first agitation value stored in the memory; and outputting
the first agitation value and the first encryption information.
